# EUROPEAN PATENT APPLICATION

(11) **EP 4 723 534 A1**
(43) Date of publication of application: **08.04.2026**
(21) Application number: 25205724.5
(22) Date of filing: 30.09.2025
(51) Int. Cl.: H04L 5/00, H04L 5/14

(54) **POSITIONING CONFIGURATION UNDER SUBBAND FULL DUPLEX**

(30) Priority: 03.10.2024 US 202463703040 P
(71) Applicant: Ofinno, LLC, Reston, VA 20190 (US); Kazmi, Muhammad Ali, Reston, Virginia 20190 (US); Xu, Jian, Reston, Virginia 20190 (US); Dinan, Esmael Hejazi, Reston, Virginia 20190 (US); Khoshkholgh Dashtaki, Mohammad Ghadir, Reston, VA 20190 (US); Yi, Yunjung, Reston, VA 20190 (US); Zhou, Hua, Reston, Virginia 20190 (US); Cirik, Ali Cagatay, Reston, Virginia 20190 (US)
(72) Inventor: KAZMI, Muhammad Ali, Reston, Virginia 20190 (US); XU, Jian, Reston, Virginia 20190 (US); DINAN, Esmael Hejazi, Reston, Virginia 20190 (US); KHOSHKHOLGH DASHTAKI, Mohammad Ghadir, Reston, Virginia 20190 (US); YI, Yunjung, Reston, Virginia 20190 (US); ZHOU, Hua, Reston, Virginia 20190 (US); CIRIK, Ali Cagatay, Reston, Virginia 20190 (US)
(74) Representative: Westphal, Mussgnug & Partner, Patentanwälte mbB

(57) **Abstract**

A method comprises receiving, by a first node from a second node, an information request for a transmission reception point (TRP) hosted by the first node. The method comprises transmitting, by the first node to the second node, an information response indicating a configuration of a reference signal for positioning. The reference signal is in a subband full duplex (SBFD) resource supported by the TRP. The SBFD resource comprises at least one of an SBFD symbol, an uplink subband of the SBFD symbol, or a downlink subband of the SBFD symbol. The reference signal configuration is associated with a downlink reference signal or an uplink reference signal.

## Description

### CROSS-REFERENCE TO RELATED APPLICATIONS

This application claims the benefit of U.S. Provisional Application No. 63/703,040, filed October 3, 2024, which is hereby incorporated by reference in its entirety.

### BRIEF DESCRIPTION OF THE DRAWINGS

Examples of several of the various embodiments of the present disclosure are described herein with reference to the drawings.
FIG. 1A and FIG. 1B illustrate example mobile communication networks in which embodiments of the present disclosure may be implemented.
FIG. 2A and FIG. 2B respectively illustrate a New Radio (NR) user plane and control plane protocol stack.
FIG. 3 illustrates an example of services provided between protocol layers of the NR user plane protocol stack of FIG. 2A.
FIG. 4A illustrates an example downlink data flow through the NR user plane protocol stack of FIG. 2A.
FIG. 4B illustrates an example format of a MAC subheader in a MAC PDU.
FIG. 5A and FIG. 5B respectively illustrate a mapping between logical channels, transport channels, and physical channels for the downlink and uplink.
FIG. 6 is an example diagram showing RRC state transitions of a UE.
FIG. 7 illustrates an example configuration of an NR frame into which OFDM symbols are grouped.
FIG. 8 illustrates an example configuration of a slot in the time and frequency domain for an NR carrier.
FIG. 9 illustrates an example of bandwidth adaptation using three configured BWPs for an NR carrier.
FIG. 10A illustrates three carrier aggregation configurations with two component carriers.
FIG. 10B illustrates an example of how aggregated cells may be configured into one or more PUCCH groups.
FIG. 11A illustrates an example of an SS/PBCH block structure and location.
FIG. 11B illustrates an example of CSI-RSs that are mapped in the time and frequency domains.
FIG. 12A and FIG. 12B respectively illustrate examples of three downlink and uplink beam management procedures.
FIG. 13A, FIG. 13B, and FIG. 13C respectively illustrate a four-step contention-based random access procedure, a two-step contention-free random access procedure, and another two-step random access procedure.
FIG. 14A illustrates an example of CORESET configurations for a bandwidth part.
FIG. 14B illustrates an example of a CCE-to-REG mapping for DCI transmission on a CORESET and PDCCH processing.
FIG. 15 illustrates an example of a wireless device in communication with a base station.
FIG. 16A, FIG. 16B, FIG. 16C, and FIG. 16D illustrate example structures for uplink and downlink transmission.
FIG. 17 illustrates an aspect of an example embodiment according to the present disclosure.
FIG. 18 illustrates an aspect of an example embodiment according to the present disclosure.
FIG. 19 illustrates an aspect of an example embodiment according to the present disclosure.
FIG. 20 illustrates an aspect of an example embodiment according to the present disclosure.
FIG. 21 illustrates an aspect of an example embodiment according to the present disclosure.
FIG. 22 illustrates an aspect of an example embodiment according to the present disclosure.
FIG. 23 illustrates an aspect of an example embodiment according to the present disclosure.
FIG. 24 illustrates an aspect of an example embodiment according to the present disclosure.
FIG. 25 illustrates an aspect of an example embodiment according to the present disclosure.
FIG. 26 illustrates an aspect of an example embodiment according to the present disclosure.
FIG. 27 illustrates an aspect of an example embodiment according to the present disclosure.
FIG. 28 illustrates an aspect of an example embodiment according to the present disclosure.
FIG. 29 illustrates an aspect of an example embodiment according to the present disclosure.
FIG. 30 illustrates an aspect of an example embodiment according to the present disclosure.
FIG. 31 illustrates a flowchart of an example embodiment according to the present disclosure.
FIG. 32 illustrates a flowchart of an example embodiment according to the present disclosure.
FIG. 33 illustrates a flowchart of an example embodiment according to the present disclosure.
FIG. 34 illustrates a flowchart of an example embodiment according to the present disclosure.

### DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that affect or implement the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element) or a combination thereof, which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

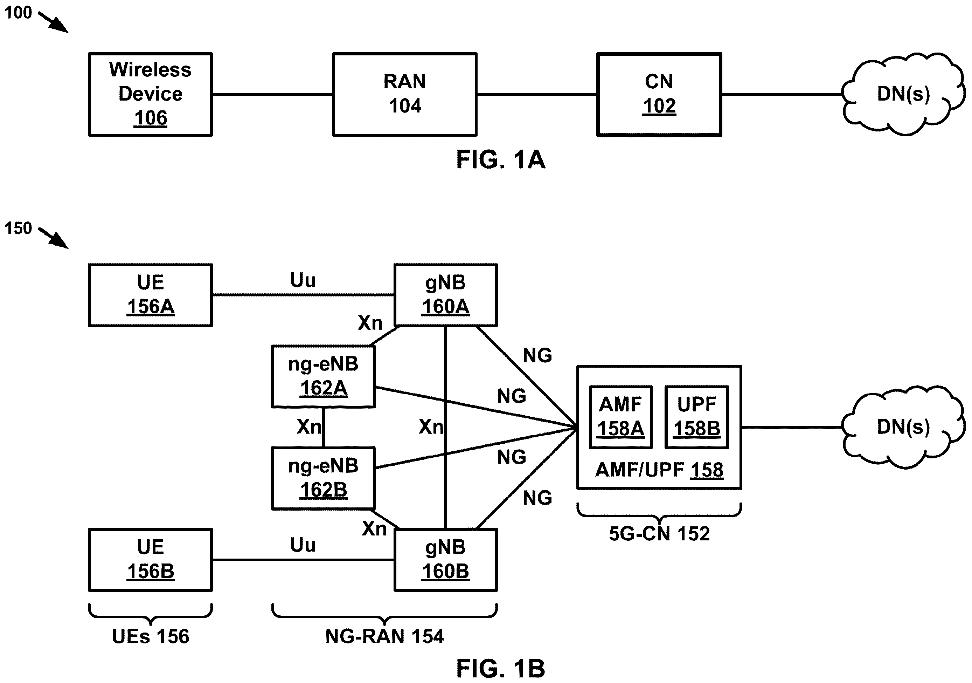

FIG. 1A illustrates an example of a mobile communication network 100 in which embodiments of the present disclosure may be implemented. The mobile communication network 100 may be, for example, a public land mobile network (PLMN) run by a network operator. As illustrated in FIG. 1A, the mobile communication network 100 includes a core network (CN) 102, a radio access network (RAN) 104, and a wireless device 106.

The CN 102 may provide the wireless device 106 with an interface to one or more data networks (DNs), such as public DNs (e.g., the Internet), private DNs, and/or intra-operator DNs. As part of the interface functionality, the CN 102 may set up end-to-end connections between the wireless device 106 and the one or more DNs, authenticate the wireless device 106, and provide charging functionality.

The RAN 104 may connect the CN 102 to the wireless device 106 through radio communications over an air interface. As part of the radio communications, the RAN 104 may provide scheduling, radio resource management, and retransmission protocols. The communication direction from the RAN 104 to the wireless device 106 over the air interface is known as the downlink and the communication direction from the wireless device 106 to the RAN 104 over the air interface is known as the uplink. Downlink transmissions may be separated from uplink transmissions using frequency division duplexing (FDD), time-division duplexing (TDD), and/or some combination of the two duplexing techniques.

The term wireless device may be used throughout this disclosure to refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle roadside unit (RSU), relay node, automobile, and/or any combination thereof. The term wireless device encompasses other terminology, including user equipment (UE), user terminal (UT), access terminal (AT), mobile station, handset, wireless transmit and receive unit (WTRU), and/or wireless communication device.

The RAN 104 may include one or more base stations (not shown). The term base station may be used throughout this disclosure to refer to and encompass a Node B (associated with UMTS and/or 3G standards), an Evolved Node B (eNB, associated with E-UTRA and/or 4G standards), a remote radio head (RRH), a baseband processing unit coupled to one or more RRHs, a repeater node or relay node used to extend the coverage area of a donor node, a Next Generation Evolved Node B (ng-eNB), a Generation Node B (gNB, associated with NR and/or 5G standards), an access point (AP, associated with, for example, Wi-Fi or any other suitable wireless communication standard), and/or any combination thereof. A base station may comprise at least one gNB Central Unit (gNB-CU) and at least one a gNB Distributed Unit (gNB-DU).

A base station included in the RAN 104 may include one or more sets of antennas for communicating with the wireless device 106 over the air interface. For example, one or more of the base stations may include three sets of antennas to respectively control three cells (or sectors). The size of a cell may be determined by a range at which a receiver (e.g., a base station receiver) can successfully receive the transmissions from a transmitter (e.g., a wireless device transmitter) operating in the cell. Together, the cells of the base stations may provide radio coverage to the wireless device 106 over a wide geographic area to support wireless device mobility.

In addition to three-sector sites, other implementations of base stations are possible. For example, one or more of the base stations in the RAN 104 may be implemented as a sectored site with more or less than three sectors. One or more of the base stations in the RAN 104 may be implemented as an access point, as a baseband processing unit coupled to several remote radio heads (RRHs), and/or as a repeater or relay node used to extend the coverage area of a donor node. A baseband processing unit coupled to RRHs may be part of a centralized or cloud RAN architecture, where the baseband processing unit may be either centralized in a pool of baseband processing units or virtualized. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The RAN 104 may be deployed as a homogenous network of macrocell base stations that have similar antenna patterns and similar high-level transmit powers. The RAN 104 may be deployed as a heterogeneous network. In heterogeneous networks, small cell base stations may be used to provide small coverage areas, for example, coverage areas that overlap with the comparatively larger coverage areas provided by macrocell base stations. The small coverage areas may be provided in areas with high data traffic (or so-called "hotspots") or in areas with weak macrocell coverage. Examples of small cell base stations include, in order of decreasing coverage area, microcell base stations, picocell base stations, and femtocell base stations or home base stations.

The Third-Generation Partnership Project (3GPP) was formed in 1998 to provide global standardization of specifications for mobile communication networks similar to the mobile communication network 100 in FIG. 1A. To date, 3GPP has produced specifications for three generations of mobile networks: a third generation (3G) network known as Universal Mobile Telecommunications System (UMTS), a fourth generation (4G) network known as Long-Term Evolution (LTE), and a fifth generation (5G) network known as 5G System (5GS). Embodiments of the present disclosure are described with reference to the RAN of a 3GPP 5G network, referred to as next-generation RAN (NG-RAN). Embodiments may be applicable to RANs of other mobile communication networks, such as the RAN 104 in FIG. 1A, the RANs of earlier 3G and 4G networks, and those of future networks yet to be specified (e.g., a 3GPP 6G network). NG-RAN implements 5G radio access technology known as New Radio (NR) and may be provisioned to implement 4G radio access technology or other radio access technologies, including non-3GPP radio access technologies.

FIG. 1B illustrates another example mobile communication network 150 in which embodiments of the present disclosure may be implemented. Mobile communication network 150 may be, for example, a PLMN run by a network operator. As illustrated in FIG. 1B, mobile communication network 150 includes a 5G core network (5G-CN) 152, an NG-RAN 154, and UEs 156A and 156B (collectively UEs 156). These components may be implemented and operate in the same or similar manner as corresponding components described with respect to FIG. 1A.

The 5G-CN 152 provides the UEs 156 with an interface to one or more DNs, such as public DNs (e.g., the Internet), private DNs, and/or intra-operator DNs. As part of the interface functionality, the 5G-CN 152 may set up end-to-end connections between the UEs 156 and the one or more DNs, authenticate the UEs 156, and provide charging functionality. Compared to the CN of a 3GPP 4G network, the basis of the 5G-CN 152 may be a service-based architecture. This means that the architecture of the nodes making up the 5G-CN 152 may be defined as network functions that offer services via interfaces to other network functions. The network functions of the 5G-CN 152 may be implemented in several ways, including as network elements on dedicated or shared hardware, as software instances running on dedicated or shared hardware, or as virtualized functions instantiated on a platform (e.g., a cloud-based platform).

As illustrated in FIG. 1B, the 5G-CN 152 includes an Access and Mobility Management Function (AMF) 158A and a User Plane Function (UPF) 158B, which are shown as one component AMF/UPF 158 in FIG. 1B for ease of illustration. The UPF 158B may serve as a gateway between the NG-RAN 154 and the one or more DNs. The UPF 158B may perform functions such as packet routing and forwarding, packet inspection and user plane policy rule enforcement, traffic usage reporting, uplink classification to support routing of traffic flows to the one or more DNs, quality of service (QoS) handling for the user plane (e.g., packet filtering, gating, uplink/downlink rate enforcement, and uplink traffic verification), downlink packet buffering, and downlink data notification triggering. The UPF 158B may serve as an anchor point for intra-linter-Radio Access Technology (RAT) mobility, an external protocol (or packet) data unit (PDU) session point of interconnect to the one or more DNs, and/or a branching point to support a multi-homed PDU session. The UEs 156 may be configured to receive services through a PDU session, which is a logical connection between a UE and a DN.

The AMF 158A may perform functions such as Non-Access Stratum (NAS) signaling termination, NAS signaling security, Access Stratum (AS) security control, inter-CN node signaling for mobility between 3GPP access networks, idle mode UE reachability (e.g., control and execution of paging retransmission), registration area management, intra-system and inter-system mobility support, access authentication, access authorization including checking of roaming rights, mobility management control (subscription and policies), network slicing support, and/or session management function (SMF) selection. NAS may refer to the functionality operating between a CN and a UE, and AS may refer to the functionality operating between the UE and a RAN.

The 5G-CN 152 may include one or more additional network functions that are not shown in FIG. 1B for the sake of clarity. For example, the 5G-CN 152 may include one or more of a Session Management Function (SMF), an NR Repository Function (NRF), a Policy Control Function (PCF), a Network Exposure Function (NEF), a Unified Data Management (UDM), an Application Function (AF), and/or an Authentication Server Function (AUSF).

The NG-RAN 154 may connect the 5G-CN 152 to the UEs 156 through radio communications over the air interface. The NG-RAN 154 may include one or more gNBs, illustrated as gNB 160A and gNB 160B (collectively gNBs 160) and/or one or more ng-eNBs, illustrated as ng-eNB 162A and ng-eNB 162B (collectively ng-eNBs 162). The gNBs 160 and ng-eNBs 162 may be more generically referred to as base stations. The gNBs 160 and ng-eNBs 162 may include one or more sets of antennas for communicating with the UEs 156 over an air interface. For example, one or more of the gNBs 160 and/or one or more of the ng-eNBs 162 may include three sets of antennas to respectively control three cells (or sectors). Together, the cells of the gNBs 160 and the ng-eNBs 162 may provide radio coverage to the UEs 156 over a wide geographic area to support UE mobility.

As shown in FIG. 1B, the gNBs 160 and/or the ng-eNBs 162 may be connected to the 5G-CN 152 by means of an NG interface and to other base stations by an Xn interface. The NG and Xn interfaces may be established using direct physical connections and/or indirect connections over an underlying transport network, such as an internet protocol (IP) transport network. The gNBs 160 and/or the ng-eNBs 162 may be connected to the UEs 156 by means of a Uu interface. For example, as illustrated in FIG. 1B, gNB 160A may be connected to the UE 156A by means of a Uu interface. The NG, Xn, and Uu interfaces are associated with a protocol stack. The protocol stacks associated with the interfaces may be used by the network elements in FIG. 1B to exchange data and signaling messages and may include two planes: a user plane and a control plane. The user plane may handle data of interest to a user. The control plane may handle signaling messages of interest to the network elements.

The gNBs 160 and/or the ng-eNBs 162 may be connected to one or more AMF/UPF functions of the 5G-CN 152, such as the AMF/UPF 158, by means of one or more NG interfaces. For example, the gNB 160A may be connected to the UPF 158B of the AMF/UPF 158 by means of an NG-User plane (NG-U) interface. The NG-U interface may provide delivery (e.g., non-guaranteed delivery) of user plane PDUs between the gNB 160A and the UPF 158B. The gNB 160A may be connected to the AMF 158A by means of an NG-Control plane (NG-C) interface. The NG-C interface may provide, for example, NG interface management, UE context management, UE mobility management, transport of NAS messages, paging, PDU session management, and configuration transfer and/or warning message transmission.

The gNBs 160 may provide NR user plane and control plane protocol terminations towards the UEs 156 over the Uu interface. For example, the gNB 160A may provide NR user plane and control plane protocol terminations toward the UE 156A over a Uu interface associated with a first protocol stack. The ng-eNBs 162 may provide Evolved UMTS Terrestrial Radio Access (E-UTRA) user plane and control plane protocol terminations towards the UEs 156 over a Uu interface, where E-UTRA refers to the 3GPP 4G radio-access technology. For example, the ng-eNB 162B may provide E-UTRA user plane and control plane protocol terminations towards the UE 156B over a Uu interface associated with a second protocol stack.

The 5G-CN 152 was described as being configured to handle NR and 4G radio accesses. It will be appreciated by one of ordinary skill in the art that it may be possible for NR to connect to a 4G core network in a mode known as "non-standalone operation." In non-standalone operation, a 4G core network is used to provide (or at least support) control-plane functionality (e.g., initial access, mobility, and paging). Although only one AMF/UPF 158 is shown in FIG. 1B, one gNB or ng-eNB may be connected to multiple AMF/UPF nodes to provide redundancy and/or to load share across the multiple AMF/UPF nodes.

As discussed, an interface (e.g., Uu, Xn, and NG interfaces) between the network elements in FIG. 1B may be associated with a protocol stack that the network elements use to exchange data and signaling messages. A protocol stack may include two planes: a user plane and a control plane. The user plane may handle data of interest to a user, and the control plane may handle signaling messages of interest to the network elements.

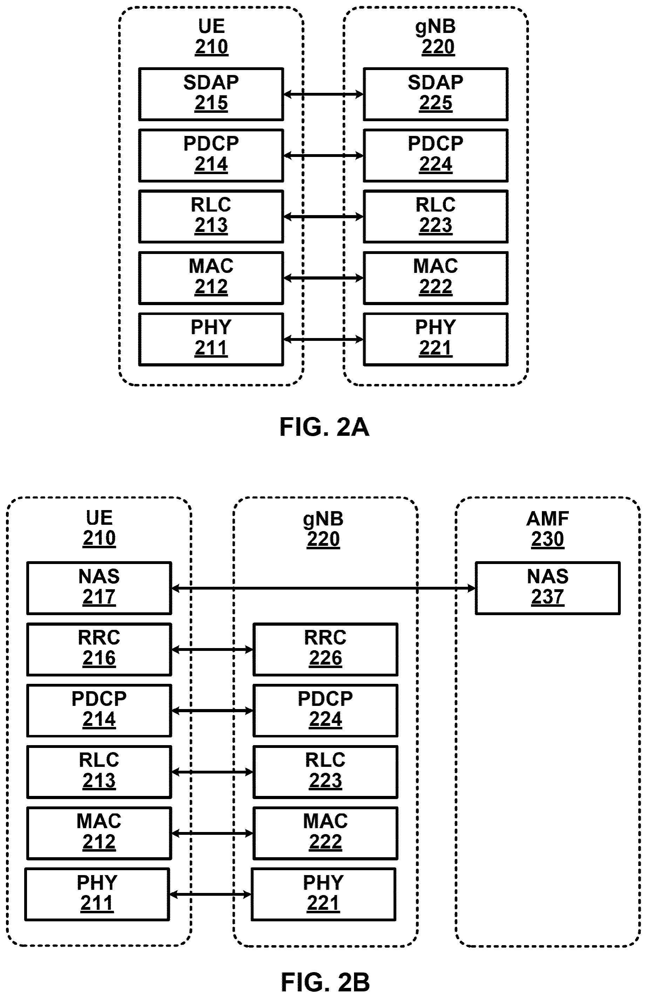

FIG. 2A and FIG. 2B respectively illustrate examples of NR user plane and NR control plane protocol stacks for the Uu interface that lies between a UE 210 and a gNB 220. The protocol stacks illustrated in FIG. 2A and FIG. 2B may be the same or similar to those used for the Uu interface between, for example, the UE 156A and the gNB 160A shown in FIG. 1B.

FIG. 2A illustrates a NR user plane protocol stack comprising five layers implemented in the UE 210 and the gNB 220. At the bottom of the protocol stack, physical layers (PHYs) 211 and 221 may provide transport services to the higher layers of the protocol stack and may correspond to layer 1 of the Open Systems Interconnection (OSI) model. The next four protocols above PHYs 211 and 221 comprise media access control layers (MACs) 212 and 222, radio link control layers (RLCs) 213 and 223, packet data convergence protocol layers (PDCPs) 214 and 224, and service data application protocol layers (SDAPs) 215 and 225. Together, these four protocols may make up layer 2, or the data link layer, of the OSI model.

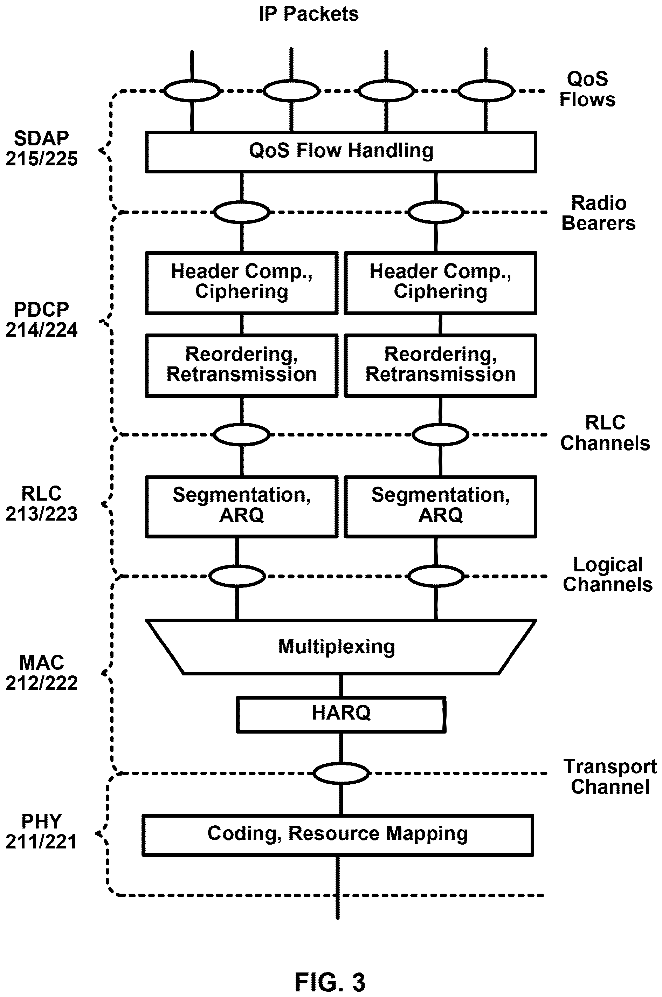

FIG. 3 illustrates an example of services provided between protocol layers of the NR user plane protocol stack. Starting from the top of FIG. 2A and FIG. 3, the SDAPs 215 and 225 may perform QoS flow handling. The UE 210 may receive services through a PDU session, which may be a logical connection between the UE 210 and a DN. The PDU session may have one or more QoS flows. A UPF of a CN (e.g., the UPF 158B) may map IP packets to the one or more QoS flows of the PDU session based on QoS requirements (e.g., in terms of delay, data rate, and/or error rate). The SDAPs 215 and 225 may perform mapping/de-mapping between the one or more QoS flows and one or more data radio bearers. The mapping/de-mapping between the QoS flows and the data radio bearers may be determined by the SDAP 225 at the gNB 220. The SDAP 215 at the UE 210 may be informed of the mapping between the QoS flows and the data radio bearers through reflective mapping or control signaling received from the gNB 220. For reflective mapping, the SDAP 225 at the gNB 220 may mark the downlink packets with a QoS flow indicator (QFI), which may be observed by the SDAP 215 at the UE 210 to determine the mapping/de-mapping between the QoS flows and the data radio bearers.

The PDCPs 214 and 224 may perform header compression/decompression to reduce the amount of data that needs to be transmitted over the air interface, ciphering/deciphering to prevent unauthorized decoding of data transmitted over the air interface, and integrity protection (to ensure control messages originate from intended sources. The PDCPs 214 and 224 may perform retransmissions of undelivered packets, in-sequence delivery and reordering of packets, and removal of packets received in duplicate due to, for example, an intra-gNB handover. The PDCPs 214 and 224 may perform packet duplication to improve the likelihood of the packet being received and, at the receiver, remove any duplicate packets. Packet duplication may be useful for services that require high reliability.

Although not shown in FIG. 3, PDCPs 214 and 224 may perform mapping/de-mapping between a split radio bearer and RLC channels in a dual connectivity scenario. Dual connectivity is a technique that allows a UE to connect to two cells or, more generally, two cell groups: a master cell group (MCG) and a secondary cell group (SCG). A split bearer is when a single radio bearer, such as one of the radio bearers provided by the PDCPs 214 and 224 as a service to the SDAPs 215 and 225, is handled by cell groups in dual connectivity. The PDCPs 214 and 224 may map/de-map the split radio bearer between RLC channels belonging to cell groups.

The RLCs 213 and 223 may perform segmentation, retransmission through Automatic Repeat Request (ARQ), and removal of duplicate data units received from MACs 212 and 222, respectively. The RLCs 213 and 223 may support three transmission modes: transparent mode (TM); unacknowledged mode (UM); and acknowledged mode (AM). Based on the transmission mode an RLC is operating, the RLC may perform one or more of the noted functions. The RLC configuration may be per logical channel with no dependency on numerologies and/or Transmission Time Interval (TTI) durations. As shown in FIG. 3, the RLCs 213 and 223 may provide RLC channels as a service to PDCPs 214 and 224, respectively.

The MACs 212 and 222 may perform multiplexing/demultiplexing of logical channels and/or mapping between logical channels and transport channels. The multiplexing/demultiplexing may include multiplexing/demultiplexing of data units, belonging to the one or more logical channels, into/from Transport Blocks (TBs) delivered to/from the PHYs 211 and 221. The MAC 222 may be configured to perform scheduling, scheduling information reporting, and priority handling between UEs by means of dynamic scheduling. Scheduling may be performed in the gNB 220 (at the MAC 222) for downlink and uplink. The MACs 212 and 222 may be configured to perform error correction through Hybrid Automatic Repeat Request (HARQ) (e.g., one HARQ entity per carrier in case of Carrier Aggregation (CA)), priority handling between logical channels of the UE 210 by means of logical channel prioritization, and/or padding. The MACs 212 and 222 may support one or more numerologies and/or transmission timings. In an example, mapping restrictions in a logical channel prioritization may control which numerology and/or transmission timing a logical channel may use. As shown in FIG. 3, the MACs 212 and 222 may provide logical channels as a service to the RLCs 213 and 223.

The PHYs 211 and 221 may perform mapping of transport channels to physical channels and digital and analog signal processing functions for sending and receiving information over the air interface. These digital and analog signal processing functions may include, for example, coding/decoding and modulation/demodulation. The PHYs 211 and 221 may perform multi-antenna mapping. As shown in FIG. 3, the PHYs 211 and 221 may provide one or more transport channels as a service to the MACs 212 and 222.

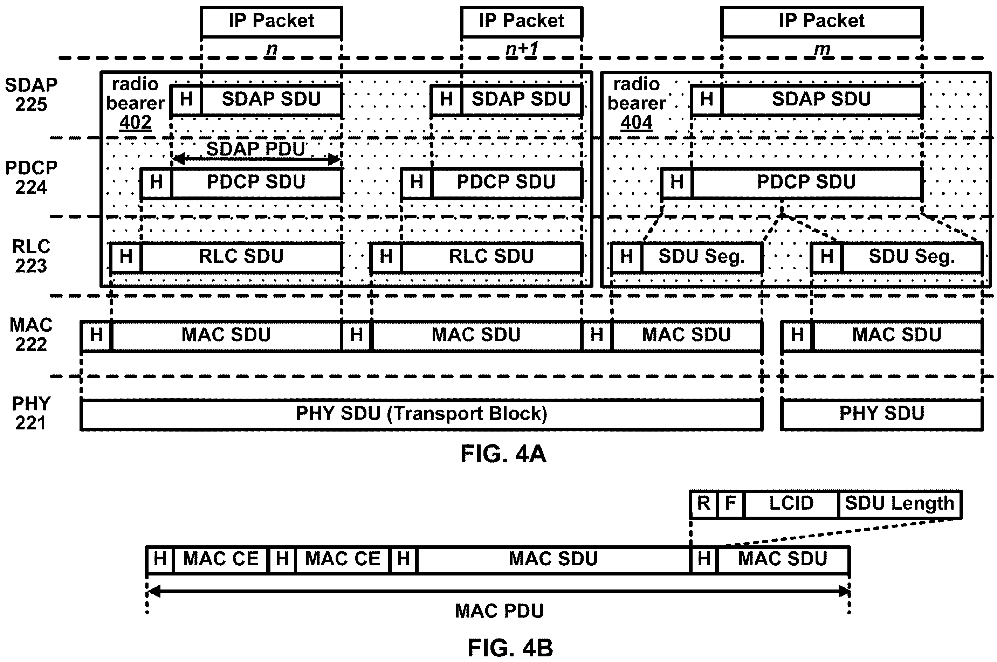

FIG. 4A illustrates an example downlink data flow through the NR user plane protocol stack. FIG. 4A illustrates a downlink data flow of three IP packets (*n, n+1,* and *m*) through the NR user plane protocol stack to generate two TBs at the gNB 220. An uplink data flow through the NR user plane protocol stack may be similar to the downlink data flow depicted in FIG. 4A.

The downlink data flow of FIG. 4A begins when SDAP 225 receives the three IP packets from one or more QoS flows and maps the three packets to radio bearers. In FIG. 4A, the SDAP 225 maps IP packets *n* and *n+1* to a first radio bearer 402 and maps IP packet *m* to a second radio bearer 404. An SDAP header (labeled with an "H" in FIG. 4A) is added to an IP packet. The data unit from/to a higher protocol layer is referred to as a service data unit (SDU) of the lower protocol layer and the data unit to/from a lower protocol layer is referred to as a protocol data unit (PDU) of the higher protocol layer. As shown in FIG. 4A, the data unit from the SDAP 225 is an SDU of lower protocol layer PDCP 224 and is a PDU of the SDAP 225.

The remaining protocol layers in FIG. 4A may perform their associated functionality (e.g., with respect to FIG. 3), add corresponding headers, and forward their respective outputs to the next lower layer. For example, the PDCP 224 may perform IP-header compression and ciphering and forward its output to the RLC 223. The RLC 223 may optionally perform segmentation (e.g., as shown for IP packet *m* in FIG. 4A) and forward its output to the MAC 222. The MAC 222 may multiplex a number of RLC PDUs and may attach a MAC subheader to an RLC PDU to form a transport block. In NR, the MAC subheaders may be distributed across the MAC PDU, as illustrated in FIG. 4A. In LTE, the MAC subheaders may be entirely located at the beginning of the MAC PDU. The NR MAC PDU structure may reduce processing time and associated latency because the MAC PDU subheaders may be computed before the full MAC PDU is assembled.

FIG. 4B illustrates an example format of a MAC subheader in a MAC PDU. The MAC subheader includes: an SDU length field for indicating the length (e.g., in bytes) of the MAC SDU to which the MAC subheader corresponds; a logical channel identifier (LCID) field for identifying the logical channel from which the MAC SDU originated to aid in the demultiplexing process; a flag (F) for indicating the size of the SDU length field; and a reserved bit (R) field for future use.

FIG. 4B further illustrates MAC control elements (CEs) inserted into the MAC PDU by a MAC, such as MAC 223 or MAC 222. For example, FIG. 4B illustrates two MAC CEs inserted into the MAC PDU. MAC CEs may be inserted at the beginning of a MAC PDU for downlink transmissions (as shown in FIG. 4B) and at the end of a MAC PDU for uplink transmissions. MAC CEs may be used for in-band control signaling. Example MAC CEs include: scheduling-related MAC CEs, such as buffer status reports and power headroom reports; activation/deactivation MAC CEs, such as those for activation/deactivation of PDCP duplication detection, channel state information (CSI) reporting, sounding reference signal (SRS) transmission, and prior configured components; discontinuous reception (DRX) related MAC CEs; timing advance MAC CEs; and random access related MAC CEs. A MAC CE may be preceded by a MAC subheader with a similar format as described for MAC SDUs and may be identified with a reserved value in the LCID field that indicates the type of control information included in the MAC CE.

Before describing the NR control plane protocol stack, logical channels, transport channels, and physical channels are first described as well as a mapping between the channel types. One or more of the channels may be used to carry out functions associated with the NR control plane protocol stack described later below.

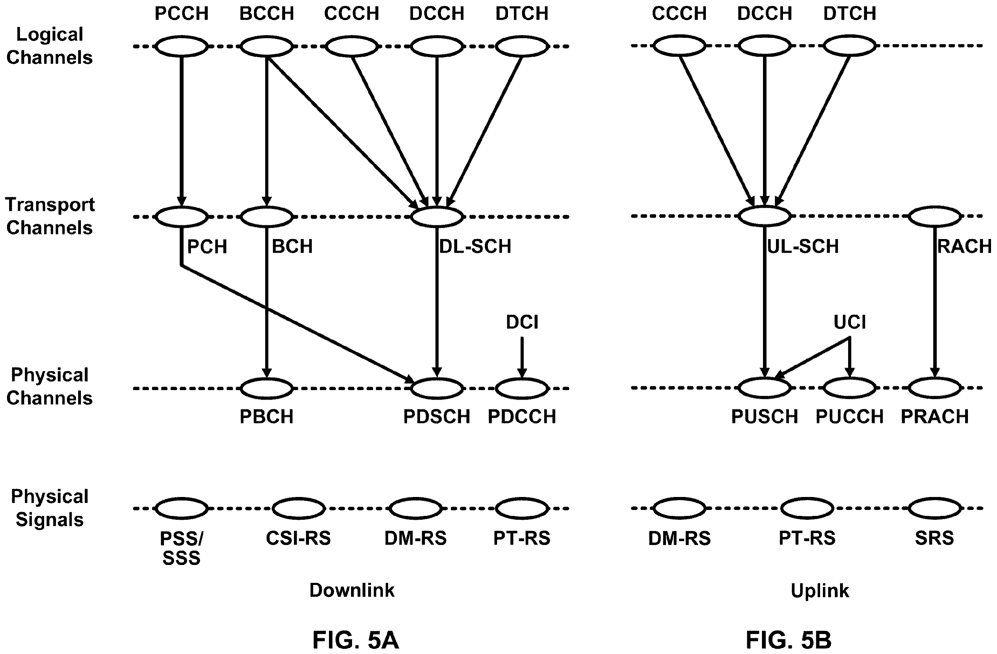

FIG. 5A and FIG. 5B illustrate, for downlink and uplink respectively, a mapping between logical channels, transport channels, and physical channels. Information is passed through channels between the RLC, the MAC, and the PHY of the NR protocol stack. A logical channel may be used between the RLC and the MAC and may be classified as a control channel that carries control and configuration information in the NR control plane or as a traffic channel that carries data in the NR user plane. A logical channel may be classified as a dedicated logical channel that is dedicated to a specific UE or as a common logical channel that may be used by more than one UE. A logical channel may also be defined by the type of information it carries. The set of logical channels defined by NR include, for example:
-- a paging control channel (PCCH) for carrying paging messages used to page a UE whose location is not known to the network on a cell level;
-- a broadcast control channel (BCCH) for carrying system information messages in the form of a master information block (MIB) and several system information blocks (SIBs), wherein the system information messages may be used by the UEs to obtain information about how a cell is configured and how to operate within the cell;
-- a common control channel (CCCH) for carrying control messages together with random access;
-- a dedicated control channel (DCCH) for carrying control messages to/from a specific the UE to configure the UE; and
-- a dedicated traffic channel (DTCH) for carrying user data to/from a specific the UE.

Transport channels are used between the MAC and PHY layers and may be defined by how the information they carry is transmitted over the air interface. The set of transport channels defined by NR include, for example:
-- a paging channel (PCH) for carrying paging messages that originated from the PCCH;
-- a broadcast channel (BCH) for carrying the MIB from the BCCH;
-- a downlink shared channel (DL-SCH) for carrying downlink data and signaling messages, including the SIBs from the BCCH;
-- an uplink shared channel (UL-SCH) for carrying uplink data and signaling messages; and
-- a random access channel (RACH) for allowing a UE to contact the network without any prior scheduling.

The PHY may use physical channels to pass information between processing levels of the PHY. A physical channel may have an associated set of time-frequency resources for carrying the information of one or more transport channels. The PHY may generate control information to support the low-level operation of the PHY and provide the control information to the lower levels of the PHY via physical control channels, known as L1/L2 control channels. The set of physical channels and physical control channels defined by NR include, for example:
-- a physical broadcast channel (PBCH) for carrying the MIB from the BCH;
-- a physical downlink shared channel (PDSCH) for carrying downlink data and signaling messages from the DL-SCH, as well as paging messages from the PCH;
-- a physical downlink control channel (PDCCH) for carrying downlink control information (DCI), which may include downlink scheduling commands, uplink scheduling grants, and uplink power control commands;
-- a physical uplink shared channel (PUSCH) for carrying uplink data and signaling messages from the UL-SCH and in some instances uplink control information (UCI) as described below;
-- a physical uplink control channel (PUCCH) for carrying UCI, which may include HARQ acknowledgments, channel quality indicators (CQI), pre-coding matrix indicators (PMI), rank indicators (RI), and scheduling requests (SR); and
-- a physical random access channel (PRACH) for random access.

Similar to the physical control channels, the physical layer generates physical signals to support the low-level operation of the physical layer. As shown in FIG. 5A and FIG. 5B, the physical layer signals defined by NR include: primary synchronization signals (PSS), secondary synchronization signals (SSS), channel state information reference signals (CSI-RS), demodulation reference signals (DMRS), sounding reference signals (SRS), and phase-tracking reference signals (PT-RS). These physical layer signals will be described in greater detail below.

FIG. 2B illustrates an example NR control plane protocol stack. As shown in FIG. 2B, the NR control plane protocol stack may use the same/similar first four protocol layers as the example NR user plane protocol stack. These four protocol layers include the PHYs 211 and 221, the MACs 212 and 222, the RLCs 213 and 223, and the PDCPs 214 and 224. Instead of having the SDAPs 215 and 225 at the top of the stack as in the NR user plane protocol stack, the NR control plane stack has radio resource controls (RRCs) 216 and 226 and NAS protocols 217 and 237 at the top of the NR control plane protocol stack.

The NAS protocols 217 and 237 may provide control plane functionality between the UE 210 and the AMF 230 (e.g., the AMF 158A) or, more generally, between the UE 210 and the CN. The NAS protocols 217 and 237 may provide control plane functionality between the UE 210 and the AMF 230 via signaling messages, referred to as NAS messages. There is no direct path between the UE 210 and the AMF 230 through which the NAS messages can be transported. The NAS messages may be transported using the AS of the Uu and NG interfaces. NAS protocols 217 and 237 may provide control plane functionality such as authentication, security, connection setup, mobility management, and session management.

The RRCs 216 and 226 may provide control plane functionality between the UE 210 and the gNB 220 or, more generally, between the UE 210 and the RAN. The RRCs 216 and 226 may provide control plane functionality between the UE 210 and the gNB 220 via signaling messages, referred to as RRC messages. RRC messages may be transmitted between the UE 210 and the RAN using signaling radio bearers and the same/similar PDCP, RLC, MAC, and PHY protocol layers. The MAC may multiplex control-plane and user-plane data into the same transport block (TB). The RRCs 216 and 226 may provide control plane functionality such as: broadcast of system information related to AS and NAS; paging initiated by the CN or the RAN; establishment, maintenance and release of an RRC connection between the UE 210 and the RAN; security functions including key management; establishment, configuration, maintenance and release of signaling radio bearers and data radio bearers; mobility functions; QoS management functions; the UE measurement reporting and control of the reporting; detection of and recovery from radio link failure (RLF); and/or NAS message transfer. As part of establishing an RRC connection, RRCs 216 and 226 may establish an RRC context, which may involve configuring parameters for communication between the UE 210 and the RAN.

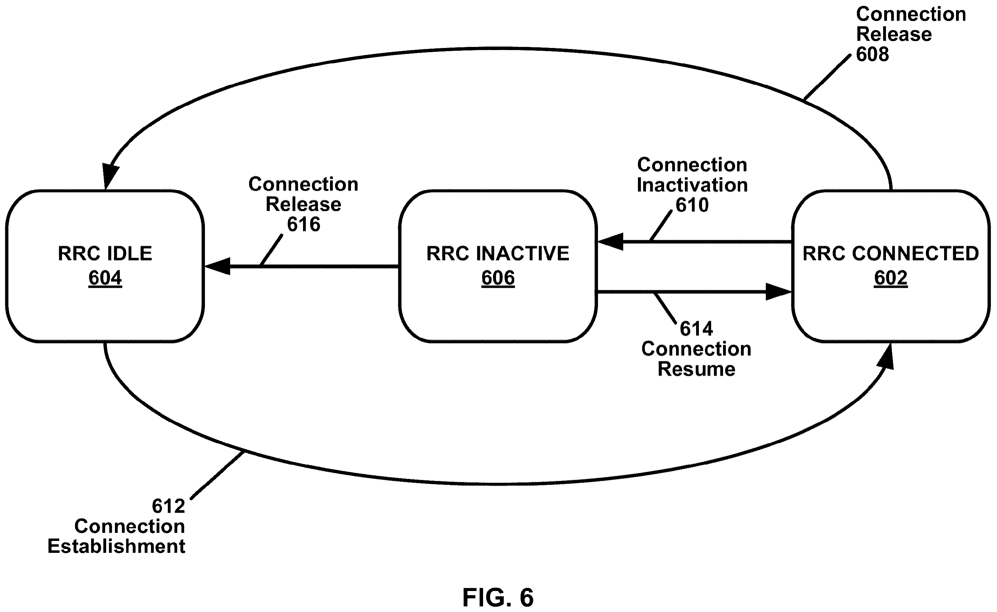

FIG. 6 is an example diagram showing RRC state transitions of a UE. The UE may be the same or similar to the wireless device 106 depicted in FIG. 1A, the UE 210 depicted in FIG. 2A and FIG. 2B, or any other wireless device described in the present disclosure. As illustrated in FIG. 6, a UE may be in at least one of three RRC states: RRC connected 602 (e.g., RRC_CONNECTED), RRC idle 604 (e.g., RRC_IDLE), and RRC inactive 606 (e.g., RRC_INACTIVE).

In RRC connected 602, the UE has an established RRC context and may have at least one RRC connection with a base station. The base station may be similar to one of the one or more base stations included in the RAN 104 depicted in FIG. 1A, one of the gNBs 160 or ng-eNBs 162 depicted in FIG. 1B, the gNB 220 depicted in FIG. 2A and FIG. 2B, or any other base station described in the present disclosure. The base station with which the UE is connected may have the RRC context for the UE. The RRC context, referred to as the UE context, may comprise parameters for communication between the UE and the base station. These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. While in RRC connected 602, mobility of the UE may be managed by the RAN (e.g., the RAN 104 or the NG-RAN 154). The UE may measure the signal levels (e.g., reference signal levels) from a serving cell and neighboring cells and report these measurements to the base station currently serving the UE. The UE's serving base station may request a handover to a cell of one of the neighboring base stations based on the reported measurements. The RRC state may transition from RRC connected 602 to RRC idle 604 through a connection release procedure 608 or to RRC inactive 606 through a connection inactivation procedure 610.

In RRC idle 604, an RRC context may not be established for the UE. In RRC idle 604, the UE may not have an RRC connection with the base station. While in RRC idle 604, the UE may be in a sleep state for the majority of the time (e.g., to conserve battery power). The UE may wake up periodically (e.g., once in every discontinuous reception cycle) to monitor for paging messages from the RAN. Mobility of the UE may be managed by the UE through a procedure known as cell reselection. The RRC state may transition from RRC idle 604 to RRC connected 602 through a connection establishment procedure 612, which may involve a random access procedure as discussed in greater detail below.

In RRC inactive 606, the RRC context previously established is maintained in the UE and the base station. This allows for a fast transition to RRC connected 602 with reduced signaling overhead as compared to the transition from RRC idle 604 to RRC connected 602. While in RRC inactive 606, the UE may be in a sleep state and mobility of the UE may be managed by the UE through cell reselection. The RRC state may transition from RRC inactive 606 to RRC connected 602 through a connection resume procedure 614 or to RRC idle 604 though a connection release procedure 616 that may be the same as or similar to connection release procedure 608.

An RRC state may be associated with a mobility management mechanism. In RRC idle 604 and RRC inactive 606, mobility is managed by the UE through cell reselection. The purpose of mobility management in RRC idle 604 and RRC inactive 606 is to allow the network to be able to notify the UE of an event via a paging message without having to broadcast the paging message over the entire mobile communications network. The mobility management mechanism used in RRC idle 604 and RRC inactive 606 may allow the network to track the UE on a cell-group level so that the paging message may be broadcast over the cells of the cell group that the UE currently resides within instead of the entire mobile communication network. The mobility management mechanisms for RRC idle 604 and RRC inactive 606 track the UE on a cell-group level. They may do so using different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN (e.g., the CN 102 or the 5G-CN 152) may provide the UE with a list of TAls associated with a UE registration area. If the UE moves, through cell reselection, to a cell associated with a TAI not included in the list of TAls associated with the UE registration area, the UE may perform a registration update with the CN to allow the CN to update the UE's location and provide the UE with a new the UE registration area.

RAN areas may be used to track the UE at the RAN level. For a UE in RRC inactive 606 state, the UE may be assigned a RAN notification area. A RAN notification area may comprise one or more cell identities, a list of RAls, or a list of TAls. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 606.

A gNB, such as gNBs 160 in FIG. 1B, may be split into two parts: a central unit (gNB-CU), and one or more distributed units (gNB-DU). A gNB-CU may be coupled to one or more gNB-DUs using an F1 interface. The gNB-CU may comprise the RRC, the PDCP, and the SDAP. A gNB-DU may comprise the RLC, the MAC, and the PHY.

In NR, the physical signals and physical channels (discussed with respect to FIG. 5A and FIG. 5B) may be mapped onto orthogonal frequency divisional multiplexing (OFDM) symbols. OFDM is a multicarrier communication scheme that transmits data over *F* orthogonal subcarriers (or tones). Before transmission, the data may be mapped to a series of complex symbols (e.g., M-quadrature amplitude modulation (M-QAM) or M-phase shift keying (M-PSK) symbols), referred to as source symbols, and divided into *F* parallel symbol streams. The *F* parallel symbol streams may be treated as though they are in the frequency domain and used as inputs to an Inverse Fast Fourier Transform (IFFT) block that transforms them into the time domain. The IFFT block may take in *F* source symbols at a time, one from each of the *F* parallel symbol streams, and use each source symbol to modulate the amplitude and phase of one of *F* sinusoidal basis functions that correspond to the *F* orthogonal subcarriers. The output of the IFFT block may be *F* time-domain samples that represent the summation of the *F* orthogonal subcarriers. The *F* time-domain samples may form a single OFDM symbol. After some processing (e.g., addition of a cyclic prefix) and up-conversion, an OFDM symbol provided by the IFFT block may be transmitted over the air interface on a carrier frequency. The *F* parallel symbol streams may be mixed using an FFT block before being processed by the IFFT block. This operation produces Discrete Fourier Transform (DFT)-precoded OFDM symbols and may be used by UEs in the uplink to reduce the peak to average power ratio (PAPR). Inverse processing may be performed on the OFDM symbol at a receiver using an FFT block to recover the data mapped to the source symbols.

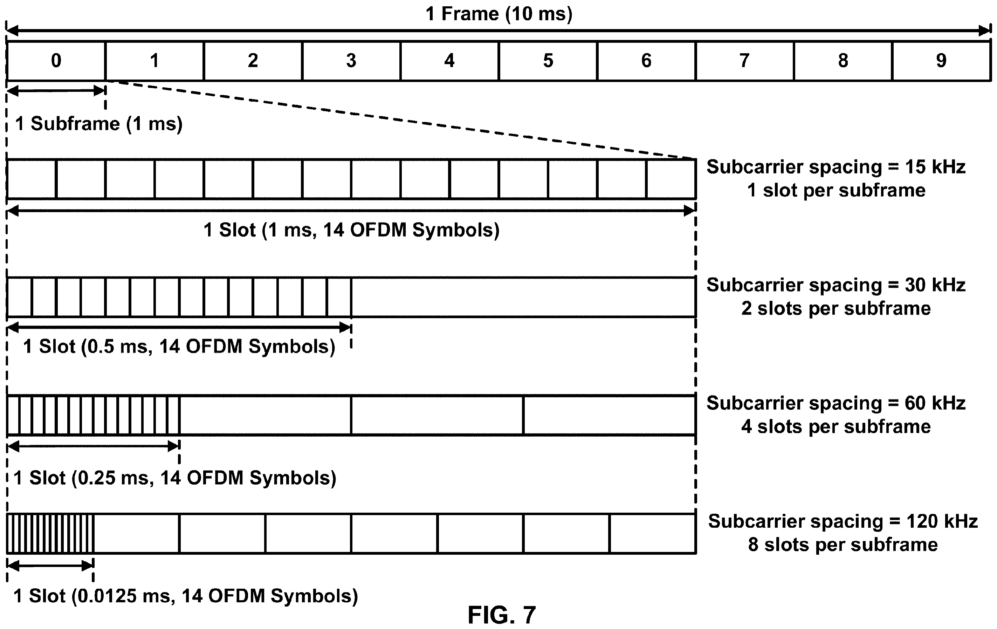

FIG. 7 illustrates an example configuration of an NR frame into which OFDM symbols are grouped. An NR frame may be identified by a system frame number (SFN). The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 µs. For example, NR defines numerologies with the following subcarrier spacing/cyclic prefix duration combinations: 15 kHz/4.7 µs; 30 kHz/2.3 µs; 60 kHz/1.2 µs; 120 kHz/0.59 µs; and 240 kHz/0.29 µs.

A slot may have a fixed number of OFDM symbols (e.g., 14 OFDM symbols). A numerology with a higher subcarrier spacing has a shorter slot duration and, correspondingly, more slots per subframe. FIG. 7 illustrates this numerology-dependent slot duration and slots-per-subframe transmission structure (the numerology with a subcarrier spacing of 240 kHz is not shown in FIG. 7 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

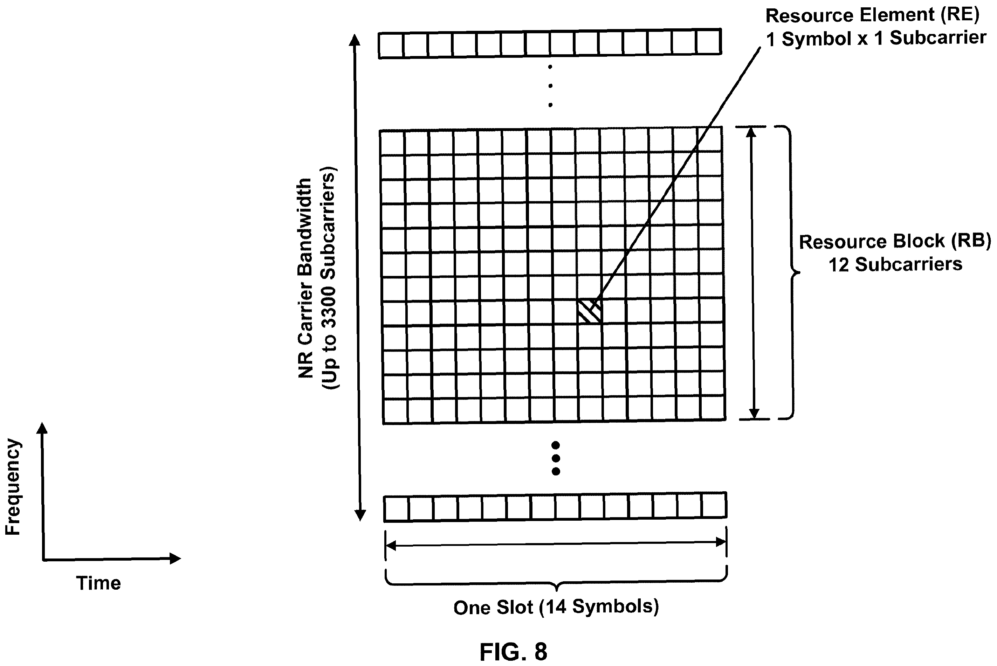

FIG. 8 illustrates an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 8. An RB spans twelve consecutive REs in the frequency domain as shown in FIG. 8. An NR carrier may be limited to a width of 275 RBs or 275×12 = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 8 illustrates a single numerology being used across the entire bandwidth of the NR carrier. In other example configurations, multiple numerologies may be supported on the same carrier.

NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. In an example, to reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. In an example, a BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier.

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., PDCCH or PDSCH) in a downlink BWP according to a configured numerology (e.g., subcarrier spacing and cyclic prefix duration) for the downlink BWP. The UE may transmit uplink transmissions (e.g., PUCCH or PUSCH) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the PBCH.

A base station may configure a UE with a BWP inactivity timer value for a PCell. The UE may start or restart a BWP inactivity timer at any appropriate time. For example, the UE may start or restart the BWP inactivity timer (*a*) when the UE detects a DCI indicating an active downlink BWP other than a default downlink BWP for a paired spectra operation; or (*b*) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

In an example, a base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

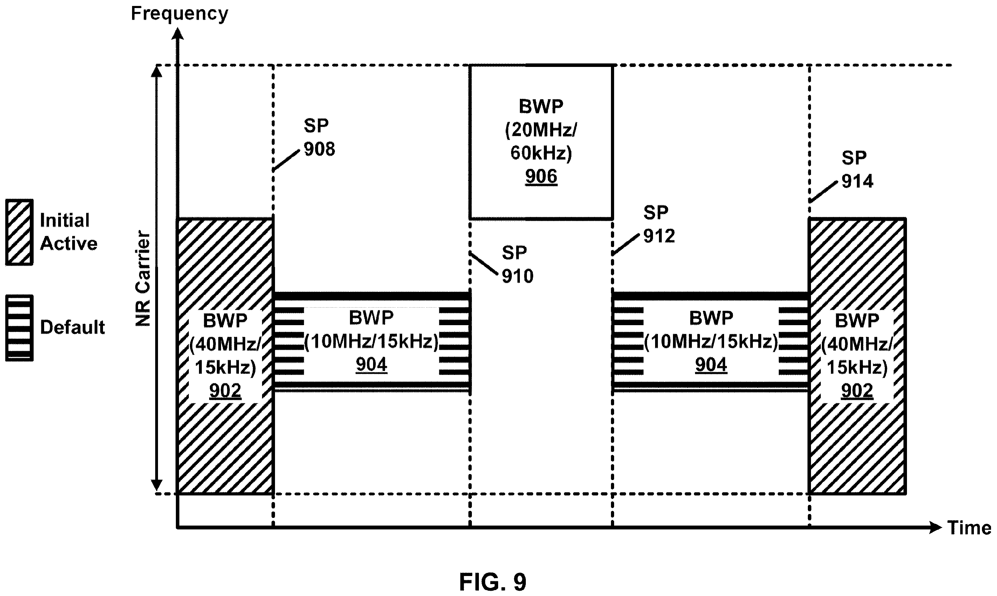

FIG. 9 illustrates an example of bandwidth adaptation using three configured BWPs for an NR carrier. A UE configured with the three BWPs may switch from one BWP to another BWP at a switching point. In the example illustrated in FIG. 9, the BWPs include: a BWP 902 with a bandwidth of 40 MHz and a subcarrier spacing of 15 kHz; a BWP 904 with a bandwidth of 10 MHz and a subcarrier spacing of 15 kHz; and a BWP 906 with a bandwidth of 20 MHz and a subcarrier spacing of 60 kHz. The BWP 902 may be an initial active BWP, and the BWP 904 may be a default BWP. The UE may switch between BWPs at switching points. In the example of FIG. 9, the UE may switch from the BWP 902 to the BWP 904 at a switching point 908. The switching at the switching point 908 may occur for any suitable reason, for example, in response to an expiry of a BWP inactivity timer (indicating switching to the default BWP) and/or in response to receiving a DCI indicating BWP 904 as the active BWP. The UE may switch at a switching point 910 from active BWP 904 to BWP 906 in response to receiving a DCI indicating BWP 906 as the active BWP. The UE may switch at a switching point 912 from active BWP 906 to BWP 904 in response to an expiry of a BWP inactivity timer and/or in response to receiving a DCI indicating BWP 904 as the active BWP. The UE may switch at a switching point 914 from active BWP 904 to BWP 902 in response to receiving a DCI indicating BWP 902 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide for greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

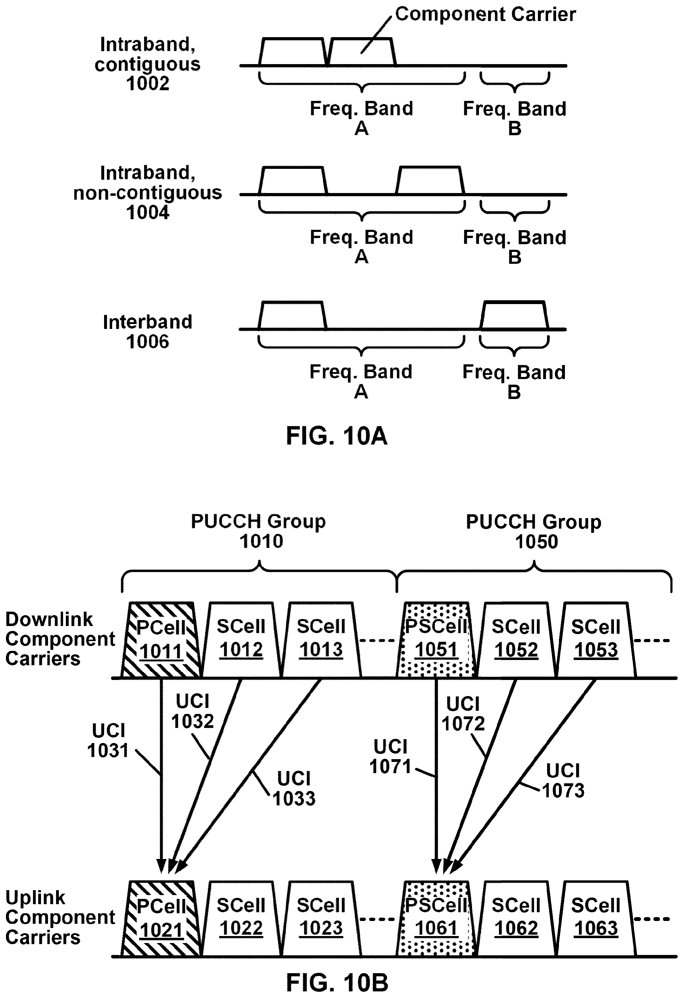

FIG. 10A illustrates the three CA configurations with two CCs. In the intraband, contiguous configuration 1002, the two CCs are aggregated in the same frequency band (frequency band A) and are located directly adjacent to each other within the frequency band. In the intraband, non-contiguous configuration 1004, the two CCs are aggregated in the same frequency band (frequency band A) and are separated in the frequency band by a gap. In the interband configuration 1006, the two CCs are located in frequency bands (frequency band A and frequency band B).

In an example, up to 32 CCs may be aggregated. The aggregated CCs may have the same or different bandwidths, subcarrier spacing, and/or duplexing schemes (TDD or FDD). A serving cell for a UE using CA may have a downlink CC. For FDD, one or more uplink CCs may be optionally configured for a serving cell. The ability to aggregate more downlink carriers than uplink carriers may be useful, for example, when the UE has more data traffic in the downlink than in the uplink.

When CA is used, one of the aggregated cells for a UE may be referred to as a primary cell (PCell). The PCell may be the serving cell that the UE initially connects to at RRC connection establishment, reestablishment, and/or handover. The PCell may provide the UE with NAS mobility information and the security input. UEs may have different PCells. In the downlink, the carrier corresponding to the PCell may be referred to as the downlink primary CC (DL PCC). In the uplink, the carrier corresponding to the PCell may be referred to as the uplink primary CC (UL PCC). The other aggregated cells for the UE may be referred to as secondary cells (SCells). In an example, the SCells may be configured after the PCell is configured for the UE. For example, an SCell may be configured through an RRC Connection Reconfiguration procedure. In the downlink, the carrier corresponding to an SCell may be referred to as a downlink secondary CC (DL SCC). In the uplink, the carrier corresponding to the SCell may be referred to as the uplink secondary CC (UL SCC).

Configured SCells for a UE may be activated and deactivated based on, for example, traffic and channel conditions. Deactivation of an SCell may mean that PDCCH and PDSCH reception on the SCell is stopped and PUSCH, SRS, and CQI transmissions on the SCell are stopped. Configured SCells may be activated and deactivated using a MAC CE with respect to FIG. 4B. For example, a MAC CE may use a bitmap (e.g., one bit per SCell) to indicate which SCells (e.g., in a subset of configured SCells) for the UE are activated or deactivated. Configured SCells may be deactivated in response to an expiration of an SCell deactivation timer (e.g., one SCell deactivation timer per SCell).

Downlink control information, such as scheduling assignments and scheduling grants, for a cell may be transmitted on the cell corresponding to the assignments and grants, which is known as self-scheduling. The DCI for the cell may be transmitted on another cell, which is known as cross-carrier scheduling. Uplink control information (e.g., HARQ acknowledgments and channel state feedback, such as CQI, PMI, and/or RI) for aggregated cells may be transmitted on the PUCCH of the PCell. For a larger number of aggregated downlink CCs, the PUCCH of the PCell may become overloaded. Cells may be divided into multiple PUCCH groups.

FIG. 10B illustrates an example of how aggregated cells may be configured into one or more PUCCH groups. A PUCCH group 1010 and a PUCCH group 1050 may include one or more downlink CCs, respectively. In the example of FIG. 10B, the PUCCH group 1010 includes three downlink CCs: a PCell 1011, an SCell 1012, and an SCell 1013. The PUCCH group 1050 includes three downlink CCs in the present example: a PCell 1051, an SCell 1052, and an SCell 1053. One or more uplink CCs may be configured as a PCell 1021, an SCell 1022, and an SCell 1023. One or more other uplink CCs may be configured as a primary SCell (PSCell) 1061, an SCell 1062, and an SCell 1063. Uplink control information (UCI) related to the downlink CCs of the PUCCH group 1010, shown as UCI 1031, UCI 1032, and UCI 1033, may be transmitted in the uplink of the PCell 1021. Uplink control information (UCI) related to the downlink CCs of the PUCCH group 1050, shown as UCI 1071, UCI 1072, and UCI 1073, may be transmitted in the uplink of the PSCell 1061. In an example, if the aggregated cells depicted in FIG. 10B were not divided into the PUCCH group 1010 and the PUCCH group 1050, a single uplink PCell to transmit UCI relating to the downlink CCs, and the PCell may become overloaded. By dividing transmissions of UCI between the PCell 1021 and the PSCell 1061, overloading may be prevented.

A cell, comprising a downlink carrier and optionally an uplink carrier, may be assigned with a physical cell ID and a cell index. The physical cell ID or the cell index may identify a downlink carrier and/or an uplink carrier of the cell, for example, depending on the context in which the physical cell ID is used. A physical cell ID may be determined using a synchronization signal transmitted on a downlink component carrier. A cell index may be determined using RRC messages. In the disclosure, a physical cell ID may be referred to as a carrier ID, and a cell index may be referred to as a carrier index. For example, when the disclosure refers to a first physical cell ID for a first downlink carrier, the disclosure may mean the first physical cell ID is for a cell comprising the first downlink carrier. The same/similar concept may apply to, for example, a carrier activation. When the disclosure indicates that a first carrier is activated, the specification may mean that a cell comprising the first carrier is activated.

In CA, a multi-carrier nature of a PHY may be exposed to a MAC. In an example, a HARQ entity may operate on a serving cell. A transport block may be generated per assignment/grant per serving cell. A transport block and potential HARQ retransmissions of the transport block may be mapped to a serving cell.

In the downlink, a base station may transmit (e.g., unicast, multicast, and/or broadcast) one or more Reference Signals (RSs) to a UE (e.g., PSS, SSS, CSI-RS, DMRS, and/or PT-RS, as shown in FIG. 5A). In the uplink, the UE may transmit one or more RSs to the base station (e.g., DMRS, PT-RS, and/or SRS, as shown in FIG. 5B). The PSS and the SSS may be transmitted by the base station and used by the UE to synchronize the UE to the base station. The PSS and the SSS may be provided in a synchronization signal (SS) / physical broadcast channel (PBCH) block that includes the PSS, the SSS, and the PBCH. The base station may periodically transmit a burst of SS/PBCH blocks.

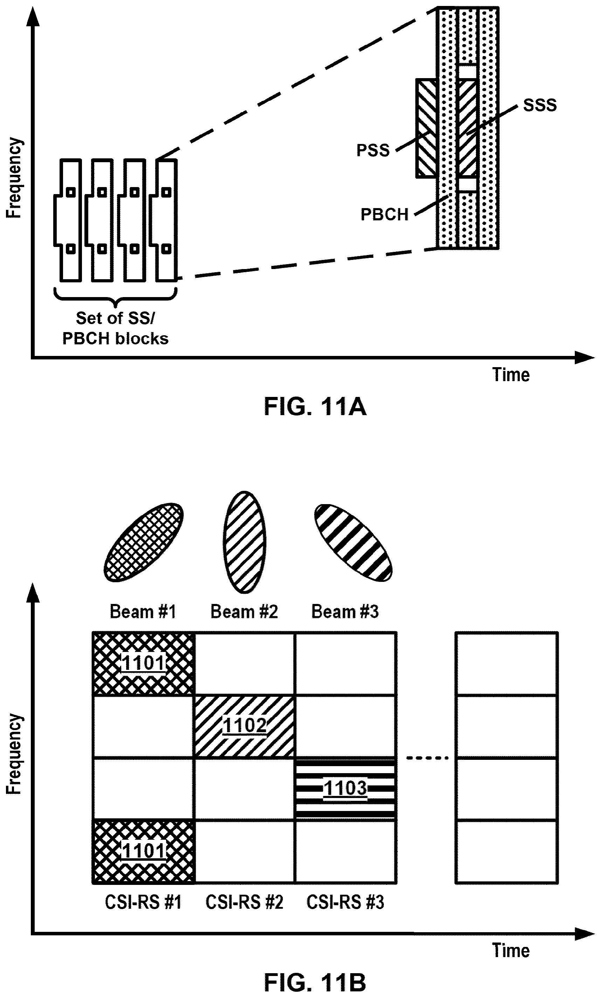

FIG. 11A illustrates an example of an SS/PBCH block's structure and location. A burst of SS/PBCH blocks may include one or more SS/PBCH blocks (e.g., 4 SS/PBCH blocks, as shown in FIG. 11A). Bursts may be transmitted periodically (e.g., every 2 frames or 20 ms). A burst may be restricted to a half-frame (e.g., a first half-frame having a duration of 5 ms). It will be understood that FIG. 11A is an example, and that these parameters (number of SS/PBCH blocks per burst, periodicity of bursts, position of burst within the frame) may be configured based on, for example: a carrier frequency of a cell in which the SS/PBCH block is transmitted; a numerology or subcarrier spacing of the cell; a configuration by the network (e.g., using RRC signaling); or any other suitable factor. In an example, the UE may assume a subcarrier spacing for the SS/PBCH block based on the carrier frequency being monitored, unless the radio network configured the UE to assume a different subcarrier spacing.

The SS/PBCH block may span one or more OFDM symbols in the time domain (e.g., 4 OFDM symbols, as shown in the example of FIG. 11A) and may span one or more subcarriers in the frequency domain (e.g., 240 contiguous subcarriers). The PSS, the SSS, and the PBCH may have a common center frequency. The PSS may be transmitted first and may span, for example, 1 OFDM symbol and 127 subcarriers. The SSS may be transmitted after the PSS (e.g., two symbols later) and may span 1 OFDM symbol and 127 subcarriers. The PBCH may be transmitted after the PSS (e.g., across the next 3 OFDM symbols) and may span 240 subcarriers.

The location of the SS/PBCH block in the time and frequency domains may not be known to the UE (e.g., if the UE is searching for the cell). To find and select the cell, the UE may monitor a carrier for the PSS. For example, the UE may monitor a frequency location within the carrier. If the PSS is not found after a certain duration (e.g., 20 ms), the UE may search for the PSS at a different frequency location within the carrier, as indicated by a synchronization raster. If the PSS is found at a location in the time and frequency domains, the UE may determine, based on a known structure of the SS/PBCH block, the locations of the SSS and the PBCH, respectively. The SS/PBCH block may be a cell-defining SS block (CD-SSB). In an example, a primary cell may be associated with a CD-SSB. The CD-SSB may be located on a synchronization raster. In an example, a cell selection/search and/or reselection may be based on the CD-SSB.

The SS/PBCH block may be used by the UE to determine one or more parameters of the cell. For example, the UE may determine a physical cell identifier (PCI) of the cell based on the sequences of the PSS and the SSS, respectively. The UE may determine a location of a frame boundary of the cell based on the location of the SS/PBCH block. For example, the SS/PBCH block may indicate that it has been transmitted in accordance with a transmission pattern, wherein a SS/PBCH block in the transmission pattern is a known distance from the frame boundary.

The PBCH may use a QPSK modulation and may use forward error correction (FEC). The FEC may use polar coding. One or more symbols spanned by the PBCH may carry one or more DMRSs for demodulation of the PBCH. The PBCH may include an indication of a current system frame number (SFN) of the cell and/or a SS/PBCH block timing index. These parameters may facilitate time synchronization of the UE to the base station. The PBCH may include a master information block (MIB) used to provide the UE with one or more parameters. The MIB may be used by the UE to locate remaining minimum system information (RMSI) associated with the cell. The RMSI may include a System Information Block Type 1 (SIB1). The SIB1 may contain information needed by the UE to access the cell. The UE may use one or more parameters of the MIB to monitor PDCCH, which may be used to schedule PDSCH. The PDSCH may include the SIB1. The SIB1 may be decoded using parameters provided in the MIB. The PBCH may indicate an absence of SIB1. Based on the PBCH indicating the absence of SIB1, the UE may be pointed to a frequency. The UE may search for an SS/PBCH block at the frequency to which the UE is pointed.

The UE may assume that one or more SS/PBCH blocks transmitted with a same SS/PBCH block index are quasi co-located (QCLed) (e.g., having the same/similar Doppler spread, Doppler shift, average gain, average delay, and/or spatial Rx parameters). The UE may not assume QCL for SS/PBCH block transmissions having different SS/PBCH block indices.

SS/PBCH blocks (e.g., those within a half-frame) may be transmitted in spatial directions (e.g., using different beams that span a coverage area of the cell). In an example, a first SS/PBCH block may be transmitted in a first spatial direction using a first beam, and a second SS/PBCH block may be transmitted in a second spatial direction using a second beam.

In an example, within a frequency span of a carrier, a base station may transmit a plurality of SS/PBCH blocks. In an example, a first PCI of a first SS/PBCH block of the plurality of SS/PBCH blocks may be different from a second PCI of a second SS/PBCH block of the plurality of SS/PBCH blocks. The PCIs of SS/PBCH blocks transmitted in different frequency locations may be different or the same.

The CSI-RS may be transmitted by the base station and used by the UE to acquire channel state information (CSI). The base station may configure the UE with one or more CSI-RSs for channel estimation or any other suitable purpose. The base station may configure a UE with one or more of the same/similar CSI-RSs. The UE may measure the one or more CSI-RSs. The UE may estimate a downlink channel state and/or generate a CSI report based on the measuring of the one or more downlink CSI-RSs. The UE may provide the CSI report to the base station. The base station may use feedback provided by the UE (e.g., the estimated downlink channel state) to perform link adaptation.

The base station may semi-statically configure the UE with one or more CSI-RS resource sets. A CSI-RS resource may be associated with a location in the time and frequency domains and a periodicity. The base station may selectively activate and/or deactivate a CSI-RS resource. The base station may indicate to the UE that a CSI-RS resource in the CSI-RS resource set is activated and/or deactivated.

The base station may configure the UE to report CSI measurements. The base station may configure the UE to provide CSI reports periodically, aperiodically, or semi-persistently. For periodic CSI reporting, the UE may be configured with a timing and/or periodicity of a plurality of CSI reports. For aperiodic CSI reporting, the base station may request a CSI report. For example, the base station may command the UE to measure a configured CSI-RS resource and provide a CSI report relating to the measurements. For semi-persistent CSI reporting, the base station may configure the UE to transmit periodically, and selectively activate or deactivate the periodic reporting. The base station may configure the UE with a CSI-RS resource set and CSI reports using RRC signaling.

The CSI-RS configuration may comprise one or more parameters indicating, for example, up to 32 antenna ports. The UE may be configured to employ the same OFDM symbols for a downlink CSI-RS and a control resource set (CORESET) when the downlink CSI-RS and CORESET are spatially QCLed and resource elements associated with the downlink CSI-RS are outside of the physical resource blocks (PRBs) configured for the CORESET. The UE may be configured to employ the same OFDM symbols for downlink CSI-RS and SS/PBCH blocks when the downlink CSI-RS and SS/PBCH blocks are spatially QCLed and resource elements associated with the downlink CSI-RS are outside of PRBs configured for the SS/PBCH blocks.

Downlink DMRSs may be transmitted by a base station and used by a UE for channel estimation. For example, the downlink DMRS may be used for coherent demodulation of one or more downlink physical channels (e.g., PDSCH). An NR network may support one or more variable and/or configurable DMRS patterns for data demodulation. At least one downlink DMRS configuration may support a front-loaded DMRS pattern. A front-loaded DMRS may be mapped over one or more OFDM symbols (e.g., one or two adjacent OFDM symbols). A base station may semi-statically configure the UE with a number (e.g., a maximum number) of front-loaded DMRS symbols for PDSCH. A DMRS configuration may support one or more DMRS ports. For example, for single user-MIMO, a DMRS configuration may support up to eight orthogonal downlink DMRS ports per UE. For multiuser-MIMO, a DMRS configuration may support up to 4 orthogonal downlink DMRS ports per UE. A radio network may support (e.g., at least for CP-OFDM) a common DMRS structure for downlink and uplink, wherein a DMRS location, a DMRS pattern, and/or a scrambling sequence may be the same or different. The base station may transmit a downlink DMRS and a corresponding PDSCH using the same precoding matrix. The UE may use the one or more downlink DMRSs for coherent demodulation/channel estimation of the PDSCH.

In an example, a transmitter (e.g., a base station) may use a precoder matrices for a part of a transmission bandwidth. For example, the transmitter may use a first precoder matrix for a first bandwidth and a second precoder matrix for a second bandwidth. The first precoder matrix and the second precoder matrix may be different based on the first bandwidth being different from the second bandwidth. The UE may assume that a same precoding matrix is used across a set of PRBs. The set of PRBs may be denoted as a precoding resource block group (PRG).

A PDSCH may comprise one or more layers. The UE may assume that at least one symbol with DMRS is present on a layer of the one or more layers of the PDSCH. A higher layer may configure up to 3 DMRSs for the PDSCH.

Downlink PT-RS may be transmitted by a base station and used by a UE for phase-noise compensation. Whether a downlink PT-RS is present or not may depend on an RRC configuration. The presence and/or pattern of the downlink PT-RS may be configured on a UE-specific basis using a combination of RRC signaling and/or an association with one or more parameters employed for other purposes (e.g., modulation and coding scheme (MCS)), which may be indicated by DCI. When configured, a dynamic presence of a downlink PT-RS may be associated with one or more DCI parameters comprising at least MCS. An NR network may support a plurality of PT-RS densities defined in the time and/or frequency domains. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. Downlink PT-RS may be confined in the scheduled time/frequency duration for the UE. Downlink PT-RS may be transmitted on symbols to facilitate phase tracking at the receiver.

The UE may transmit an uplink DMRS to a base station for channel estimation. For example, the base station may use the uplink DMRS for coherent demodulation of one or more uplink physical channels. For example, the UE may transmit an uplink DMRS with a PUSCH and/or a PUCCH. The uplink DM-RS may span a range of frequencies that is similar to a range of frequencies associated with the corresponding physical channel. The base station may configure the UE with one or more uplink DMRS configurations. At least one DMRS configuration may support a front-loaded DMRS pattern. The front-loaded DMRS may be mapped over one or more OFDM symbols (e.g., one or two adjacent OFDM symbols). One or more uplink DMRSs may be configured to transmit at one or more symbols of a PUSCH and/or a PUCCH. The base station may semi-statically configure the UE with a number (e.g., maximum number) of front-loaded DMRS symbols for the PUSCH and/or the PUCCH, which the UE may use to schedule a single-symbol DMRS and/or a double-symbol DMRS. An NR network may support (e.g., for cyclic prefix orthogonal frequency division multiplexing (CP-OFDM)) a common DMRS structure for downlink and uplink, wherein a DMRS location, a DMRS pattern, and/or a scrambling sequence for the DMRS may be the same or different.

A PUSCH may comprise one or more layers, and the UE may transmit at least one symbol with DMRS present on a layer of the one or more layers of the PUSCH. In an example, a higher layer may configure up to three DMRSs for the PUSCH.

Uplink PT-RS (which may be used by a base station for phase tracking and/or phase-noise compensation) may or may not be present depending on an RRC configuration of the UE. The presence and/or pattern of uplink PT-RS may be configured on a UE-specific basis by a combination of RRC signaling and/or one or more parameters employed for other purposes (e.g., Modulation and Coding Scheme (MCS)), which may be indicated by DCI. When configured, a dynamic presence of uplink PT-RS may be associated with one or more DCI parameters comprising at least MCS. A radio network may support a plurality of uplink PT-RS densities defined in time/frequency domain. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. For example, uplink PT-RS may be confined in the scheduled time/frequency duration for the UE.

SRS may be transmitted by a UE to a base station for channel state estimation to support uplink channel dependent scheduling and/or link adaptation. SRS transmitted by the UE may allow a base station to estimate an uplink channel state at one or more frequencies. A scheduler at the base station may employ the estimated uplink channel state to assign one or more resource blocks for an uplink PUSCH transmission from the UE. The base station may semi-statically configure the UE with one or more SRS resource sets. For an SRS resource set, the base station may configure the UE with one or more SRS resources. An SRS resource set applicability may be configured by a higher layer (e.g., RRC) parameter. For example, when a higher layer parameter indicates beam management, an SRS resource in an SRS resource set of the one or more SRS resource sets (e.g., with the same/similar time domain behavior, periodic, aperiodic, and/or the like) may be transmitted at a time instant (e.g., simultaneously). The UE may transmit one or more SRS resources in SRS resource sets. An NR network may support aperiodic, periodic and/or semi-persistent SRS transmissions. The UE may transmit SRS resources based on one or more trigger types, wherein the one or more trigger types may comprise higher layer signaling (e.g., RRC) and/or one or more DCI formats. In an example, at least one DCI format may be employed for the UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH and SRS are transmitted in a same slot, the UE may be configured to transmit SRS after a transmission of a PUSCH and a corresponding uplink DMRS.

The base station may semi-statically configure the UE with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port is defined such that the channel over which a symbol on the antenna port is conveyed can be inferred from the channel over which another symbol on the same antenna port is conveyed. If a first symbol and a second symbol are transmitted on the same antenna port, the receiver may infer the channel (e.g., fading gain, multipath delay, and/or the like) for conveying the second symbol on the antenna port, from the channel for conveying the first symbol on the antenna port. A first antenna port and a second antenna port may be referred to as quasi co-located (QCLed) if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming require beam management. Beam management may comprise beam measurement, beam selection, and beam indication. A beam may be associated with one or more reference signals. For example, a beam may be identified by one or more beamformed reference signals. The UE may perform downlink beam measurement based on downlink reference signals (e.g., a channel state information reference signal (CSI-RS)) and generate a beam measurement report. The UE may perform the downlink beam measurement procedure after an RRC connection is set up with a base station.

FIG. 11B illustrates an example of channel state information reference signals (CSI-RSs) that are mapped in the time and frequency domains. A square shown in FIG. 11B may span a resource block (RB) within a bandwidth of a cell. A base station may transmit one or more RRC messages comprising CSI-RS resource configuration parameters indicating one or more CSI-RSs. One or more of the following parameters may be configured by higher layer signaling (e.g., RRC and/or MAC signaling) for a CSI-RS resource configuration: a CSI-RS resource configuration identity, a number of CSI-RS ports, a CSI-RS configuration (e.g., symbol and resource element (RE) locations in a subframe), a CSI-RS subframe configuration (e.g., subframe location, offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

The three beams illustrated in FIG. 11B may be configured for a UE in a UE-specific configuration. Three beams are illustrated in FIG. 11B (beam #1, beam #2, and beam #3), more or fewer beams may be configured. Beam #1 may be allocated with CSI-RS 1101 that may be transmitted in one or more subcarriers in an RB of a first symbol. Beam #2 may be allocated with CSI-RS 1102 that may be transmitted in one or more subcarriers in an RB of a second symbol. Beam #3 may be allocated with CSI-RS 1103 that may be transmitted in one or more subcarriers in an RB of a third symbol. By using frequency division multiplexing (FDM), a base station may use other subcarriers in a same RB (for example, those that are not used to transmit CSI-RS 1101) to transmit another CSI-RS associated with a beam for another UE. By using time domain multiplexing (TDM), beams used for the UE may be configured such that beams for the UE use symbols from beams of other UEs.

CSI-RSs such as those illustrated in FIG. 11B (e.g., CSI-RS 1101, 1102, 1103) may be transmitted by the base station and used by the UE for one or more measurements. For example, the UE may measure a reference signal received power (RSRP) of configured CSI-RS resources. The base station may configure the UE with a reporting configuration and the UE may report the RSRP measurements to a network (for example, via one or more base stations) based on the reporting configuration. In an example, the base station may determine, based on the reported measurement results, one or more transmission configuration indication (TCI) states comprising a number of reference signals. In an example, the base station may indicate one or more TCI states to the UE (e.g., via RRC signaling, a MAC CE, and/or a DCI). The UE may receive a downlink transmission with a receive (Rx) beam determined based on the one or more TCI states. In an example, the UE may or may not have a capability of beam correspondence. If the UE has the capability of beam correspondence, the UE may determine a spatial domain filter of a transmit (Tx) beam based on a spatial domain filter of the corresponding Rx beam. If the UE does not have the capability of beam correspondence, the UE may perform an uplink beam selection procedure to determine the spatial domain filter of the Tx beam. The UE may perform the uplink beam selection procedure based on one or more sounding reference signal (SRS) resources configured to the UE by the base station. The base station may select and indicate uplink beams for the UE based on measurements of the one or more SRS resources transmitted by the UE.

In a beam management procedure, a UE may assess (e.g., measure) a channel quality of one or more beam pair links, a beam pair link comprising a transmitting beam transmitted by a base station and a receiving beam received by the UE. Based on the assessment, the UE may transmit a beam measurement report indicating one or more beam pair quality parameters comprising, e.g., one or more beam identifications (e.g., a beam index, a reference signal index, or the like), RSRP, a precoding matrix indicator (PMI), a channel quality indicator (CQI), and/or a rank indicator (RI).

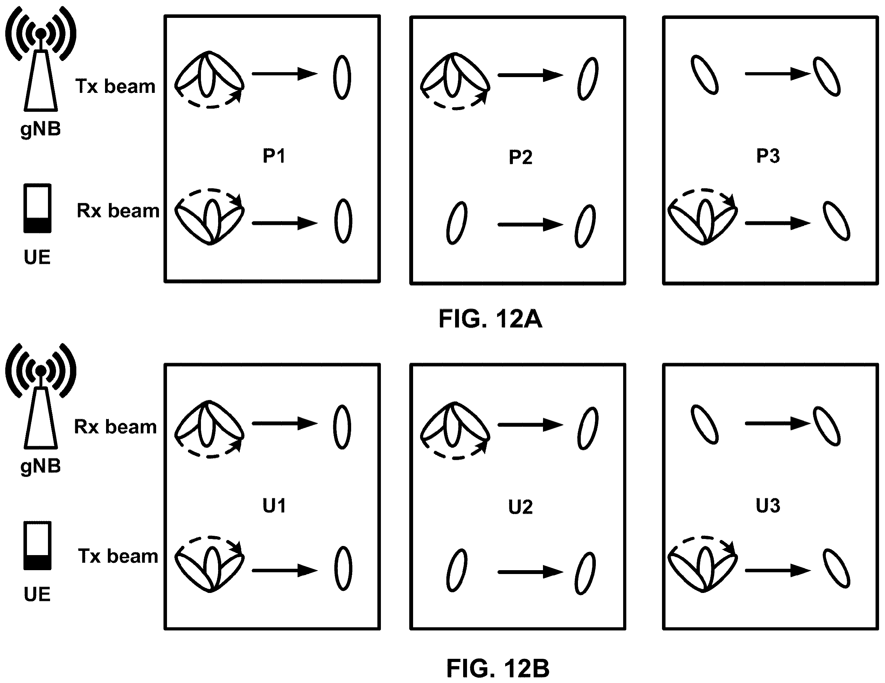

FIG. 12A illustrates examples of three downlink beam management procedures: P1, P2, and P3. Procedure P1 may enable a UE measurement on transmit (Tx) beams of a transmission reception point (TRP) (or multiple TRPs), e.g., to support a selection of one or more base station Tx beams and/or UE Rx beams (shown as ovals in the top row and bottom row, respectively, of P1). Beamforming at a TRP may comprise a Tx beam sweep for a set of beams (shown, in the top rows of P1 and P2, as ovals rotated in a counterclockwise direction indicated by the dashed arrow). Beamforming at a UE may comprise an Rx beam sweep for a set of beams (shown, in the bottom rows of P1 and P3, as ovals rotated in a clockwise direction indicated by the dashed arrow). Procedure P2 may be used to enable a UE measurement on Tx beams of a TRP (shown, in the top row of P2, as ovals rotated in a counterclockwise direction indicated by the dashed arrow). The UE and/or the base station may perform procedure P2 using a smaller set of beams than is used in procedure P1, or using narrower beams than the beams used in procedure P1. This may be referred to as beam refinement. The UE may perform procedure P3 for Rx beam determination by using the same Tx beam at the base station and sweeping an Rx beam at the UE.

FIG. 12B illustrates examples of three uplink beam management procedures: U1, U2, and U3. Procedure U1 may be used to enable a base station to perform a measurement on Tx beams of a UE, e.g., to support a selection of one or more UE Tx beams and/or base station Rx beams (shown as ovals in the top row and bottom row, respectively, of U1). Beamforming at the UE may include, e.g., a Tx beam sweep from a set of beams (shown in the bottom rows of U1 and U3 as ovals rotated in a clockwise direction indicated by the dashed arrow). Beamforming at the base station may include, e.g., an Rx beam sweep from a set of beams (shown, in the top rows of U1 and U2, as ovals rotated in a counterclockwise direction indicated by the dashed arrow). Procedure U2 may be used to enable the base station to adjust its Rx beam when the UE uses a fixed Tx beam. The UE and/or the base station may perform procedure U2 using a smaller set of beams than is used in procedure P1, or using narrower beams than the beams used in procedure P1. This may be referred to as beam refinement The UE may perform procedure U3 to adjust its Tx beam when the base station uses a fixed Rx beam.

A UE may initiate a beam failure recovery (BFR) procedure based on detecting a beam failure. The UE may transmit a BFR request (e.g., a preamble, a UCI, an SR, a MAC CE, and/or the like) based on the initiating of the BFR procedure. The UE may detect the beam failure based on a determination that a quality of beam pair link(s) of an associated control channel is unsatisfactory (e.g., having an error rate higher than an error rate threshold, a received signal power lower than a received signal power threshold, an expiration of a timer, and/or the like).

The UE may measure a quality of a beam pair link using one or more reference signals (RSs) comprising one or more SS/PBCH blocks, one or more CSI-RS resources, and/or one or more demodulation reference signals (DMRSs). A quality of the beam pair link may be based on one or more of a block error rate (BLER), an RSRP value, a signal to interference plus noise ratio (SINR) value, a reference signal received quality (RSRQ) value, and/or a CSI value measured on RS resources. The base station may indicate that an RS resource is quasi co-located (QCLed) with one or more DM-RSs of a channel (e.g., a control channel, a shared data channel, and/or the like). The RS resource and the one or more DMRSs of the channel may be QCLed when the channel characteristics (e.g., Doppler shift, Doppler spread, average delay, delay spread, spatial Rx parameter, fading, and/or the like) from a transmission via the RS resource to the UE are similar or the same as the channel characteristics from a transmission via the channel to the UE.

A network (e.g., a gNB and/or an ng-eNB of a network) and/or the UE may initiate a random access procedure. A UE in an RRC_IDLE state and/or an RRC_INACTIVE state may initiate the random access procedure to request a connection setup to a network. The UE may initiate the random access procedure from an RRC_CONNECTED state. The UE may initiate the random access procedure to request uplink resources (e.g., for uplink transmission of an SR when there is no PUCCH resource available) and/or acquire uplink timing (e.g., when uplink synchronization status is non-synchronized). The UE may initiate the random access procedure to request one or more system information blocks (SIBs) (e.g., other system information such as SIB2, SIB3, and/or the like). The UE may initiate the random access procedure for a beam failure recovery request. A network may initiate a random access procedure for a handover and/or for establishing time alignment for an SCell addition.

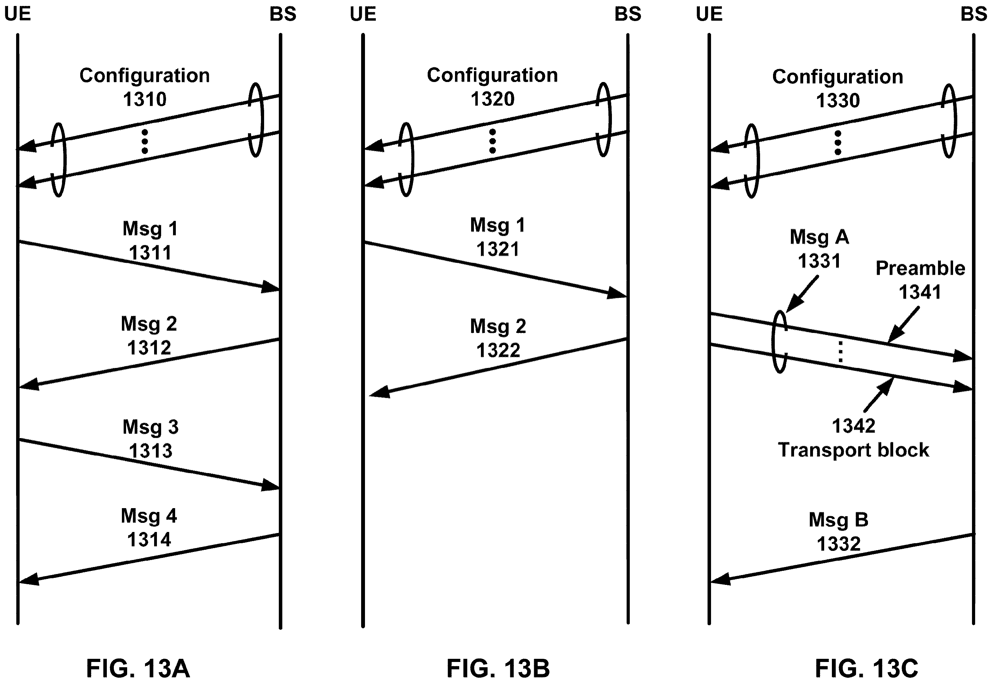

FIG. 13A illustrates a four-step contention-based random access procedure. Prior to initiation of the procedure, a base station may transmit a configuration message 1310 to the UE. The procedure illustrated in FIG. 13A comprises transmission of four messages: a Msg 1 1311, a Msg 2 1312, a Msg 3 1313, and a Msg 4 1314. The Msg 1 1311 may include and/or be referred to as a preamble (or a random access preamble). The Msg 2 1312 may include and/or be referred to as a random access response (RAR).

The configuration message 1310 may be transmitted, for example, using one or more RRC messages. The one or more RRC messages may indicate one or more random access channel (RACH) parameters to the UE. The one or more RACH parameters may comprise at least one of following: general parameters for one or more random access procedures (e.g., *RACH-configGeneral*); cell-specific parameters (e.g., *RACH-ConfigCommon*); and/or dedicated parameters (e.g., *RACH-configDedicated*). The base station may broadcast or multicast the one or more RRC messages to one or more UEs. The one or more RRC messages may be UE-specific (e.g., dedicated RRC messages transmitted to a UE in an RRC_CONNECTED state and/or in an RRC_INACTIVE state). The UE may determine, based on the one or more RACH parameters, a time-frequency resource and/or an uplink transmit power for transmission of the Msg 1 1311 and/or the Msg 3 1313. Based on the one or more RACH parameters, the UE may determine a reception timing and a downlink channel for receiving the Msg 2 1312 and the Msg 4 1314.

The one or more RACH parameters provided in the configuration message 1310 may indicate one or more Physical RACH (PRACH) occasions available for transmission of the Msg 1 1311. The one or more PRACH occasions may be predefined. The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. For example, the one or more RACH parameters may indicate a number of SS/PBCH blocks mapped to a PRACH occasion and/or a number of preambles mapped to a SS/PBCH blocks.

The one or more RACH parameters provided in the configuration message 1310 may be used to determine an uplink transmit power of Msg 1 1311 and/or Msg 3 1313. For example, the one or more RACH parameters may indicate a reference power for a preamble transmission (e.g., a received target power and/or an initial power of the preamble transmission). There may be one or more power offsets indicated by the one or more RACH parameters. For example, the one or more RACH parameters may indicate: a power ramping step; a power offset between SSB and CSI-RS; a power offset between transmissions of the Msg 1 1311 and the Msg 3 1313; and/or a power offset value between preamble groups. The one or more RACH parameters may indicate one or more thresholds based on which the UE may determine at least one reference signal (e.g., an SSB and/or CSI-RS) and/or an uplink carrier (e.g., a normal uplink (NUL) carrier and/or a supplemental uplink (SUL) carrier).

The Msg 1 1311 may include one or more preamble transmissions (e.g., a preamble transmission and one or more preamble retransmissions). An RRC message may be used to configure one or more preamble groups (e.g., group A and/or group B). A preamble group may comprise one or more preambles. The UE may determine the preamble group based on a pathloss measurement and/or a size of the Msg 3 1313. The UE may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The UE may select at least one preamble associated with the one or more reference signals and/or a selected preamble group, for example, if the association between the one or more preambles and the at least one reference signal is configured by an RRC message.

The UE may determine the preamble based on the one or more RACH parameters provided in the configuration message 1310. For example, the UE may determine the preamble based on a pathloss measurement, an RSRP measurement, and/or a size of the Msg 3 1313. As another example, the one or more RACH parameters may indicate: a preamble format; a maximum number of preamble transmissions; and/or one or more thresholds for determining one or more preamble groups (e.g., group A and group B). A base station may use the one or more RACH parameters to configure the UE with an association between one or more preambles and one or more reference signals (e.g., SSBs and/or CSI-RSs). If the association is configured, the UE may determine the preamble to include in Msg 1 1311 based on the association. The Msg 1 1311 may be transmitted to the base station via one or more PRACH occasions. The UE may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList*) may indicate an association between the PRACH occasions and the one or more reference signals.

The UE may perform a preamble retransmission if no response is received following a preamble transmission. The UE may increase an uplink transmit power for the preamble retransmission. The UE may select an initial preamble transmit power based on a pathloss measurement and/or a target received preamble power configured by the network. The UE may determine to retransmit a preamble and may ramp up the uplink transmit power. The UE may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The UE may ramp up the uplink transmit power if the UE determines a reference signal (e.g., SSB and/or CSI-RS) that is the same as a previous preamble transmission. The UE may count a number of preamble transmissions and/or retransmissions (e.g., *PREAMBLE_TRANSMISSION_COUNTER*). The UE may determine that a random access procedure completed unsuccessfully, for example, if the number of preamble transmissions exceeds a threshold configured by the one or more RACH parameters (e.g., *preamble TransMax).*

The Msg 2 1312 received by the UE may include an RAR. In some scenarios, the Msg 2 1312 may include multiple RARs corresponding to multiple UEs. The Msg 2 1312 may be received after or in response to the transmitting of the Msg 1 1311. The Msg 2 1312 may be scheduled on the DL-SCH and indicated on a PDCCH using a random access RNTI (RA-RNTI). The Msg 2 1312 may indicate that the Msg 1 1311 was received by the base station. The Msg 2 1312 may include a time-alignment command that may be used by the UE to adjust the UE's transmission timing, a scheduling grant for transmission of the Msg 3 1313, and/or a Temporary Cell RNTI (TC-RNTI). After transmitting a preamble, the UE may start a time window (e.g., *ra-ResponseWindow*) to monitor a PDCCH for the Msg 2 1312. The UE may determine when to start the time window based on a PRACH occasion that the UE uses to transmit the preamble. For example, the UE may start the time window one or more symbols after a last symbol of the preamble (e.g., at a first PDCCH occasion from an end of a preamble transmission). The one or more symbols may be determined based on a numerology. The PDCCH may be in a common search space (e.g., a Type1-PDCCH common search space) configured by an RRC message. The UE may identify the RAR based on a Radio Network Temporary Identifier (RNTI). RNTIs may be used depending on one or more events initiating the random access procedure. The UE may use random access RNTI (RA-RNTI). The RA-RNTI may be associated with PRACH occasions in which the UE transmits a preamble. For example, the UE may determine the RA-RNTI based on: an OFDM symbol index; a slot index; a frequency domain index; and/or a UL carrier indicator of the PRACH occasions. An example of RA-RNTI may be as follows:

RA-RNTI= 1 + s_id + 14 × t_id + 14 × 80 × f_id + 14 × 80 × 8 × ul_carrier_id, where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The UE may transmit the Msg 3 1313 in response to a successful reception of the Msg 2 1312 (e.g., using resources identified in the Msg 2 1312). The Msg 3 1313 may be used for contention resolution in, for example, the contention-based random access procedure illustrated in FIG. 13A. In some scenarios, a plurality of UEs may transmit a same preamble to a base station and the base station may provide an RAR that corresponds to a UE. Collisions may occur if the plurality of UEs interpret the RAR as corresponding to themselves. Contention resolution (e.g., using the Msg 3 1313 and the Msg 4 1314) may be used to increase the likelihood that the UE does not incorrectly use an identity of another the UE. To perform contention resolution, the UE may include a device identifier in the Msg 3 1313 (e.g., a C-RNTI if assigned, a TC-RNTI included in the Msg 2 1312, and/or any other suitable identifier).

The Msg 4 1314 may be received after or in response to the transmitting of the Msg 3 1313. If a C-RNTI was included in the Msg 3 1313, the base station will address the UE on the PDCCH using the C-RNTI. If the UE's unique C-RNTI is detected on the PDCCH, the random access procedure is determined to be successfully completed. If a TC-RNTI is included in the Msg 3 1313 (e.g., if the UE is in an RRC_IDLE state or not otherwise connected to the base station), Msg 4 1314 will be received using a DL-SCH associated with the TC-RNTI. If a MAC PDU is successfully decoded and a MAC PDU comprises the UE contention resolution identity MAC CE that matches or otherwise corresponds with the CCCH SDU sent (e.g., transmitted) in Msg 3 1313, the UE may determine that the contention resolution is successful and/or the UE may determine that the random access procedure is successfully completed.

The UE may be configured with a supplementary uplink (SUL) carrier and a normal uplink (NUL) carrier. An initial access (e.g., random access procedure) may be supported in an uplink carrier. For example, a base station may configure the UE with two separate RACH configurations: one for an SUL carrier and the other for an NUL carrier. For random access in a cell configured with an SUL carrier, the network may indicate which carrier to use (NUL or SUL). The UE may determine the SUL carrier, for example, if a measured quality of one or more reference signals is lower than a broadcast threshold. Uplink transmissions of the random access procedure (e.g., the Msg 1 1311 and/or the Msg 3 1313) may remain on the selected carrier. The UE may switch an uplink carrier during the random access procedure (e.g., between the Msg 1 1311 and the Msg 3 1313) in one or more cases. For example, the UE may determine and/or switch an uplink carrier for the Msg 1 1311 and/or the Msg 3 1313 based on a channel clear assessment (e.g., a listen-before-talk).

FIG. 13B illustrates a two-step contention-free random access procedure. Similar to the four-step contention-based random access procedure illustrated in FIG. 13A, a base station may, prior to initiation of the procedure, transmit a configuration message 1320 to the UE. The configuration message 1320 may be analogous in some respects to the configuration message 1310. The procedure illustrated in FIG. 13B comprises transmission of two messages: a Msg 1 1321 and a Msg 2 1322. The Msg 1 1321 and the Msg 2 1322 may be analogous in some respects to the Msg 1 1311 and a Msg 2 1312 illustrated in FIG. 13A, respectively. As will be understood from FIGS. 13A and 13B, the contention-free random access procedure may not include messages analogous to the Msg 3 1313 and/or the Msg 4 1314.

The contention-free random access procedure illustrated in FIG. 13B may be initiated for a beam failure recovery, other SI request, SCell addition, and/or handover. For example, a base station may indicate or assign to the UE the preamble to be used for the Msg 1 1321. The UE may receive, from the base station via PDCCH and/or RRC, an indication of a preamble (e.g., *ra-PreambleIndex*).

After transmitting a preamble, the UE may start a time window (e.g., *ra-ResponseWindow*) to monitor a PDCCH for the RAR. In the event of a beam failure recovery request, the base station may configure the UE with a separate time window and/or a separate PDCCH in a search space indicated by an RRC message (e.g., *recoverySearchSpaceId*). The UE may monitor for a PDCCH transmission addressed to a Cell RNTI (C-RNTI) on the search space. In the contention-free random access procedure illustrated in FIG. 13B, the UE may determine that a random access procedure successfully completes after or in response to transmission of Msg 1 1321 and reception of a corresponding Msg 2 1322. The UE may determine that a random access procedure successfully completes, for example, if a PDCCH transmission is addressed to a C-RNTI. The UE may determine that a random access procedure successfully completes, for example, if the UE receives an RAR comprising a preamble identifier corresponding to a preamble transmitted by the UE and/or the RAR comprises a MAC sub-PDU with the preamble identifier. The UE may determine the response as an indication of an acknowledgement for an SI request.

FIG. 13C illustrates another two-step random access procedure. Similar to the random access procedures illustrated in FIGS. 13A and 13B, a base station may, prior to initiation of the procedure, transmit a configuration message 1330 to the UE. The configuration message 1330 may be analogous in some respects to the configuration message 1310 and/or the configuration message 1320. The procedure illustrated in FIG. 13C comprises transmission of two messages: a Msg A 1331 and a Msg B 1332.

Msg A 1331 may be transmitted in an uplink transmission by the UE. Msg A 1331 may comprise one or more transmissions of a preamble 1341 and/or one or more transmissions of a transport block 1342. The transport block 1342 may comprise contents that are similar and/or equivalent to the contents of the Msg 3 1313 illustrated in FIG. 13A. The transport block 1342 may comprise UCI (e.g., an SR, a HARQ ACK/NACK, and/or the like). The UE may receive the Msg B 1332 after or in response to transmitting the Msg A 1331. The Msg B 1332 may comprise contents that are similar and/or equivalent to the contents of the Msg 2 1312 (e.g., an RAR) illustrated in FIGS. 13A and 13B and/or the Msg 4 1314 illustrated in FIG. 13A.

The UE may initiate the two-step random access procedure in FIG. 13C for licensed spectrum and/or unlicensed spectrum. The UE may determine, based on one or more factors, whether to initiate the two-step random access procedure. The one or more factors may be: a radio access technology in use (e.g., LTE, NR, and/or the like); whether the UE has valid TA or not; a cell size; the UE's RRC state; a type of spectrum (e.g., licensed vs. unlicensed); and/or any other suitable factors.

The UE may determine, based on two-step RACH parameters included in the configuration message 1330, a radio resource and/or an uplink transmit power for the preamble 1341 and/or the transport block 1342 included in the Msg A 1331. The RACH parameters may indicate a modulation and coding schemes (MCS), a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the UE to determine a reception timing and a downlink channel for monitoring for and/or receiving Msg B 1332.

The transport block 1342 may comprise data (e.g., delay-sensitive data), an identifier of the UE, security information, and/or device information (e.g., an International Mobile Subscriber Identity (IMSI)). The base station may transmit the Msg B 1332 as a response to the Msg A 1331. The Msg B 1332 may comprise at least one of following: a preamble identifier; a timing advance command; a power control command; an uplink grant (e.g., a radio resource assignment and/or an MCS); a UE identifier for contention resolution; and/or an RNTI (e.g., a C-RNTI or a TC-RNTI). The UE may determine that the two-step random access procedure is successfully completed if: a preamble identifier in the Msg B 1332 is matched to a preamble transmitted by the UE; and/or the identifier of the UE in Msg B 1332 is matched to the identifier of the UE in the Msg A 1331 (e.g., the transport block 1342).

A UE and a base station may exchange control signaling. The control signaling may be referred to as L1/L2 control signaling and may originate from the PHY layer (e.g., layer 1) and/or the MAC layer (e.g., layer 2). The control signaling may comprise downlink control signaling transmitted from the base station to the UE and/or uplink control signaling transmitted from the UE to the base station.

The downlink control signaling may comprise: a downlink scheduling assignment; an uplink scheduling grant indicating uplink radio resources and/or a transport format; a slot format information; a preemption indication; a power control command; and/or any other suitable signaling. The UE may receive the downlink control signaling in a payload transmitted by the base station on a physical downlink control channel (PDCCH). The payload transmitted on the PDCCH may be referred to as downlink control information (DCI). In some scenarios, the PDCCH may be a group common PDCCH (GC-PDCCH) that is common to a group of UEs.

A base station may attach one or more cyclic redundancy check (CRC) parity bits to a DCI in order to facilitate detection of transmission errors. When the DCI is intended for a UE (or a group of the UEs), the base station may scramble the CRC parity bits with an identifier of the UE (or an identifier of the group of the UEs). Scrambling the CRC parity bits with the identifier may comprise Modulo-2 addition (or an exclusive OR operation) of the identifier value and the CRC parity bits. The identifier may comprise a 16-bit value of a radio network temporary identifier (RNTI).

DCls may be used for different purposes. A purpose may be indicated by the type of RNTI used to scramble the CRC parity bits. For example, a DCI having CRC parity bits scrambled with a paging RNTI (P-RNTI) may indicate paging information and/or a system information change notification. The P-RNTI may be predefined as "FFFE" in hexadecimal. A DCI having CRC parity bits scrambled with a system information RNTI (SI-RNTI) may indicate a broadcast transmission of the system information. The SI-RNTI may be predefined as "FFFF" in hexadecimal. A DCI having CRC parity bits scrambled with a random access RNTI (RA-RNTI) may indicate a random access response (RAR). A DCI having CRC parity bits scrambled with a cell RNTI (C-RNTI) may indicate a dynamically scheduled unicast transmission and/or a triggering of PDCCH-ordered random access. A DCI having CRC parity bits scrambled with a temporary cell RNTI (TC-RNTI) may indicate a contention resolution (e.g., a Msg 3 analogous to the Msg 3 1313 illustrated in FIG. 13A). Other RNTIs configured to the UE by a base station may comprise a Configured Scheduling RNTI (CS-RNTI), a Transmit Power Control-PUCCH RNTI (TPC-PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C-RNTI), and/or the like.

Depending on the purpose and/or content of a DCI, the base station may transmit the DCls with one or more DCI formats. For example, DCI format 0_0 may be used for scheduling of PUSCH in a cell. DCI format 0_0 may be a fallback DCI format (e.g., with compact DCI payloads). DCI format 0_1 may be used for scheduling of PUSCH in a cell (e.g., with more DCI payloads than DCI format 0_0). DCI format 1_0 may be used for scheduling of PDSCH in a cell. DCI format 1_0 may be a fallback DCI format (e.g., with compact DCI payloads). DCI format 1_1 may be used for scheduling of PDSCH in a cell (e.g., with more DCI payloads than DCI format 1_0). DCI format 2_0 may be used for providing a slot format indication to a group of UEs. DCI format 2_1 may be used for notifying a group of UEs of a physical resource block and/or OFDM symbol where the UE may assume no transmission is intended to the UE. DCI format 2_2 may be used for transmission of a transmit power control (TPC) command for PUCCH or PUSCH. DCI format 2_3 may be used for transmission of a group of TPC commands for SRS transmissions by one or more UEs. DCI format(s) for new functions may be defined in future releases. DCI formats may have different DCI sizes, or may share the same DCI size.

After scrambling a DCI with a RNTI, the base station may process the DCI with channel coding (e.g., polar coding), rate matching, scrambling and/or QPSK modulation. A base station may map the coded and modulated DCI on resource elements used and/or configured for a PDCCH. Based on a payload size of the DCI and/or a coverage of the base station, the base station may transmit the DCI via a PDCCH occupying a number of contiguous control channel elements (CCEs). The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

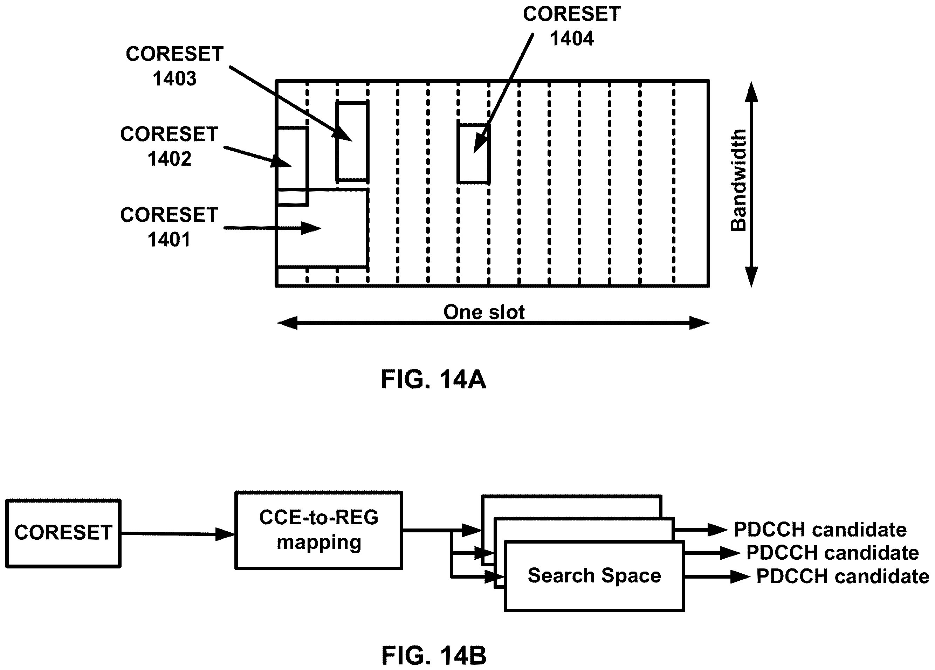

FIG. 14A illustrates an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 14A, a first CORESET 1401 and a second CORESET 1402 occur at the first symbol in a slot. The first CORESET 1401 overlaps with the second CORESET 1402 in the frequency domain. A third CORESET 1403 occurs at a third symbol in the slot. A fourth CORESET 1404 occurs at the seventh symbol in the slot. CORESETs may have a different number of resource blocks in frequency domain.

FIG. 14B illustrates an example of a CCE-to-REG mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI).

As shown in FIG. 14B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCls. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received DL-SCH transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a number (e.g., a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. Based on the PUCCH resource indicator, the UE may transmit the UCI (HARQ-ACK, CSI and/or SR) using a PUCCH resource indicated by the PUCCH resource indicator in the DCI.

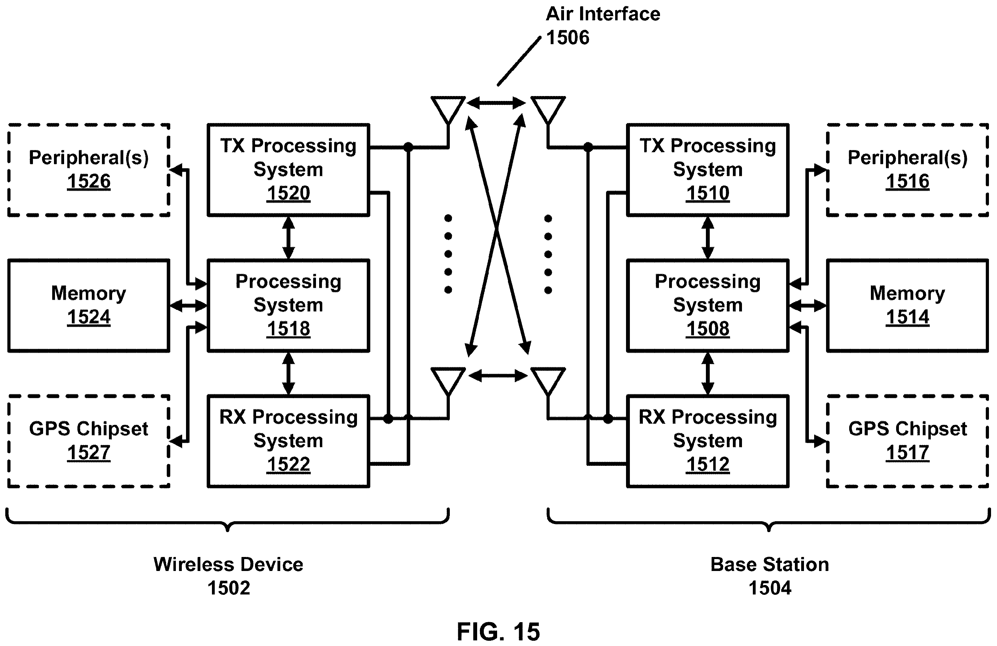

FIG. 15 illustrates an example of a wireless device 1502 in communication with a base station 1504 in accordance with embodiments of the present disclosure. The wireless device 1502 and base station 1504 may be part of a mobile communication network, such as the mobile communication network 100 illustrated in FIG. 1A, the mobile communication network 150 illustrated in FIG. 1B, or any other communication network. Only one wireless device 1502 and one base station 1504 are illustrated in FIG. 15, but it will be understood that a mobile communication network may include more than one UE and/or more than one base station, with the same or similar configuration as those shown in FIG. 15.

The base station 1504 may connect the wireless device 1502 to a core network (not shown) through radio communications over the air interface (or radio interface) 1506. The communication direction from the base station 1504 to the wireless device 1502 over the air interface 1506 is known as the downlink, and the communication direction from the wireless device 1502 to the base station 1504 over the air interface is known as the uplink. Downlink transmissions may be separated from uplink transmissions using FDD, TDD, and/or some combination of the two duplexing techniques.

In the downlink, data to be sent to the wireless device 1502 from the base station 1504 may be provided to the processing system 1508 of the base station 1504. The data may be provided to the processing system 1508 by, for example, a core network. In the uplink, data to be sent to the base station 1504 from the wireless device 1502 may be provided to the processing system 1518 of the wireless device 1502. The processing system 1508 and the processing system 1518 may implement layer 3 and layer 2 OSI functionality to process the data for transmission. Layer 2 may include an SDAP layer, a PDCP layer, an RLC layer, and a MAC layer, for example, with respect to FIG. 2A, FIG. 2B, FIG. 3, and FIG. 4A. Layer 3 may include an RRC layer as with respect to FIG. 2B.

After being processed by processing system 1508, the data to be sent to the wireless device 1502 may be provided to a transmission processing system 1510 of base station 1504. Similarly, after being processed by the processing system 1518, the data to be sent to base station 1504 may be provided to a transmission processing system 1520 of the wireless device 1502. The transmission processing system 1510 and the transmission processing system 1520 may implement layer 1 OSI functionality. Layer 1 may include a PHY layer with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 1504, a reception processing system 1512 may receive the uplink transmission from the wireless device 1502. At the wireless device 1502, a reception processing system 1522 may receive the downlink transmission from base station 1504. The reception processing system 1512 and the reception processing system 1522 may implement layer 1 OSI functionality. Layer 1 may include a PHY layer with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 15, a wireless device 1502 and the base station 1504 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518 to carry out one or more of the functionalities discussed in the present application. Although not shown in FIG. 15, the transmission processing system 1510, the transmission processing system 1520, the reception processing system 1512, and/or the reception processing system 1522 may be coupled to a memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and the base station 1504 to operate in a wireless environment.

The processing system 1508 and/or the processing system 1518 may be connected to one or more peripherals 1516 and one or more peripherals 1526, respectively. The one or more peripherals 1516 and the one or more peripherals 1526 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive user input data from and/or provide user output data to the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 and/or the processing system 1518 may be connected to a GPS chipset 1517 and a GPS chipset 1527, respectively. The GPS chipset 1517 and the GPS chipset 1527 may be configured to provide geographic location information of the wireless device 1502 and the base station 1504, respectively.

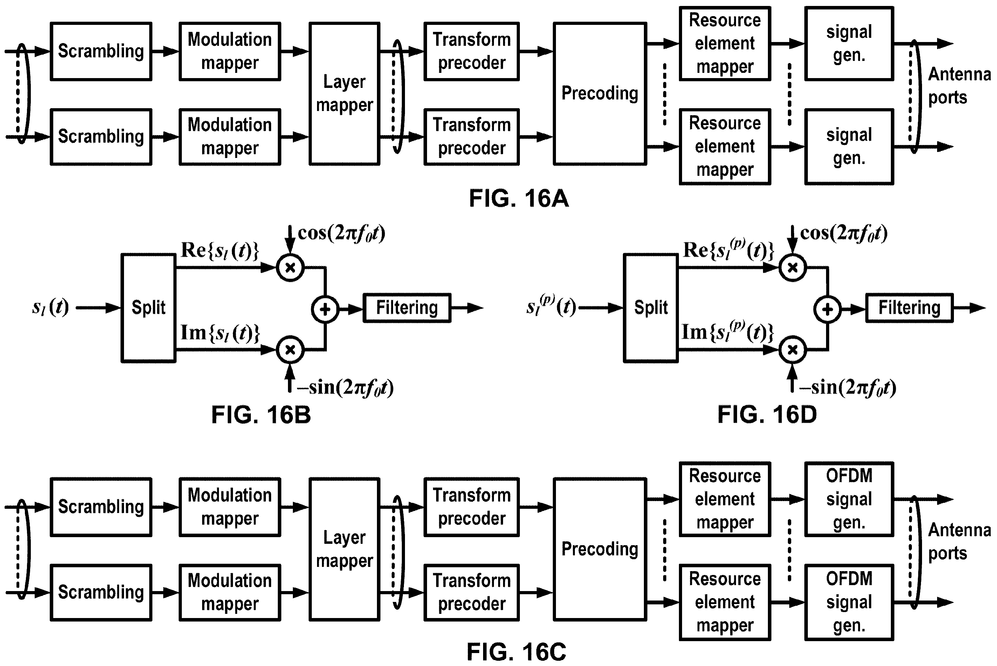

FIG. 16A illustrates an example structure for uplink transmission. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, a CP-OFDM signal for uplink transmission may be generated by FIG. 16A. These functions are illustrated as examples and it is anticipated that other mechanisms may be implemented in various embodiments.

FIG. 16B illustrates an example structure for modulation and up-conversion of a baseband signal to a carrier frequency. The baseband signal may be a complex-valued SC-FDMA or CP-OFDM baseband signal for an antenna port and/or a complex-valued Physical Random Access Channel (PRACH) baseband signal. Filtering may be employed prior to transmission.

FIG. 16C illustrates an example structure for downlink transmissions. A baseband signal representing a physical downlink channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

FIG. 16D illustrates another example structure for modulation and up-conversion of a baseband signal to a carrier frequency. The baseband signal may be a complex-valued OFDM baseband signal for an antenna port. Filtering may be employed prior to transmission.

A wireless device may receive from a base station one or more messages (e.g., RRC messages) comprising configuration parameters of a plurality of cells (e.g., primary cell, secondary cell). The wireless device may communicate with at least one base station (e.g., two or more base stations in dual connectivity) via the plurality of cells. The one or more messages (e.g., as a part of the configuration parameters) may comprise parameters of physical, MAC, RLC, PCDP, SDAP, RRC layers for configuring the wireless device. For example, the configuration parameters may comprise parameters for configuring physical and MAC layer channels, bearers, etc. For example, the configuration parameters may comprise parameters indicating values of timers for physical, MAC, RLC, PCDP, SDAP, RRC layers, and/or communication channels.

A timer may begin running once it is started and continue running until it is stopped or until it expires. A timer may be started if it is not running or restarted if it is running. A timer may be associated with a value (e.g., the timer may be started or restarted from a value or may be started from zero and expire once it reaches the value). The duration of a timer may not be updated until the timer is stopped or expires (e.g., due to BWP switching). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a random access response window timer may be used for measuring a window of time for receiving a random access response. In an example, instead of starting and expiry (or expiration) of a random access response window timer, the time difference between two time stamps may be used. When a timer is restarted, a process for measurement of time window may be restarted. Other example implementations may be provided to restart a measurement of a time window.

A base station may support subband full duplex (SBFD) in a cell. The SBFD (or an SBFD configuration or SBFD parameters) may include one or more uplink subbands and one or more downlink subbands.

A downlink subband may comprise one or more frequency resources, e.g., one or more resource blocks (RBs). An uplink subband may comprise one or more frequency resources, e.g., one or more resource blocks (RBs), one or more subcarriers, etc. A resource block (RB) may also be referred to as a physical resource block (PRB) or a virtual resource block (VRB). In another example, the PRB may also be referred to as the RB or the VRB. The one or more frequency resources comprised in the downlink subband may also be referred to as downlink frequency resources (e.g., DL RBs or DL PRBs, etc.). The one or more frequency resources comprised in the uplink subband may also be referred to as uplink frequency resources (e.g., UL RBs or UL PRBs, etc.).

In an example, one or more uplink subbands and one or more downlink subbands may be comprised in an SBFD time resource, e.g., an SBFD symbol, an SBFD slot, an SBFD subframe, etc. In an example, the one or more uplink subbands, the one or more downlink subbands, and/or one or more SBFD time resources may be referred to as an SBFD resource. In another example, frequency resources in the one or more uplink subbands and frequency resources in the one or more downlink subbands may also be referred to as an SBFD resource.

At least during the same SBFD symbol, no frequency resource among frequency resources in an uplink subband may overlap with any frequency resource among frequency resources in a downlink subband. At least during the same SBFD symbol, no frequency resource among frequency resources in a downlink subband may overlap with any frequency resource among frequency resources in an uplink subband.

The SBFD (or an SBFD configuration or SBFD parameters) may include one or more SBFD time resources (e.g., one or more SBFD symbols) during a time period. The time period comprising the one or more SBFD time resources may also be referred to as an SBFD time period, a time period of the SBFD, or a periodicity of the SBFD. During the same SBFD symbol, a base station may simultaneously (e.g., at the same time) transmit a downlink signal in a downlink subband and receive an uplink signal in an uplink subband.

A base station may perform (or apply or execute) an SBFD operation in a cell based on the SBFD (or an SBFD configuration, or SBFD parameters). For example, the SBFD operation may be associated with a cell (e.g., a cell associated with or identified by a cell ID). The SBFD operation may also be referred to as an SBFD mode, an SBFD scheme, an SBFD technique, an SBFD procedure, or a subband nonoverlapping full duplex operation. At the same time in the SBFD operation, the base station may simultaneously (e.g., at the same time) transmit a downlink (DL) signal on a DL subband and receive an uplink (UL) signal on an UL subband. For example, in the same SBFD symbol in the SBFD operation, the base station may simultaneously (e.g., at the same time) transmit a DL signal on a DL subband and receive an UL signal on an UL subband.

In an example, in the SBFD operation, the DL signal on the DL subband and the UL signal on the UL subband may be associated with (or related to) different wireless devices, e.g., the DL signal may be associated with a first wireless device and the UL signal may be associated with a second wireless device. In another example, in the SBFD operation, the DL signal on the DL subband and the UL signal on the UL subband may be associated with (or related to) the same wireless device.

A wireless device may transmit and/or receive a signal (e.g., a reference signal, a channel, etc.) in a cell. The cell may be associated with a base station. The cell may be a serving cell or a non-serving cell of the wireless device. The serving cell may also be referred to as a special cell (spCell), a primary cell (PCell), a secondary cell (SCell), or a primary secondary cell (PSCell). The PCell or the PSCell may also be referred to as the spCell. The non-serving cell may also be referred to as a neighboring cell or a neighbor cell. The cell may be identified by an identifier e.g., a cell identifier. In an example, the cell identifier may be referred to as a physical cell identifier (PCI) or a cell global identifier (CGI). In example, the CGI may be a unique identifier of a cell. For example, a CGI associated with a cell may uniquely (or globally) identify the cell. The PCI and the CGI may also be referred to as a next generation radio PCI (NR PCI) and an NR CGI respectively.

In an example, a wireless device may transmit a signal (e.g., an uplink signal) in an uplink subband during an SBFD symbol. In another example, a wireless device may receive a signal (e.g., a downlink signal) in a downlink subband during an SBFD symbol.

In an example, the signal (e.g., a downlink signal and/or an uplink signal) may be a physical signal. For example, a physical signal may not include higher layer information (e.g., user and/or control data). An example of a physical signal is a reference signal. In another example, a signal may be referred to as a channel. For example, a channel may include (or carry) higher layer information (e.g., user and/or control data). A channel may be a data channel and/or a control channel. A channel may be an uplink channel and/or a downlink channel.

In an example, an uplink channel may also be referred to as an uplink physical channel. In an example, the downlink channel may also be referred to as a downlink physical channel. In an example, a downlink physical channel (or a downlink channel) may be a Physical Downlink Shared Channel (PDSCH), a Physical Downlink Control Channel (PDCCH), a Physical Broadcast Channel (PBCH), etc. In an example, an uplink physical channel (or an uplink channel) may be a Physical Uplink Shared Channel (PUSCH), a Physical Uplink Control Channel (PUCCH), a Physical Random Access Channel (PRACH), etc.

In an example, the reference signal may be a downlink reference signal, e.g., transmitted by a base station. For example, the reference signal may be transmitted in one or more cells, e.g., in a serving cell and one or more neighbor cells of the wireless device. The one or more cells may be operated, managed, or served by one or more network nodes, e.g., one or more base stations.

Examples of the downlink reference signals may be a synchronization signal/physical broadcast channel block (SSB), a CSI-RS, a positioning reference signal (PRS), a radio link monitoring reference signal (RLM-RS) (e.g., a SSB, a CSI-RS, etc), a tracking reference signal (TRS), a demodulation reference signal (DMRS), a SS/PBCH Block Measurement Timing Configuration (SMTC), etc. Each SSB may include a primary synchronization signal (PSS), a secondary synchronization signal (SSS) and a physical broadcast channel (PBCH) within 4 successive symbols. The SSB may be transmitted periodically. For example, the SSB may occur with a periodicity, e.g., every 5 ms, 10 ms, 20 ms, 40 ms, 80 ms, 160 ms, etc.

The SMTC configuration may be associated with one or more SMTC parameters, e.g. a SMTC index or identifier, a SMTC duration or window, a SMTC periodicity, a SMTC time offset, etc. One or multiple SSBs are comprised within a SMTC duration. For example, the SMTC occasion may occur with a periodicity, e.g., every 5 ms, 10 ms, 20 ms, 40 ms, 80 ms, 160 ms, etc.

In another example, the reference signal may be an uplink reference signal, e.g., transmitted by the wireless device. Examples of the uplink reference signal may be a sounding reference signal (SRS), a demodulation reference signal (DMRS), etc. For example, the wireless device may transmit the uplink reference signals (e.g., an SRS) in a serving cell of the wireless device.

A beam may be a reference signal (e.g., an SSB, a CSI-RS, a PRS, etc.) associated with a direction. The beam may also be referred to as a lobe. In an example, the beam may also be referred to as a receive beam (e.g., a beam received by a wireless device from a certain direction). In another example, the beam may also be referred to as a transmit beam (e.g., a beam transmitted by a base station towards a certain direction). A beam (e.g., an SSB) may cover (or serve) an area (e.g., a geographical area) within a cell. In an example, a cell may transmit between 1 and 64 beams, e.g., up to 64 SSBs. For example, a cell may transmit two beams e.g., a first SSB (SSB1) and a second SSB (SSB2). In an example, SSB1 may cover one part of the cell and SSB2 may cover another part of the cell.

In an example, the direction of a cell may be based on (or determined by or characterized by) an angle in an azimuth plane and/or an angle in a zenith plane. The azimuth plane may also be referred to as a horizontal plane. The zenith plane may also be referred to as an elevation plane or a vertical plane. The beam may be between the wireless device and a base station. The radio link and/or the beam may be related to a cell associated with the base station. The cell may be a serving cell such as a spCell, a PCell, a PSCell, or an SCell. The beam may also be referred to as a beam of a cell, a cell beam, or a serving cell beam, a spCell beam, a PCell beam, a PSCell beam, an SCell beam, etc.

In an example, a cell may be associated with a carrier frequency. The carrier frequency may be an uplink carrier frequency or a downlink carrier frequency. The carrier frequency may also be referred to as a carrier, a frequency, a component carrier (CC), a layer, a frequency layer, frequency channel, positioning frequency layer (PFL), a positioning reference signal (PRS) positioning frequency layer, or a DL PRS PFL, etc. The carrier frequency may belong to a frequency band. The frequency band may include one or multiple carrier frequencies. The number of the carrier frequencies within a frequency band may depend on a passband (e.g., length of the band in frequency domain) and/or a bandwidth of the carrier frequencies and/or a raster (e.g., a point in frequency where a carrier frequency may be centered, etc.).

In an example, information about (or associated with) the carrier frequency may be indicated by a channel number or an identifier. In example, the channel number or the identifier may be pre-defined. For example, the channel number may be an absolute radio frequency channel number (ARFCN). Examples of the ARFCN may be E-UTRA ARFCN (EARFCN), NR ARFCN (NR-ARFCN), etc. For example, a base station may transmit (e.g., in a broadcast channel) a channel number (e.g., an ARFCN, an NR-ARFCN, etc.) associated with a cell.

A reference signal transmitted in a cell may also be associated with the channel number, e.g., an ARFCN. For example, a carrier frequency associated with a CSI-RS may be indicated by a CSI-RS ARFCN, e.g., in a measurement configuration. In another example, a carrier frequency associated with an SSB may be indicated by an SSB ARFCN, e.g., in a measurement configuration. For example, the SSB ARFCN may indicate a frequency location within a bandwidth of an SSB. For example, the SSB may include 20 resource blocks enumerated from a resource block # 0 to a resource block # 19. In an example, the indicated frequency location (e.g., a SSB ARFCN) may correspond to a resource element # 0 within a resource block # 0 of the resource blocks of the SSB.

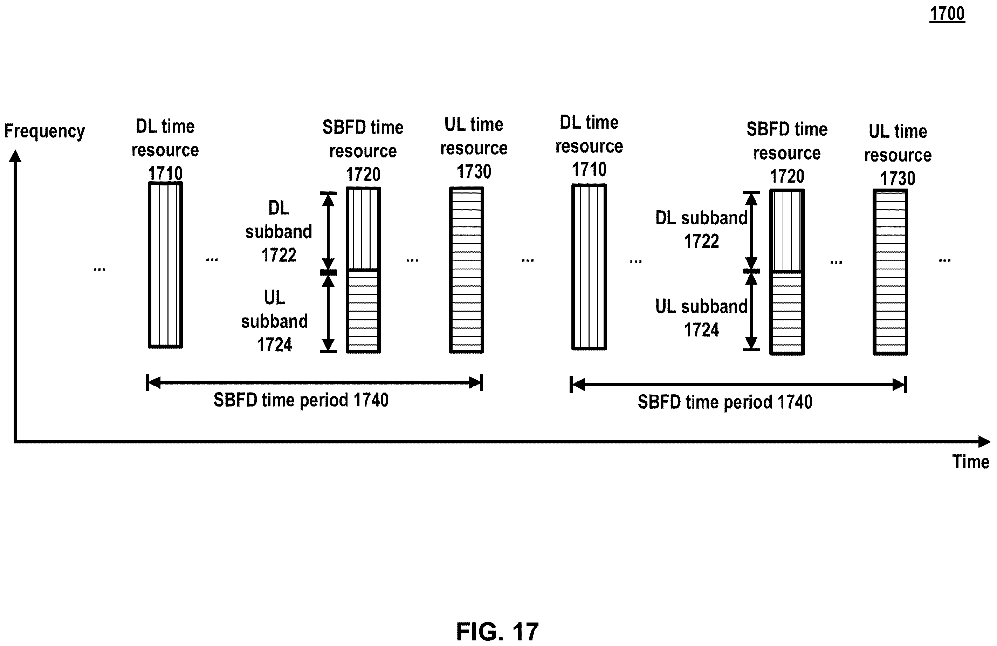

FIG. 17 illustrates an example of time-frequency resources 1700 per an aspect of the present disclosure. Time-frequency resources 1700 may be associated with a cell. A base station may serve, manage, or operate the cell.

In the example of FIG. 17, a time resource may be a downlink (DL) time resource 1710, a subband full duplex (SBFD) time resource 1720, or an uplink (UL) time resource 1730. In an example, an SBFD time period 1740 may include at least one SBFD time resource 1720. In another example, SBFD time period 1740 may include one or more DL time resources 1710 and one or more SBFD time resources 1720. In another example, SBFD time period 1740 may include one or more SBFD time resources 1720 and one or more UL time resources 1730. In another example, SBFD time period 1740 may include one or more DL time resources 1710, one or more SBFD time resources 1720, and one or more UL time resources 1730. In a frequency domain, SBFD time resource 1720 may include a DL subband 1722 and an UL subband 1724. In an example, in a frequency domain, SBFD time resource 1720 may include one or more DL subbands 1722 and one or more UL subbands 1724. DL time resource 1710 or UL time resource 1730 may also be referred to as a non-SBFD time resource.

In an example, an SBFD configuration may comprise (or indicate or include) DL subband 1722, UL subband 1724, SBFD time resource 1720, and/or SBFD time period 1740. The SBFD configuration may further comprise (or indicate or include) DL time resource 1710 and/or UL time resource 1730.

A base station may transmit a signal in DL time resource 1710. A wireless device may receive a signal in DL time resource 1710. A base station may receive a signal in UL time resource 1730. A wireless device may transmit a signal in UL time resource 1730. A base station may transmit a signal in DL subband 1722 (e.g., DL subband 1722 of SBFD time resource 1720). A wireless device may receive a signal in DL subband 1722. A base station may receive a signal in UL subband 1724 (e.g., UL subband 1724 of SBFD time resource 1720). A wireless device may transmit a signal in UL subband 1724. The signal may be a reference signal and/or a channel (as described above).

DL time resource 1710 may be associated with a full duplex - frequency division duplexing (FD-FDD), a time division duplexing (TDD), a half-duplex - frequency division duplexing (HD-FDD), or supplemental downlink (SDL) operation (or mode). UL time resource 1730 may be associated with an FD-FDD, a TDD, a HD-FDD, or a supplemental uplink (SUL) operation (or mode).

At different times in a TDD operation, a wireless device may transmit an uplink (UL) signal and receive a downlink (DL) signal on the same carrier frequency. At different times in a TDD operation, a base station may transmit a DL signal and receive an UL signal on the same carrier frequency.

In an FD-FDD operation, a wireless device may simultaneously (e.g., at the same time) transmit an UL signal on an uplink carrier frequency and receive a downlink signal on a downlink carrier frequency. In an FD-FDD operation, a base station may simultaneously (e.g., at the same time) transmit a DL signal on a DL carrier frequency and receive an UL signal on an UL carrier frequency.

At different times in an HD-FDD operation, a wireless device may transmit an UL signal on an uplink carrier frequency and receive a downlink signal on a downlink carrier frequency. At different times in an HD-FDD operation, a base station may transmit a DL signal on a DL carrier frequency and receive an UL signal on an UL carrier frequency.

In a multicarrier operation, a wireless device may use an SDL band (and/or an SUL band) with an FDD-FDD, a HD-FDD, or a TDD band. Examples of the multicarrier operation may be carrier aggregation, multi-connectivity, dual connectivity, etc.

Referring to FIG. 17, DL subband 1722 may include one or more resource blocks. UL subband 1724 may include one or more resource blocks. In an example, the one or more resource blocks within DL subband 1722 may be consecutive (or adjacent) in a frequency domain. In an example, the one or more resource blocks within UL subband 1724 may be consecutive (or adjacent) in a frequency domain. In another example, DL subband 1722 and UL subband 1724 (belonging to a SBFD time resource 1720) may be within a bandwidth of a carrier frequency. In yet another example, one or more DL subbands 1722 and one or more UL subbands 1724 (belonging to a SBFD time resource 1720) may be within a bandwidth of a carrier frequency. The carrier frequency may also be referred to as a time division duplex (TDD) carrier frequency or a carrier frequency of a TDD operation (or a mode). For example, the bandwidth and the carrier frequency may be associated with a base station. In an example, a bandwidth of a carrier frequency may be 48 resource blocks (RBs). In another example, DL subband 1722 may include 8 RBs. In yet another example, UL subband 1724 may include 4 RBs. In yet another example, a base station may configure four DL subbands 1722 within the bandwidth (e.g., 48 RBs) of the carrier frequency. In yet another example, a base station may configure four UL subband 1724 within the bandwidth (e.g., 48 RBs) of the carrier frequency. In yet another example, a base station may configure five DL subbands 1722 within the bandwidth (e.g., 48 RBs) of the carrier frequency. In yet another example, a base station may configure two UL subband 1724 within the bandwidth (e.g., 48 RBs) of the carrier frequency.

A time resource may be referred to as a symbol, a slot, a subslot, a mini-slot, a subframe, or a frame. For example, the radio frame (e.g., 10 ms in length) may include 10 subframes (e.g., each of 1 ms in length). The time resource may be identified by a time resource number (e.g., a symbol number ranging from 0 to 13, a subframe number ranging from 0 to 9, etc.). A time resource may be a DL time resource (e.g., a DL symbol, a DL slot, a DL subframe, etc.) or an UL time resource (e.g., an UL symbol, an UL slot, an UL subframe, etc.). In an example, DL time resource 1710 may also be referred to as a DL symbol, a DL slot, a DL subframe, etc. In an example, UL time resource 1730 may also be referred to as a UL symbol, an UL slot, an UL subframe, etc. In an example, SBFD time resource 1720 may also be referred to an SBFD symbol, an SBFD slot, an SBFD subframe, etc. DL time resource 1710 or UL time resource 1730 may also be referred to as a non-SBFD symbol, a non-SBFD slot, a non-SBFD subframe, etc.

In an example, one or more DL time resources 1710, SBFD time resources 1720, and/or one or more UL time resources 1730 within SBFD time period 1740 may also be referred to as a pattern. The pattern may also be referred to as an SBFD pattern, an SBFD time resource pattern, an SBFD symbol pattern, an SBFD slot pattern, or an SBFD subframe pattern, etc. In an example, the pattern may be periodic (e.g., a periodic SBFD pattern) or aperiodic (e.g., an aperiodic SBFD pattern). In an example, a wireless device may receive one or more messages, from a base station, including the SBFD pattern. The one or more messages may be a radio resource control (RRC) message, a medium access control - control element (MAC-CE), or a downlink control information (DCI).

In an example, a periodicity of the periodic SBFD pattern may be based on (or correspond to) SBFD time period 1740. In an example, SBFD time period 1740 may be based on a periodicity of an uplink (UL) - downlink (DL) pattern periodicity.

In an example, an UL-DL pattern may be referred to as a time division duplex (TDD) UL-DL pattern, a TDD UL-DL subframe pattern, a TDD UL-DL configuration, or a TDD UL-DL slot configuration. In an example, an UL-DL pattern (e.g., an IE *TDD-UL-DL-Patter*n) may include a periodicity, a number of DL slots, a number of UL slots, a number of UL symbols, and a number of DL symbols. The periodicity of an UL-DL pattern (or a TDD UL-DL pattern) may also be referred to as a DL-UL transmission periodicity (e.g., an IE *dl-UL-TransmissionPeriodicity*), a DL-UL transmission period, or a DL-UL transmission repetition period. In an example, the DL-UL transmission periodicity of a TDD-UL-DL pattern may be 0.5ms, 0.625ms, 1ms, 1.25ms, 2ms, 2.5ms, 3ms, 4ms, 5ms, 10ms, 20ms, 40ms, 60ms, 80ms, 100ms, 120ms, 140ms, 160ms, or any other reasonable time duration. A wireless device may receive, from a base station, a UL-DL pattern (e.g., an IE *TDD-UL-DL-Patter*n) including a DL-UL transmission periodicity (e.g., *dl-UL-TransmissionPeriodicity*) in a radio resource control (RRC) message. For example, the RRC message may be referred to as a TDD UL-DL common configuration (e.g., *TDD-UL-DL-ConfigCommon*) or a TDD UL-DL dedicated configuration (e.g., *TDD-UL-DL-ConfigDedicated*). The TDD UL-DL common configuration may be a cell specific RRC message (e.g., transmitted in a broadcast message in a cell, e.g., for multiple UEs in the cell). The TDD UL-DL dedicated configuration may be a UE specific RRC message (e.g., transmitted to the UE). In an example, a wireless device may receive, from a base station, one UL-DL pattern. In an example, a wireless device may receive, from a base station, two or more UL-DL patterns.

In an example, SBFD time period 1740 may be based on a DL-UL transmission periodicity of a TDD-UL-DL pattern. For example, SBFD time period 1740 may correspond to the DL-UL transmission periodicity of a TDD-UL-DL pattern. In another example, SBFD time period 1740 may correspond to a sum of two or more DL-UL transmission periodicities. For example, a wireless device may receive two or more TDD-UL-DL patterns. In this example, each one of the two or more DL-UL transmission periodicities may be associated with (or related to) one of the two or more TDD-UL-DL patterns. For example, a wireless device may receive, from a base station, one TDD-UL-DL pattern with a periodicity corresponding to 5 ms, and another TDD-UL-DL pattern with a periodicity corresponding to 10 ms. In this example, SBFD time period 1740 may correspond to 15 ms.

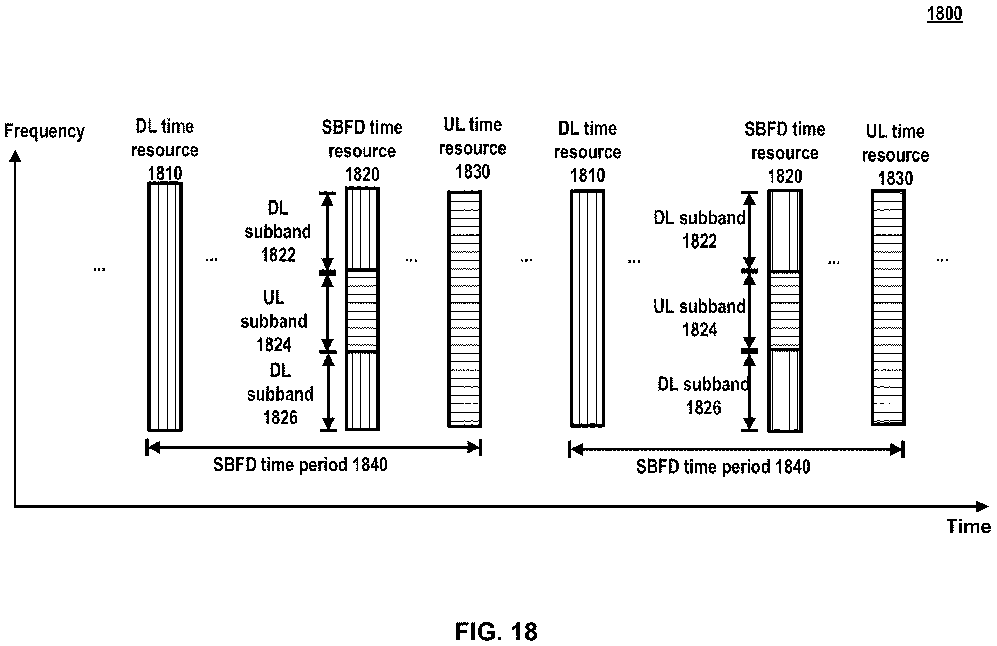

FIG. 18 illustrates an example of time-frequency resources 1800 per an aspect of the present disclosure. Time-frequency resources 1800 may be associated with a cell. A base station may serve, manage, or operate the cell.

In the example of FIG. 18, a downlink (DL) time resource 1810, a subband full duplex (SBFD) time resource 1820, and an uplink (UL) time resource 1830 are included in an SBFD time period 1840. DL time resource 1810, SBFD time resource 1820, UL time resource 1830, and SBFD time period 1840 are according to the example embodiments in FIG. 17 (e.g., DL time resource 1710, SBFD time resource 1720, UL time resource 1730, and SBFD time period 1740).

As illustrated in FIG. 18, SBFD time resource 1820 may include a downlink (DL) subband 1822, an uplink (UL) subband 1824, and a downlink (DL) subband 1826. DL subband 1822 and DL subband 1826 are according to the example embodiments in FIG. 17 (e.g., DL subband 1722). UL subband 1824 is according to the example embodiments in FIG. 17 (e.g., UL subband 1724). In an example, a number of frequency resources in DL subband 1822 and a number of frequency resources in DL subband 1826 may be different, e.g., 24 physical resource blocks (PRBs) in DL subband 1822 and 48 PRBs in DL subband 1826. In another example, a number of frequency resources in DL subband 1822 and a number of frequency resources in DL subband 1826 may be the same, e.g., 48 PRBs in DL subband 1822 and 48 PRBs in DL subband 1826.

One or more DL time resources, of one or more DL time resources 1810, one or more SBFD time resources, of one or more SBFD time resources 1820, and/or one or more UL time resources, of one or more UL time resources 1830, within SBFD time period 1840 may also be referred as a pattern or an SBFD pattern as described in FIG. 17 (e.g., the SBFD pattern).

In an example, an SBFD configuration may comprise (or indicate) DL subband 1822, DL subband 1826, UL subband 1824, SBFD time resource 1820, and/or SBFD time period 1840. The SBFD configuration may further comprise (or indicate) DL time resource 1810 and/or UL time resource 1830.

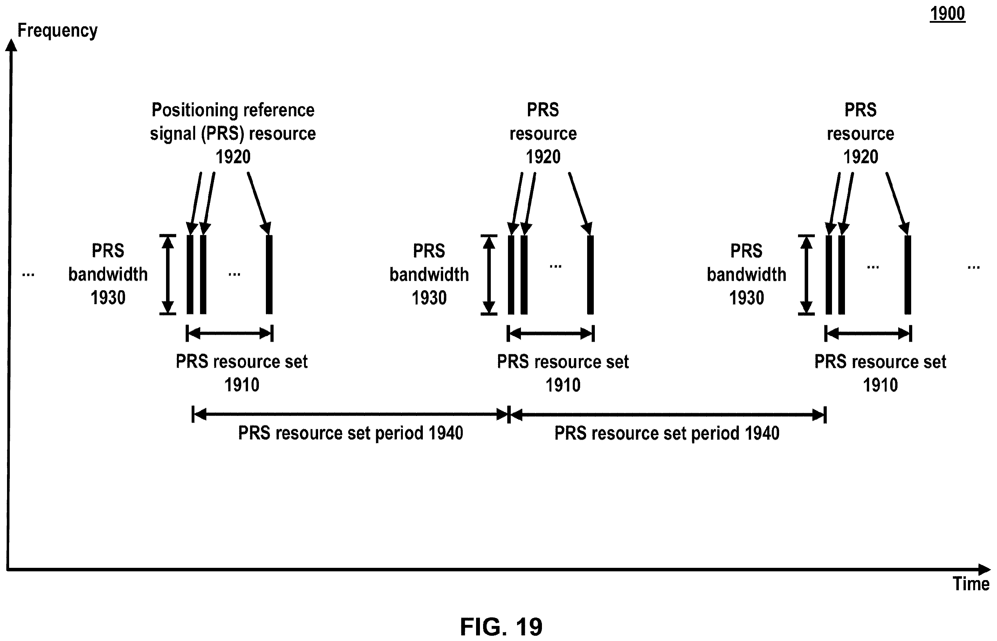

FIG. 19 illustrates an example of a positioning reference signal (PRS) configuration 1900 per an aspect of the present disclosure. PRS configuration 1900 may be associated with a node, e.g., a transmission reception point (TRP), a base station, a distributed unit of a base station (e.g., a gNB distributed unit (gNB-DU)). The node may serve, manage, or operate a cell.

In the example of FIG. 19, PRS configuration 1900 may comprise two or more PRS resource sets 1910. The start timings of any two successive PRS resource sets 1910 may be separated (in time) by a PRS resource set period 1940. PRS resource set period 1940 may also be referred to as a PRS resource set periodicity, a periodicity of PRS resource set 1910, a PRS resource set repetition period, or a repetition period of PRS resource set 1910. In an example, PRS resource set period 1940 may be 4 slots, 5 slots, 8 slots, 10 slots, 16 slots, 20 slots, 32 slots, 40 slots, 64 slots, 80 slots, 128 slots, 160 slots, 256 slots, 320 slots, 512 slots, 640 slots, 1280 slots, 2560 slots, 5120 slots, 10240 slots, 20480 slots, 40960 slots, 81920 slots, or any other reasonable time duration.

PRS resource set 1910 within PRS configuration 1900 may be indicated by (or associated) with an identifier (e.g., a PRS resource set ID). For example, PRS resource set ID may be an integer between 0 and 7.

In the example of FIG. 19, PRS resource set 1910 may comprise one or more positioning reference signal (PRS) resources 1920. For example, a time duration (or length in time) of PRS resource set 1910 may depend on (or based on) a number of PRS resources 1920 comprised in PRS resource set 1910. In an example, PRS resource 1920 within PRS resource set 1910 may be indicated by (or associated) with an identifier (e.g., a PRS resource ID). For example, PRS resource ID may be an integer between 0 and 63. For example, PRS resource set 1910 may comprise up to 64 PRS resources 1920.

A PRS bandwidth 1930 may be a bandwidth (or a transmission bandwidth) of PRS resource 1920 or PRS resource set 1910. PRS resource 1920 may comprise (or indicate) a positioning reference signal (PRS). For example, PRS bandwidth 1930 may also be referred to as a bandwidth (or a transmission bandwidth) of the PRS of PRS resource 1920.

In a frequency domain, the PRS may be transmitted (or comprised) in one or more frequency resources (e.g., subcarriers, resource blocks, etc.). In a time domain, the PRS may be transmitted (or comprised) in one or more symbols, e.g., 1, 2, 4, 6, or 12 symbols. For example, PRS resource 1920 may comprise one or more frequency resources (e.g., resource blocks) in a frequency domain and one or more symbols in a time domain.

PRS bandwidth 1930 may be expressed (or defined) in terms of frequency units (e.g., K11 MHz) or frequency resources (e.g., resource blocks (RBs), subcarriers). An RB may also be referred to as a physical RB (PRB) or a virtual RB (VRB). For example, PRS bandwidth 1930 may be 24 PRBs, 28 PRBs, 32 PRBs, 52 PRBs, 102 PRBs, 156 PRBs, 272 PRBs, etc. In an example, PRS bandwidth 1930 may indicate (or comprise) an identifier (or an index), e.g., an integer between 1 and 63. For example, each identifier (or the index) may indicate (or be associated with) a value of a bandwidth of the PRS in PRBs, e.g. index 1 may correspond of a bandwidth of 24 PRBs.

PRS configuration 1900 may be associated with (or related to) a carrier frequency (e.g., a positioning frequency layer as described above). For example, a TRP may transmit a positioning reference signal (PRS) over a carrier frequency based on PRS configuration 1900. PRS configuration 1900 may also be referred to as a PRS transmission configuration or a PRS transmission. A location server (e.g., a location management function (LMF)) may transmit to a wireless device, PRS configuration 1900 via an LTE positioning protocol (LPP). PRS configuration 1900 may indicate the PRS. The wireless device may receive the PRS based on PRS configuration 1900. The wireless device may perform a positioning measurement based on the PRS associated with (or indicated by) PRS configuration 1900.

Examples of the positioning measurement may comprise a reference signal time difference (RSTD); an UE Rx-Tx time difference measurement; a round trip time (RTT); a multi-RTT; a carrier phase measurement (CPP); a channel impulse response (CIR); a time of arrival (TOA); a reference signal received power (RSRP); a reference signal received path power (RSRPP); a positioning reference signal - reference signal received power (PRS-RSRP); a positioning reference signal - reference signal received path power (PRS-RSRPP); an angle of arrival (AOA); an angle of departure (AOD); a power delay profile (PDP); a delay profile (DP), etc.

In an example, the wireless device may determine (or identify or calculate or estimate) a location of the wireless device based on a positioning measurement. In another example, the wireless device may transmit to a location server (e.g., an LMF), the positioning measurement. For example, the location server (e.g., an LMF) may determine (or identify or calculate or estimate) a location of the wireless device based on the positioning measurement.

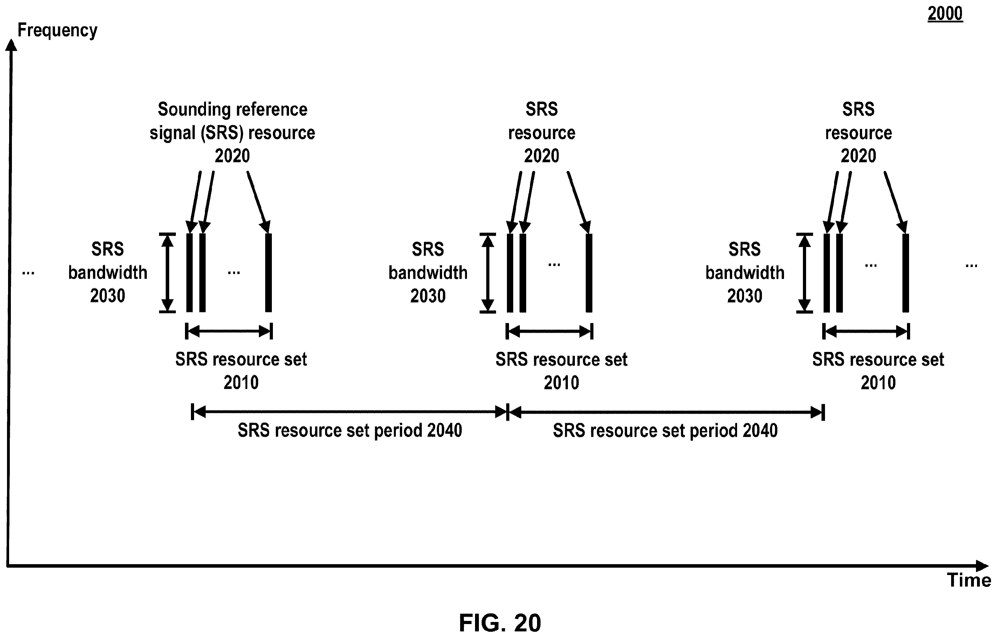

FIG. 20 illustrates an example of a sounding reference signal (SRS) configuration 2000 per an aspect of the present disclosure. SRS configuration 2000 may be associated with a wireless device. The wireless device may transmit an SRS in a cell based on SRS configuration 2000. A node may serve, manage, or operate a cell. The node may be a TRP, a base station, a distributed unit of a base station (e.g., a gNB distributed unit (gNB-DU)), a central unit of a base station (e.g., a gNB central unit (gNB-CU)), etc.

In the example of FIG. 20, SRS configuration 2000 may comprise two or more SRS resource sets 2010. SRS resource set 2010 may also be referred to as a positioning SRS resource set or an SRS resource set for positioning.

The start timings of any two successive SRS resource sets 2010 may be separated (in time) by an SRS resource set period 2040. SRS resource set period 2040 may also be referred to as an SRS resource set periodicity, a periodicity of SRS resource set 2010, an SRS resource set repetition period, a repetition period of SRS resource set 2010, an SRS periodicity, a periodicity of an SRS, a positioning SRS periodicity, or a periodicity of a positioning SRS. In an example, SRS resource set period 2040 (or an SRS periodicity) may be 1 slot, 2 slots, 4 slots, 5 slots, 8 slots, 10 slots, 16 slots, 20 slots, 32 slots, 40 slots, 64 slots, 80 slots, 128 slots, 160 slots, 256 slots, 320 slots, 512 slots, 640 slots, 1280 slots, 2560 slots, 5120 slots, 10240 slots, 20480 slots, 40960 slots, 81920 slots, or any other reasonable time duration.

SRS resource set 2010 within SRS configuration 2000 may be indicated by (or associated) with an identifier (e.g., an SRS resource set ID). For example, SRS resource set ID may be an integer between 0 and 15.

In the example of FIG. 20, SRS resource set 2010 may comprise one or more sounding reference signal (SRS) resources 2020. SRS resource 2020 may also be referred to as a positioning SRS resource or an SRS resource for positioning. For example, a time duration (or length in time) of SRS resource set 2010 may depend on (or based on) one or more SRS resources, of SRS resource 2020 comprised in SRS resource set 2010. In an example, SRS resource 2020 within SRS resource set 2010 may be indicated by (or associated) with an identifier (e.g., an SRS resource ID). For example, SRS resource ID may be an integer between 0 and 63. For example, SRS resource set 2010 may comprise up to 64 SRS resources, of SRS resource 2020.

An SRS bandwidth 2030 may be a bandwidth (or a transmission bandwidth) of SRS resource 2020 or SRS resource set 2010. SRS resource 2020 may comprise (or indicate) a sounding reference signal (SRS). The SRS may also be referred to as a positioning SRS or an SRS for positioning. For example, SRS bandwidth 2030 may also be referred to as a bandwidth (or a transmission bandwidth) of the SRS of SRS resource 2020.

In a frequency domain, the SRS may be transmitted (or comprised) in one or more frequency resources (e.g., subcarriers, resource blocks, etc.). In a time domain, the SRS may be transmitted (or comprised) in one or more symbols, e.g., 1, 2, 4, 8, or 12 symbols. For example, SRS resource 2020 may comprise one or more frequency resources (e.g., resource blocks) in a frequency domain and one or more symbols in a time domain.

SRS bandwidth 2030 may be expressed (or defined) in terms of frequency units (e.g., K11 MHz) or frequency resources (e.g., resource blocks (RBs), subcarriers). An RB may also be referred to as a physical RB (PRB) or a virtual RB (VRB). For example, SRS bandwidth 2030 may be 24 PRBs, 28 PRBs, 32 PRBs, 52 PRBs, 102 PRBs, 156 PRBs, 272 PRBs, etc. In an example, SRS bandwidth 2030 may indicate (or comprise) an identifier (or an index), e.g., an integer between 1 and 63. For example, each identifier (or the index) may indicate (or be associated with) a value of a bandwidth of the SRS in PRBs, e.g. index 1 may correspond of a bandwidth of 24 PRBs.

SRS configuration 2000 may be associated with (or related to) a carrier frequency (e.g., a frequency of a serving cell of a wireless device). For example, the wireless device may transmit a sounding reference signal (SRS) over the carrier frequency based on SRS configuration 2000. SRS configuration 2000 may also be referred to as an SRS transmission configuration, an SRS transmission, a positioning SRS configuration, a positioning SRS transmission configuration, etc.

A base station (e.g., a gNB, gNB-CU, etc.) may transmit to a wireless device, SRS configuration 2000, via an RRC message. For example, the wireless device may perform a positioning measurement (e.g., an RSTD, an SRS-RSRP, an SRS-RSRPP, an angle of arrival (AoA), a UE Rx-Tx time difference, a multi round trip time (RTT), etc.) based on the SRS associated with (or indicated by) SRS configuration 2000.

In another example, a node (e.g., a base station, a gNB, a gNB-DU, a TRP, etc.) may perform a positioning measurement based on the SRS associated with (or indicated by) SRS configuration 2000.

In yet another example, a node (e.g., a base station, a gNB, a gNB-DU, a TRP, etc.) may perform a positioning measurement based on the SRS associated with (or indicated by) SRS configuration 2000 and a PRS associated with (or indicated by) PRS configuration 1900.

Examples of the positioning measurement may be a secondary synchronization signal (SSS) transmit power, an uplink (UL) Relative Time of Arrival (T_{UL-RTOA}), a base station Rx-Tx time difference (e.g., a gNB Rx-Tx time difference), a round trip time, an angle of arrival (AoA) (e.g., an UL AoA), an angle of departure (AoD) (e.g., a DL AoD), a reference signal received power (RSRP), a path loss, an uplink sounding reference signal - reference signal received power (UL SRS-RSRP), an UL SRS reference signal received path power (UL SRS-RSRPP), a Timing advance (T_{ADV}), a carrier phase measurement (CPP), an uplink reference signal carrier phase (UL RSCP), a channel impulse response (CIR), a delay profile (DP), a power delay profile (PDP), a signal to noise ratio (SNR), or a signal to interference and noise ratio (SINR).

In an example, the node (e.g., a base station, a gNB-DU, a TRP, etc.) may further transmit, to another node (e.g., another base station, a location server, a gNB-CU, a core network node, etc.), the positioning measurement.

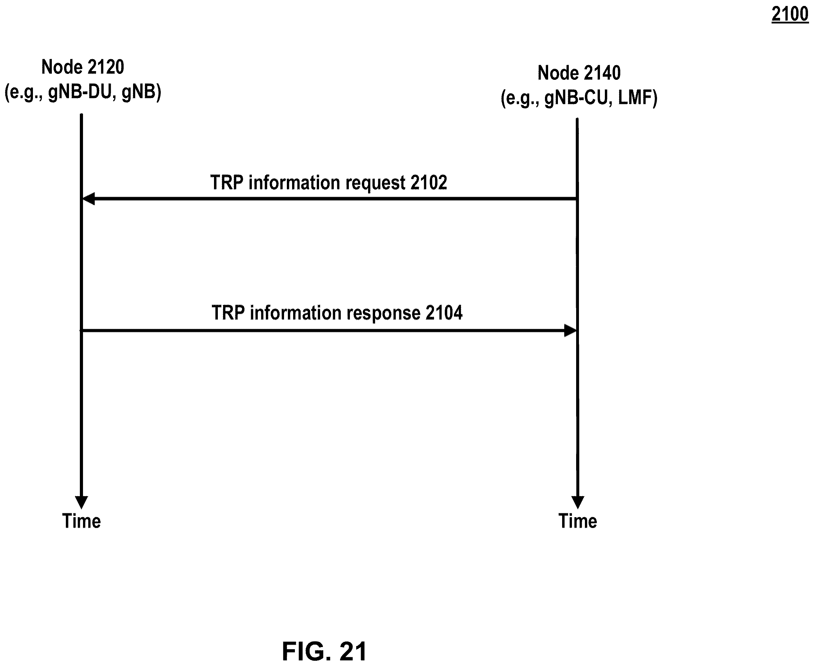

FIG. 21 illustrates an example of a transmission reception point (TRP) information exchange procedure 2100 between a node 2120 and a node 2140 per an aspect of the present disclosure. TRP information exchange procedure 2100 may also be referred to as a signaling flow for information exchange, an information exchange procedure, a TRP information request procedure, a positioning procedure, or a procedure for providing detailed information for a TRP. TRP information exchange procedure 2100 may exchange information associated with a TRP.

TRP information exchange procedure 2100 may be performed by node 2140. During TRP information exchange procedure 2100, node 2120 may communicate with node 2140. In an example, node 2120 may be a RAN node. The RAN node may also be referred to as an NG-RAN node. Examples of the RAN node may be a base station (e.g., a gNB), a central unit (or a centralized unit) of a base station (e.g., a gNB central (or centralized) unit (gNB-CU)), a distributed unit of a base station (e.g., a gNB distributed unit (gNB-DU)), etc. In an example, node 2140 may be a location sever. The location server may also be referred to as a positioning node, or a positioning server. An example of the location server is a location management function (LMF). In another example, node 2140 may be a RAN node (or an NR-RAN node), e.g., a central unit of a base station (e.g., a gNB-CU).

In an example, node 2120 may communicate with the node 2140 via a positioning protocol e.g., next generation radio positioning protocol A (NRPPa). In another example, node 2120 may communicate with the node 2140 via an F1 application protocol (F1AP). For example, an interface between the node 2120 and the node 2140 may be an F1 interface or an NRPPa interface.

Node 2120 may host (e.g., manage, serve, or control) a transmission reception point (TRP). Node 2120 may contain (e.g., store, maintain, etc.) information about the TRP. In an example, node 2120 may be pre-configured with information about the TRP. In another example, node 2120 may receive from the TRP, information about the TRP. The TRP may be a radio node. The TRP may also be associated with a cell. The TRP (or the radio node) may also be referred to as an antenna, a radio unit (RU), a radio remote unit (RRU), a radio head, a radio remote head (RRH), or a radio head-RRH. The antenna may also be referred to as an antenna port, an antenna array, an antenna panel, or a radiating element.

In an example of FIG. 21, node 2140 may obtain from node 2120, information about the TRP based on TRP information exchange procedure 2100. The information about the TRP may comprise configuration data of the TRP. For example, node 2120 and node 2140 may exchange configuration data based on TRP information exchange procedure 2100. The configuration data may also be referred to as application level configuration data, node information, or TRP information.

As shown in FIG. 21, node 2140 may transmit to node 2120, a TRP information request 2102 for the TRP. In an example, TRP information request 2102 may be a positioning protocol message e.g., an NRPPa message. In another example, TRP information request 2102 may be a F1AP message e.g., via an F1 interface. Information request 2102 may include an identifier of the TRP e.g., an TRP ID. TRP information request 2102 may further include a type of information (e.g., a bandwidth, an antenna configuration, a transmit power, a numerology, etc.) requested by node 2140 for the TRP.

As shown in FIG. 21, node 2120 may transmit to node 2140, a TRP information response 2104. TRP information response 2104 may be in response to TRP information request 2102. In an example, TRP information response 2104 may be a positioning protocol message, e.g., an NRPPa message. In another example, TRP information response 2104 may be an F1AP message.

TRP information response 2104 may include the identifier (e.g., the TRP ID) of the TRP, and values of one or more types of information requested by node 2140. Examples of the type of information may comprise a cell ID (e.g., a PCI, a CGI, etc.), a numerology, a bandwidth of a reference signal, an antenna configuration, a carrier frequency, a frequency band, a transmit power of the reference signal, etc. For example, TRP information response 2104 may include an identifier (e.g., a PCI, a CGI, etc.) of a cell associated with the TRP. In an example, the cell may be associated with one or more wireless devices. The cell may also be referred to as a serving cell, e.g., a spCell, a PCell, a PSCell, a SCell, etc.

In an example, the reference signal indicated by (or comprised in or included in) TRP information response 2104 may be a positioning reference signal (PRS). The information of the reference signal (e.g., the PRS) may also be referred to as a PRS configuration. The PRS and the PRS configuration are according to the example embodiments in FIG. 19 (e.g., the PRS and PRS configuration 1900).

For example, node 2140 may determine (e.g., assume), based on the reception of TRP information response 2104, that the acquisition of the information associated with the TRP is (e.g., has been) successful.

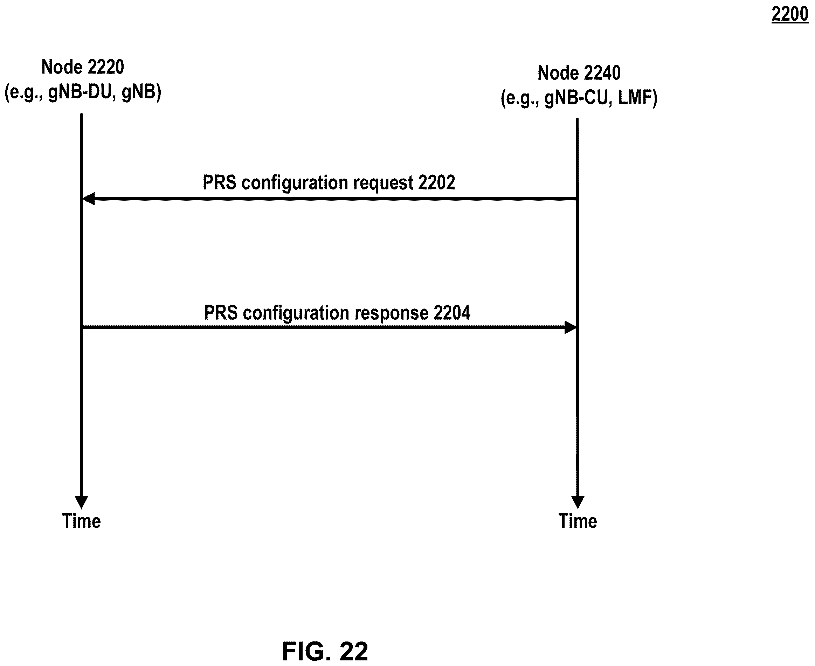

FIG. 22 illustrates an example of a position reference signal (PRS) configuration exchange procedure 2200 between a node 2220 and a node 2240 per an aspect of the present disclosure. PRS configuration exchange procedure 2200 may also be referred to as a signaling flow for PRS configuration exchange, a PRS configuration request procedure, a positioning procedure, or a procedure for configuring a PRS in a TRP. PRS configuration exchange procedure 2200 may exchange information to configure, update (or modify or turn off or turn on or release) a PRS.

PRS configuration exchange procedure 2200 may be performed by node 2240. During PRS configuration exchange procedure 2200, node 2220 may communicate with node 2240. In an example, node 2220 may be a RAN node (e.g., a gNB-DU, a gNB, etc.). The RAN node may also be referred to as an NG-RAN node. Node 2220 is according to the example embodiments in FIG. 21 (e.g., node 2120).

In an example, node 2240 may be a location sever (e.g., an LMF) or a RAN node (e.g., a gNB-CU). Node 2240 is according to the example embodiments in FIG. 21 (e.g., node 2140).

In an example, node 2220 may communicate with the node 2240 via a positioning protocol e.g., an NRPPa. In another example, node 2220 may communicate with the node 2240 via F1AP messages. For example, an interface between the node 2220 and the node 2240 may be an F1 interface or an NRPPa interface.

Node 2220 may host (e.g., manage, serve, or control) a transmission reception point (TRP). Node 2220 may contain (e.g., store, maintain, etc.) information about the TRP. In an example, node 2220 may be pre-configured with information about the TRP. In another example, node 2220 may receive from the TRP, information about the TRP. The TRP may be associated with (or related to) a cell. TRP is according to the example embodiments in FIG. 21 (e.g., the TRP).

As shown in FIG. 22, node 2240 may transmit to node 2220, a positioning reference signal (PRS) configuration request 2202. In an example, PRS configuration request 2202 may be a positioning protocol message e.g., an NRPPa message. In another example, PRS configuration request 2202 may be a F1AP message e.g., via an F1 interface. PRS configuration request 2202 may include an identifier of the TRP e.g., an TRP ID. PRS configuration request 2202 may further include characteristics of a PRS (or a PRS transmission) (e.g., a bandwidth, an antenna configuration, a transmit power, a numerology, etc.) requested by node 2240. The characteristics of the PRS (or the PRS transmission) may also associated with the TRP, e.g., the PRS transmission in the TRP. The characteristics of the PRS (or the PRS transmission) may also be referred to as requested DL PRS transmission characteristics (e.g., *Requested DL PRS Transmission Characteristics* IE). The PRS (or the PRS transmission) is according to the example embodiments in FIG. 19 (e.g., the PRS, the PRS transmission, and PRS configuration 1900).

As shown in FIG. 22, node 2220 may transmit to node 2240, a PRS configuration response 2204. PRS configuration response 2204 may be in response to PRS configuration request 2202. In an example, PRS configuration response 2204 may be a positioning protocol message, e.g., an NRPPa message. In another example, PRS configuration response 2204 may be an F1AP message.

Node 2220 may configure a PRS (e.g., in the TRP) based on PRS configuration request 2202. PRS configuration response 2204 may indicate information associated with the PRS configured (e.g., the PRS transmission in the TRP) by node 2220.

PRS configuration response 2204 may include the identifier (e.g., the TRP ID) of the TRP, and information of (or associated with) the PRS configured by node 2220. Examples of the information of (or associated with) the PRS may comprise a cell ID (e.g., a PCI, a CGI, etc.), a numerology, a bandwidth of a PRS, an antenna configuration, a carrier frequency, a frequency band, a transmit power of the PRS, etc. For example, PRS configuration response 2204 may include an identifier (e.g., a PCI, a CGI, etc.) of a cell associated with the TRP. In an example, the cell may be associated with one or more wireless devices. The cell may also be referred to as a serving cell, e.g., a spCell, a PCell, a PSCell, a SCell, etc. In an example, the information of (or associated with) the PRS may be comprised in a PRS configuration (e.g., *PRS configuration* IE).

For example, node 2240 may determine (e.g., assume), based on the reception of PRS configuration response 2204, that the PRS (or the PRS transmission) associated with the TRP is (e.g., has been) successful configured.

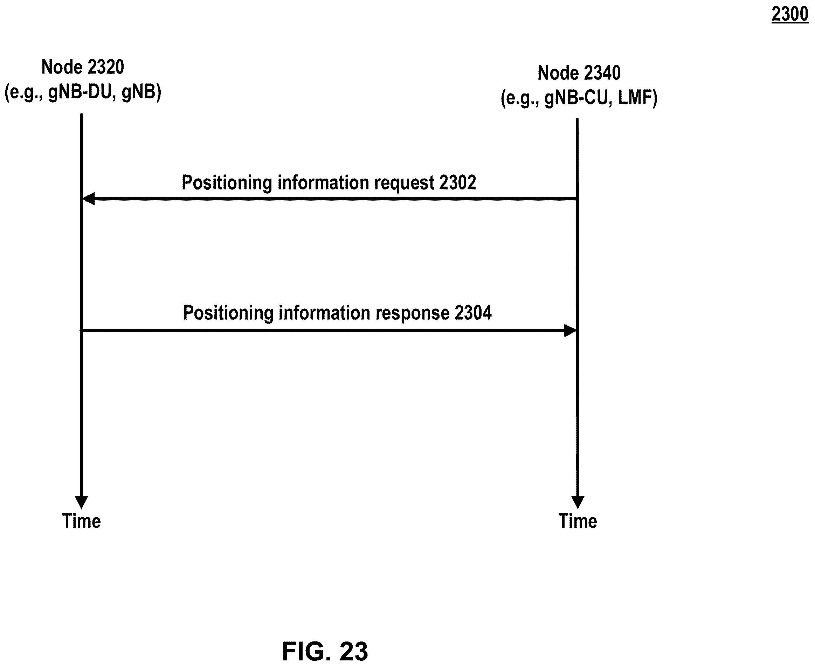

FIG. 23 illustrates an example of a position information exchange procedure 2300 between a node 2320 and a node 2340 per an aspect of the present disclosure. Position information exchange procedure 2300 may also be referred to as a signaling flow for a sounding reference signal (SRS) configuration exchange procedure, an SRS information exchange procedure, an SRS configuration request procedure, a positioning procedure, a procedure to configure a wireless device to transmit an SRS, a procedure for transmission of an SRS for a wireless device, or a procedure for configuring an SRS for a wireless device. Position information exchange procedure 2300 may exchange information to configure, update (or modify or turn off or turn on or release) an SRS.

Position information exchange procedure 2300 may be performed by node 2340. During Position information exchange procedure 2300, node 2320 may communicate with node 2340. In an example, node 2320 may be a RAN node (e.g., a gNB-DU, a gNB, etc.). The RAN node may also be referred to as an NG-RAN node. Node 2320 is according to the example embodiments in FIG. 21 (e.g., node 2120) and/or in FIG. 22 (e.g., node 2220).

In an example, node 2340 may be a location sever (e.g., an LMF) or a RAN node (e.g., a gNB-CU). Node 2340 is according to the example embodiments in FIG. 21 (e.g., node 2140) and/or in FIG. 22 (e.g., node 2240).

In an example, node 2320 may communicate with the node 2340 via a positioning protocol e.g., an NRPPa. In another example, node 2320 may communicate with the node 2340 via F1AP messages. For example, an interface between the node 2320 and the node 2340 may be an F1 interface or an NRPPa interface.

Node 2320 may host (e.g., manage, serve, or control) a transmission reception point (TRP). Node 2320 may contain (e.g., store, maintain, etc.) information about the TRP. In an example, node 2320 may be pre-configured with information about the TRP. In another example, node 2320 may receive from the TRP, information about the TRP. The TRP may be associated with (or related to) a cell. TRP is according to the example embodiments in FIG. 21 (e.g., the TRP) and/or FIG. 22 (e.g., the TRP).

As shown in FIG. 23, node 2340 may transmit to node 2320, a positioning information request 2302. In an example, positioning information request 2302 may be a positioning protocol message e.g., an NRPPa message. In another example, positioning information request 2302 may be a F1AP message e.g., via an F1 interface.

In an example, positioning information request 2302 may include an identifier of the TRP e.g., an TRP ID. In another example, positioning information request 2302 may include an identifier of a cell e.g., a PCI, a CGI, etc. In yet another example, positioning information request 2302 may include an identifier of a procedure, e.g., an NRPPa transaction ID. For example, the NRPPa transaction ID may associate one or more messages belonging to the same procedure (e.g., position information exchange procedure 2300). In yet another example, positioning information request 2302 may include an identifier of an association between a wireless device and node 2320, e.g., a gNB-DU UE F1AP ID. For example, the gNB-DU UE F1AP ID may uniquely identify an association between the wireless device and a gNB-DU over an F1 interface. In yet another example, positioning information request 2302 may include an identifier of an association between the wireless device and node 2340, e.g., a gNB-CU UE F1AP ID. For example, the gNB-CU UE F1AP ID may uniquely identify an association between the wireless device and a gNB-CU over an F1 interface.

Positioning information request 2302 may further include characteristics of an SRS (or an SRS transmission) (e.g., a bandwidth, an antenna configuration, a transmit power, a numerology, etc.) requested by node 2340. In an example, the characteristics of the SRS (or the SRS transmission) may be associated with a wireless device. For example, positioning information request 2302 may be a request to configure the wireless device to transmit the SRS, e.g., the SRS a cell. In another example, the characteristics of the SRS (or the SRS transmission) may also be associated with the TRP, e.g., the SRS transmission in the TRP. The characteristics of the SRS (or the SRS transmission) may also be referred to as requested SRS transmission characteristics (e.g., *Requested SRS Transmission Characteristics* IE). The SRS (or the SRS transmission) is according to the example embodiments in FIG. 20 (e.g., the SRS, the SRS transmission, and SRS configuration 2000).

As shown in FIG. 23, node 2320 may transmit to node 2340, a positioning information response 2304. Positioning information response 2304 may be in response to positioning information request 2302. In an example, positioning information response 2304 may be a positioning protocol message, e.g., an NRPPa message. In another example, positioning information response 2304 may be an F1AP message.

Node 2320 may configure an SRS based on positioning information request 2302. For example, node 2320 may configure a wireless device to transmit the SRS. For example, the wireless device may transmit the SRS in the cell. The cell may be associated with the TRP. Positioning information response 2304 may indicate information associated with the SRS configured (e.g., the SRS transmission by the wireless device in the cell of the TRP) by node 2320.

Positioning information response 2304 may include one or more identifiers (e.g., the TRP ID, the PCI, the CGI, the NRPPa transaction ID, the gNB-CU UE F1AP ID, gNB-DU UE F1AP ID, etc., as described above). For example, positioning information response 2304 may include an identifier (e.g., a PCI, a CGI, etc.) of a cell associated with the TRP. In an example, the cell may be associated with the wireless device. The cell may also be referred to as a serving cell (e.g., a spCell, a PCell, a PSCell, a SCell, etc.) of the wireless device.

Positioning information response 2304 may further indicate information of (or associated with) the SRS configured by node 2320. Examples of the information of (or associated with) the SRS may comprise a cell ID (e.g., a PCI, a CGI, etc.), a numerology, a bandwidth of an SRS, a configuration of frequency hopping associated with the SRS, an antenna configuration, a carrier frequency, a frequency band, a transmit power of the SRS, etc. In an example, the information of (or associated with) the SRS may be comprised in an SRS configuration (e.g., *SRS configuration* IE).

For example, node 2440 may determine (e.g., assume), based on the reception of positioning information response 2404, that the SRS (or the SRS transmission) associated with the TRP is (e.g., has been) successful configured for the wireless device. For example, node 2440 may determine (e.g., assume), based on the reception of positioning information response 2404, that the wireless device may be transmitting the SRS.

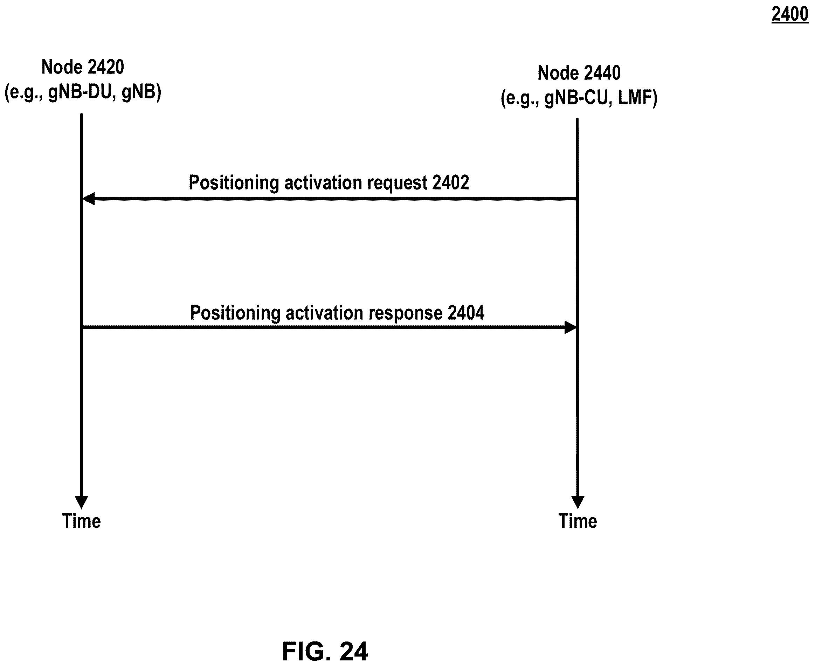

FIG. 24 illustrates an example of a position activation procedure 2400 between a node 2420 and a node 2440 per an aspect of the present disclosure. Position activation procedure 2400 may also be referred to as a signaling flow for a sounding reference signal (SRS) activation procedure, an SRS activation request procedure, a positioning procedure, a procedure to activate a wireless device to transmit an SRS, a procedure to activate an SRS, a procedure to trigger a transmission of an SRS by a wireless device, a procedure for activation of an SRS for a wireless device, or a procedure for activation an SRS for a wireless device.

Position information exchange procedure 2400 may exchange information to configure, update (or modify or turn off or turn on or release) an SRS. For example, the information may comprise a configuration of the SRS, e.g., one or more parameters associated with the SRS. The configuration of the SRS may also be referred to as an SRS configuration. The SRS and the SRS configuration are according to the example embodiments in FIG. 20 (e.g., the SRS and SRS configuration 2000).

Position activation procedure 2400 may be performed by node 2440. During Position activation procedure 2400, node 2420 may communicate with node 2440. In an example, node 2420 may be a RAN node (e.g., a gNB-DU, a gNB, etc.). The RAN node may also be referred to as an NG-RAN node. Node 2420 is according to the example embodiments in FIG. 21 (e.g., node 2120), FIG. 22 (e.g., node 2220), and/or in FIG. 23 (e.g., node 2320).

In an example, node 2440 may be a location sever (e.g., an LMF) or a RAN node (e.g., a gNB-CU). Node 2440 is according to the example embodiments in FIG. 21 (e.g., node 2140), FIG. 22 (e.g., node 2240), and/or in FIG. 23 (e.g., node 2340).

In an example, node 2420 may communicate with the node 2440 via a positioning protocol e.g., an NRPPa. In another example, node 2420 may communicate with the node 2440 via F1AP messages. For example, an interface between the node 2420 and the node 2440 may be an F1 interface or an NRPPa interface.

Node 2420 may host (e.g., manage, serve, or control) a transmission reception point (TRP). Node 2420 may contain (e.g., store, maintain, etc.) information about the TRP. In an example, node 2420 may be pre-configured with information about the TRP. In another example, node 2420 may receive from the TRP, information about the TRP. The TRP may be associated with (or related to) a cell. TRP is according to the example embodiments in FIG. 21 (e.g., the TRP), FIG. 22 (e.g., the TRP), and/or FIG. 23 (e.g., the TRP).

As shown in FIG. 24, node 2440 may transmit to node 2420, a positioning activation request 2402. In an example, positioning activation request 2402 may be a positioning protocol message e.g., an NRPPa message. In another example, positioning activation request 2402 may be a F1AP message e.g., via an F1 interface.

In an example, positioning activation request 2402 may include an identifier of the TRP e.g., an TRP ID. In another example, positioning activation request 2402 may include an identifier of a cell e.g., a PCI, a CGI, etc. In yet another example, positioning activation request 2402 may include an identifier of a procedure, e.g., an NRPPa transaction ID. In yet another example, positioning activation request 2402 may include an identifier of an association between a wireless device and node 2420, e.g., a gNB-DU UE F1AP ID. In yet another example, positioning activation request 2402 may include an identifier of an association between the wireless device and node 2440, e.g., a gNB-CU UE F1AP ID. The NRPPa transaction ID, the gNB-DU UE F1AP ID, and gNB-CU UE F1AP ID are according to the example embodiments in FIG. 23 (e.g., The NRPPa transaction ID, the gNB-DU UE F1AP ID, and gNB-CU UE F1AP ID).

Positioning activation request 2402 may further include an identifier of an SRS (e.g., an ID of an SRS resource, an ID of an SRS resource set, etc), a type of an SRS (e.g., a semi-persistent, a periodic, or periodic), a spatial relation of an SRS, etc. For example, the spatial relation of the SRS may be based on a downlink reference signal, e.g., a CSI-RS, an SSB, a PRS, etc. The DL reference signal may be transmitted in a cell. For example, the spatial relation of the SRS may further comprise an identifier of the cell, e.g., a PCI, a CGI, etc.

Positioning activation request 2402 may further include a timing parameter, e.g., an activation time. For example, the timing parameter may indicate a time when the SRS is requested to be activated. Node 2420 may activate the SRS based on the timing parameter. For example, node 2420 may activate the SRS at or around the time indicated by the timing parameter. In an example, the timing parameter (e.g., activation time) may be a time based on (or relative to) a reference time. In an example, the timing parameter (e.g., activation time) may be referred to as a relative time-1900. (e.g., *Relative Time-1900*). For example, the reference time may be 00:00:00 on January 01, 1900.

As shown in FIG. 24, node 2420 may transmit to node 2440, a positioning activation response 2404. Positioning activation response 2404 may be in response to positioning activation request 2402. In an example, positioning activation response 2404 may be a positioning protocol message, e.g., an NRPPa message. In another example, positioning activation response 2404 may be an F1AP message.

Node 2420 may activate an SRS based on positioning request 2402. For example, node 2420 may transmit to the wireless device, an activation command. For example, the activation command may be a MAC-CE or a DCI. The wireless device may transmit the SRS in the cell based on (or in response to) the activation command. In an example, the cell may be associated with the wireless device. The cell may also be referred to as a serving cell (e.g., a spCell, a PCell, a PSCell, a SCell, etc.) of the wireless device.

Positioning activation response 2404 may include one or more identifiers (e.g., the TRP ID, the PCI, the CGI, the NRPPa transaction ID, the gNB-CU UE F1AP ID, gNB-DU UE F1AP ID, etc., as described above).

Positioning activation response 2404 may further indicate timing information of (or associated with) the SRS. For example, the timing information may indicate a time when (or in which time resource) a transmission of the SRS may start (or has started). In an example, the timing information may comprise an index or a number of a time resource. For example, the timing information may comprise at least one of a system frame number (SFN), a slot number, or a subframe number.

For example, node 2440 may determine (e.g., assume), based on the reception of positioning activation response 2404, that the SRS (or the transmission of the SRS) in the wireless device is (or has been) successfully activated.

A cell may support (or be capable of) a subband full duplex (SBFD). The SBFD (or an SBFD mode, or an SBFD operation) may be associated with (or may operate based on) an SBFD configuration of the cell. The SBFD configuration of the cell may comprise (or indicate) at least one DL subband (e.g., DL subband 1722 in FIG. 17, and DL subband 1822 and DL subband 1826 in FIG. 18) and at least one UL subband (e.g., UL subband 1724 in FIG. 17 and UL subband 1824 in FIG. 18). The at least one DL subband and the at least one UL subband may be comprised in the same time resource (e.g., SBFD time resource 1720 in FIG. 17 and SBFD time resource 1820 in FIG. 18). The SBFD configuration of the cell may further comprise (or indicate) a size of a DL subband and/or a size of an UL subband in frequency domain (e.g., the size in terms of a number of resource blocks (RBs)).

A TRP may be associated with the cell (e.g., the cell supporting the SBFD). A base station distributed unit (e.g., a gNB-DU) or a base station (e.g., a gNB) may host (or manage or control) the TRP. The TRP may transmit a positioning reference signal (PRS), e.g., a PRS resource in a PRS resource set. The PRS may be based on (or determined based on) a PRS configuration. The PRS and the PRS configuration are according to the example embodiments in FIG. 19 (e.g., the PRS and PRS configuration 1900), FIG. 21 (e.g., the PRS and PRS configuration), and/or FIG. 22 (e.g., the PRS and PRS configuration).

The TRP may transmit (or support) the PRS in an SBFD time resource (e.g., SBFD time resource 1720 in FIG. 17 and SBFD time resource 1820 in FIG. 18). For example, the TRP may transmit (or support) the PRS within a DL subband (e.g., DL subband 1722 in FIG. 17, and DL subband 1822 and DL subband 1826 in FIG. 18) in the SBFD time resource.

A location server (e.g., an LMF) transmits to a wireless device, an assistance data (e.g., a positioning measurement configuration, an assistance information, a positioning assistance data, etc.) via an LPP message. The assistance data may indicate a configuration of the PRS (e.g., PRS configuration 1900). The assistance data may further indicate one or more positioning measurements (e.g., an RSTD, a PRS-RSRP, a PRS-RSRPP, a UE Rx-Tx time difference, a carrier phase positioning measurement, etc.). The wireless device may perform the one or more measurements based on the assistance data. For example, the wireless device may receive the PRS. The wireless device may perform the one or more measurements based on the PRS. In another example, the wireless device may perform the one or more measurements (e.g., UE Rx-Tx time difference) based on the PRS and an SRS.

In the existing technologies, the location server (e.g., an LMF) may not be aware of an SBFD configuration supported in a cell of the TRP. The location server (e.g., an LMF) may not be aware that the TRP may transmit (or support) the PRS in an SBFD time resource. In the existing technology, a base station (e.g., a gNB) may host (or serve) the TRP.

The location server (e.g., an LMF) may not be aware that the wireless device may transmit the SRS in an SBFD time resource, e.g., in a cell of the TRP.

In the existing technologies, the location server (e.g., an LMF) may transmit to the wireless device, an assistance data comprising a configuration of the PRS (e.g., PRS configuration 1900 in FIG. 19) regardless of whether the PRS is transmitted in the SBFD time resource or not.

The wireless device may perform a positioning measurement based on the assistance data. The wireless device may receive (or experience) interference in the SBFD time resource (e.g., an SBFD symbol), e.g., in a DL subband within the SBFD symbol. In an example, the wireless device may receive (or experience) the interference from an uplink reference signal (e.g., the SRS) in the SBFD time resource (e.g., an SBFD symbol), e.g., in an UL subband within the SBFD symbol. In another example, the wireless device may receive (or experience) the interference from an uplink channel (e.g., a PUSCH, a PUCCH, a PRACH, etc.) in the SBFD time resource (e.g., an SBFD symbol), e.g., in an UL subband within the SBFD symbol.

A reception quality (e.g., an SNR, an SINR, etc.) of the PRS in the SBFD time resource may degrade due to the interference. In an example, the positioning measurement may not be sufficiently accurate, e.g., a positioning measurement error may be larger than a first error threshold (ETH1). In another example, the positioning measurement may be out of a range, e.g., smaller than a first range threshold (RTH1) or larger than a second range threshold (RTH2). For example, the wireless device may not transmit to the location server, the positioning measurement (e.g., results of the positioning measurement) based on the positioning measurement being out of the range. The out of the range may also be referred to as out of a reportable range.

The location server may estimate a location (or a position) of the wireless device based on the positioning measurement (e.g., results of the positioning measurement). An accuracy of the location (or the position) of the wireless device may degrade. In an example, the accuracy of the location (or the position) of the wireless device may be referred to as a distance (Dₑᵣᵣₒᵣ) between an estimated location (or the position) of the wireless device and a reference location of the wireless device. For example, the reference location of the wireless device may a true (or correct or actual) position of the wireless device. For example, based on existing technologies, the accuracy (Dₑᵣᵣₒᵣ) of the location of the wireless device may be larger than a first accuracy threshold (ATH1), e.g., larger than 30 meters.

In an example, the location sever may determine the location of the wireless device based on the positioning measurement for (or in response to or in an anticipation of) a critical scenario, e.g., an emergency cell, a public safety situation, a disaster situation, etc. The accuracy (e.g., Dₑᵣᵣₒᵣ) of the location of the wireless device for the critical scenario may be expected to be below a second accuracy threshold (ATH2), e.g., 20 meters. Based on the existing technologies, the accuracy (e.g., Dₑᵣᵣₒᵣ) of the location of the wireless device determined by the location server for the critical scenario may not be below ATH2.

In existing technologies, the location server (e.g., an LMF) may not be aware that a TRP may transmit (or support) the PRS in an SBFD time resource (e.g., SBFD time resource 1720 in FIG. 17 and SBFD time resource 1820 in FIG. 18). The location server (e.g., an LMF) may not be aware that the wireless device may transmit an SRS in an SBFD time resource, e.g., in a cell of the TRP.

In existing technologies, the location server (e.g., an LMF) may transmit to a wireless device, an assistance data for a positioning measurement. The assistance data may indicate (or comprise) a configuration of a PRS. A DL subband in an SBFD symbol may comprise the PRS. An UL subband in the SBFD symbol may comprise the SRS. The wireless device may perform the positioning measurement based on the assistance data. An accuracy of the positioning measurement may be degraded, e.g., due to interference in a DL subband.

Embodiments of the present disclosure are related to an approach for solving the problems described above. These and other features of the present disclosure are described further below.

In an example embodiment, a first node may receive from a second node, an information request for a transmission reception point (TRP) hosted by the first node. The first node may transmit to the second node, an information response indicating a reference signal configuration for positioning in a subband full duplex (SBFD) resource supported by the TRP.

In an example embodiment, a second node may transmit to a first node, an information request for a transmission reception point (TRP) hosted by the first node. The second node may receive from the second node, an information response indicating a reference signal configuration for positioning in a subband full duplex (SBFD) resource supported by the TRP.

The second node (e.g., a gNB-CU, an LMF, etc.) may become aware of the reference signal configuration in an SBFD resource (e.g., a DL subband or an UL subband within an SBFD symbol) supported by the TRP. The second node (e.g., a gNB-CU, an LMF, etc.) may adapt an assistance data (e.g., a configuration of the reference signal) for positioning based on a capability of a wireless device. For example, the second node may not include the reference signal for positioning in the SBFD resource based on the capability of the wireless device. In another example, the second node may include the reference signal for positioning in the SBFD resource based on the capability of the wireless device. The wireless device may perform a positioning measurement based on the assistance data. For example, an accuracy of the positioning measurement may improve measurement based on the assistance data.

In an example embodiment, a first node may receive from a second node, a configuration request for configuring or updating a reference signal for positioning in a subband full duplex (SBFD) resource of a transmission reception point (TRP) hosted by the first node. The first node may transmit to the second node, a configuration response.

In an example embodiment, a second node may transmit to a first node, a configuration request for configuring or updating a reference signal for positioning in a subband full duplex (SBFD) resource of a transmission reception point (TRP) hosted by the first node. The second node may receive from the second node, a configuration response.

The second node (e.g., a gNB-CU, an LMF, etc.) may request the first node (e.g., a gNB-DU, a gNB, etc.) whether the first node is to configure a reference signal for positioning (e.g., a PRS, an SRS, etc.) in an SBFD resource (e.g., a DL subband or an UL subband within an SBFD symbol) of the TRP.

For example, the second node may not include a reference signal for positioning in the SBFD resource. In this example, the second node may request the first node to configure the reference signal for positioning (e.g., a PRS, an SRS, etc.) in a DL symbol and/or an UL symbol of the TRP. In another example, the second node may include the reference signal for positioning in the SBFD resource. In this example, the second node may request the first node to configure the reference signal for positioning (e.g., a PRS, an SRS, etc.) in the SBFD resource of the TRP. For example, the reference signal for positioning (e.g., a PRS, an SRS, etc.) in the SBFD resource may be used more efficiently. For example, the first node may configure the reference signal for positioning (e.g., a PRS, an SRS, etc.) in the SBFD resource based on a request from the second node.

In an example embodiment, a first node may receive from a second node, an information request for a transmission reception point (TRP) hosted by the first node. The first node may transmit to the second node, an information response indicating a reference signal configuration for positioning in a subband full duplex (SBFD) resource supported by the TRP. The reference signal configuration may be associated with a downlink reference signal or an uplink reference signal. The downlink reference signal may comprise a positioning reference signal (PRS) and the reference signal configuration may comprise a PRS configuration. The uplink reference signal may comprise a sounding reference signal (SRS) and the reference signal configuration may comprise an SRS configuration.

In an example embodiment, a second node may transmit to a first node, an information request for a transmission reception point (TRP) hosted by the first node. The second node may receive from the second node, an information response indicating a reference signal configuration for positioning in a subband full duplex (SBFD) resource supported by the TRP. The reference signal configuration may be associated with a downlink reference signal or an uplink reference signal. The downlink reference signal may comprise a positioning reference signal (PRS) and the reference signal configuration may comprise a PRS configuration. The uplink reference signal may comprise a sounding reference signal (SRS) and the reference signal configuration may comprise an SRS configuration.

The second node (e.g., a gNB-CU, an LMF, etc.) may become aware of a type of the reference signal configuration in an SBFD resource (e.g., a DL subband or an UL subband within an SBFD symbol) supported by the TRP. The type of the reference signal configuration may be referred to as a configuration of a PRS or configuration of an SRS. A wireless device may perform a positioning measurement based on the PRS (e.g., an RSTD, a PRS-RSRP, etc.), or based on the PRS and the SRS (e.g., a UE Rx-Tx time difference, a multi-RTT, etc.). The second node may adapt an assistance data (e.g., a configuration of the reference signal) for positioning based on a capability of a wireless device. For example, the second node may include a positioning measurement performed on the PRS (e.g., the RSTD) based on the capability of the wireless device. In another example, the second node may include a positioning measurement performed on the PRS and the SRS (e.g., the UE Rx-Tx time difference) in the assistance data based on the capability of the wireless device. The wireless device may perform a positioning measurement based on the assistance data. An accuracy of the positioning measurement may improve based on the assistance data.

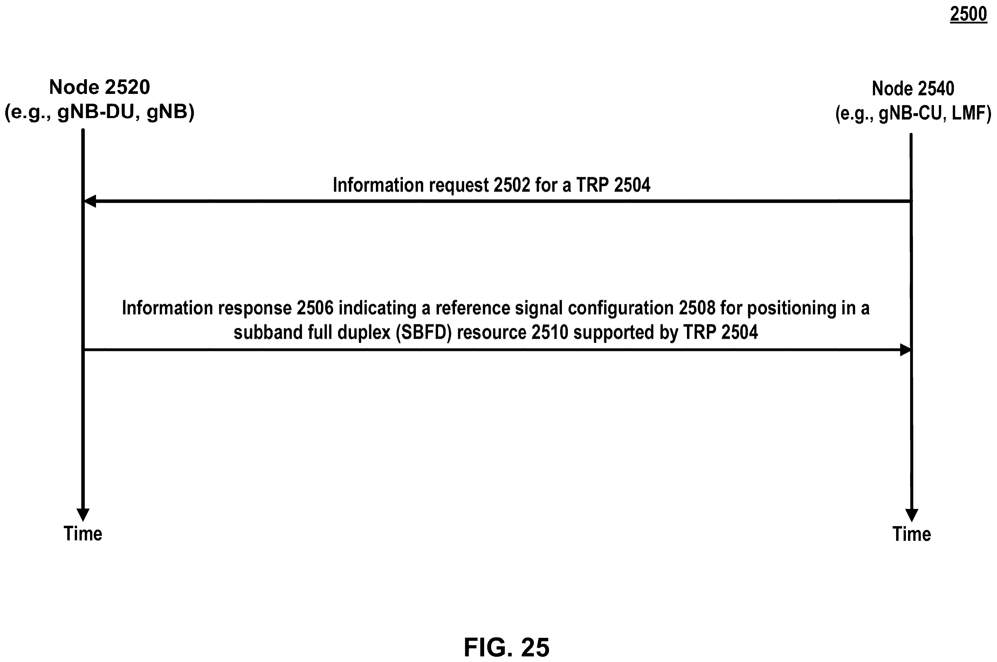

FIG. 25 illustrates an example of an information request procedure 2500 between a node 2520 and a node 2540 per an aspect of the present disclosure. Information request procedure 2500 may also be referred to as a signaling flow for information exchange, a TRP information exchange procedure, a positioning information request procedure, a positioning procedure, or a procedure for providing detailed information for a TRP or a wireless device.

Information request procedure 2300 may exchange information associated with (or for) a TRP 2504. Node 2520 may host (or manage, control, serve, support, etc.) TRP 2504. The features illustrated in FIG. 25 may be combined with the features previously discussed with reference to FIGs. 17, 18, 19, 20, 21, 22, 23, and/or 24.

As shown in FIG. 25, node 2520 may receive from node 2540, an information request 2502 for TRP 2504. Node 2520 may transmit to node 2540, an information response 2506. Information response 2506 may indicate a reference signal configuration 2508 for positioning in a subband full duplex (SBFD) resource 2510 supported by TRP 2504.

Information request procedure 2500 may be initiated (or started or triggered) by node 2540. During information request procedure 2500, node 2520 may communicate with node 2540. Information request procedure 2300 is according to the example embodiments in FIG. 21 (e.g., TRP information exchange procedure 2100) and/or in FIG. 23 (e.g., position information exchange procedure 2300).

Node 2520 may be a RAN node (e.g., a gNB-DU, a gNB, a base station). Node 2540 may be a RAN node (e.g., a gNB-DU, a gNB, a base station) or a location server (e.g., an LMF). Node 2520 and node 25240 are according to the example embodiments in FIG. 21 (e.g., node 2120 and node 2140) and/or in FIG. 23 (e.g., node 2320 and node 2340).

Information request 2502 may be a F1AP message or an NRPPa message. Information request 2502 is according to the example embodiments in FIG. 21 (e.g., TRP information request 2102) and/or in FIG. 23 (e.g., positioning information request 2302). In an example, information request 2502 may indicate a request for one or more parameters of TRP 2504. The one or more parameters may be associated with (or related to) a PRS (or a PRS configuration), an SRS (e.g., an SRS configuration), a TRP (e.g., a TRP ID, a type of a TRP, etc.), a cell (e.g., cell ID (e.g., a PCI, a CGI, etc.) of the cell), a spatial direction of a signal (e.g., a PRS), a spatial related to a signal (e.g., an SRS), a configuration (or support or capability) of a PRS (or PRS resource) in SBFD resource 2510, or a configuration (or support or capability) of an SRS (or SRS resource) in SBFD resource 2510.

In an example, information request 2502 may further indicate whether node 2520 is to include in information response 2506, a configuration (or support or capability) of a PRS (or PRS resource) in SBFD resource 2510. In another example, information request 2502 may further indicate whether node 2520 is include in information response 2506, a configuration (or support or capability) of an SRS (or SRS resource) in SBFD resource 2510.

Information request 2502 may be a F1AP message or an NRPPa message. Information response 2506 is according to the example embodiments in FIG. 21 (e.g., TRP information response 2104) and/or in FIG. 23 (e.g., positioning information response 2304).

Subband full duplex (SBFD) resource 2510 may comprise a DL subband and an UL subband within (or in) an SBFD time resource (e.g., an SBFD symbol). One or more SBFD time resources (e.g., SBFD symbols) may be comprised within an SBFD time period. The DL subband and the UL subband are according to the example embodiments in FIG. 17 (e.g., DL subband 1722 and UL subband 1724) and/or in FIG. 18 (e.g., DL subband 1822, DL subband 1826, and UL subband 1824). The SBFD time resource and the SBFD time period are according to the example embodiments in FIG. 17 (e.g., SBFD time resource 1720 and SBFD time period 1740) and/or in FIG. 18 (e.g., SBFD time resource 1820 and SBFD time period 1840).

TRP 2504 may be associated with a cell. The cell may be associated with (or identified by or indicated by) an identifier, e.g., a PCI, a CGI, etc. SBFD resource 2510 may belong to (or be comprised in or associated with) the cell. TRP 2504 is according to the example embodiments in FIG. 21 (e.g., the TRP), FIG. 22 (e.g., the TRP), FIG. 23 (e.g., the TRP), and/or FIG. 24 (e.g., the TRP).

In an example, TRP 2504 may transmit a DL signal (e.g., a positioning reference signal) and/or receive an UL signal (e.g., an SRS for positioning). In another example, TRP 2504 may transmit a DL signal (e.g., a positioning reference signal (PRS)) in SBFD resource 2510 and/or receive am UL signal (e.g., an SRS or an SRS for positioning) in SBFD resource 2510. In yet another example, a wireless device may transit an UL signal (e.g., a positioning reference signal (PRS)) in the cell and/or receive a DL signal (e.g., an SRS or an SRS for positioning) in the cell. In yet another example, a wireless device may transit an UL signal (e.g., a positioning reference signal) in the cell in SBFD resource 2510 and/or receive a DL signal (e.g., an SRS for positioning) in the cell in SBFD resource 2510. For example, the wireless device may perform a positioning measurement based on the DL signal (e.g., the PRS) and/or on the UL signal (e.g., the SRS or the SRS for positioning).

Reference signal configuration 2508 for positioning may be referred to as a configuration of a positioning reference signal (PRS) or a configuration of a sounding reference signal (SRS). The configuration of the PRS may also be referred to as a PRS configuration. The configuration of the PRS (or the PRS configuration) and the PRS are according to the example embodiments in FIG. 19 (e.g., PRS configuration 1900 and the PRS). The configuration of the SRS may also be referred to as an SRS configuration or an SRS configuration for positioning. The configuration of the SRS (or the SRS configuration) and the SRS are according to the example embodiments in FIG. 20 (e.g., SRS configuration 2000 and the SRS).

In an example, reference signal configuration 2508 (e.g., the PRS configuration) for positioning in SBFD resource 2510 may comprise a reference signal resource set. The reference signal resource set may be associated with a reference signal for positioning (e.g., a PRS, an SRS, etc.). The reference signal resource set may comprise one or more reference signal resources.

The reference signal resource set may comprise (or indicate) a first value associated with a configuration parameter and a second value associated with the configuration parameter. The configuration parameter may be associated with a reference signal for positioning (e.g., a PRS, an SRS, etc.). For example, the first value of the configuration parameter may be associated with (or may be applied or used in) one or more non-SBFD symbols (e.g., downlink symbols). The second value of the configuration parameter may be associated with (or may be applied or used in) one or more SBFD symbols.

In an example, the configuration parameter may comprise at least one of a bandwidth, a transmit power, a comb size, a numerology, a subcarrier spacing, a time duration of cyclic prefix (CP), a type of CP (e.g., a normal CP, an extended CP, etc.), a type of frequency hopping (e.g., sequence hopping or group hopping), a configuration of frequency hopping (e.g., a number of hops, an overlap value in PRBs between hops, etc.), or a frequency domain shift.

For example, the first value of the bandwidth (e.g., the configuration parameter) may be referred to as a first bandwidth, and the second value of the bandwidth (e.g., the configuration parameter) may be referred to as a second bandwidth. In another example, the first value of the transmit power (e.g., the configuration parameter) may be referred to as a first transmit power, and the second value of the transmit power (e.g., the configuration parameter) may be referred to as a second transmit power.

In an example, the first bandwidth and/or the first transmit power may be associated with (or may be applied or used in) non-SBFD symbols (e.g., downlink symbols). The second bandwidth and/or the second transmit power may be associated with (or may be applied or used in) SBFD symbols (e.g., SBFD time resources 1720 in FIG. 17 and/or SBFD time resources 1820 in FIG. 18).

In an example, the first bandwidth may be expressed (or defined) in terms of a number of PRBs. In an example, the second bandwidth may be expressed (or defined) in terms of a number of PRBs. In an example, the first transmit power may be expressed (or defined) in absolute power level, e.g., Z11 dBm. In an example, the second transmit power may be expressed (or defined) in absolute power level, e.g., Z12 dBm. In another example, the second transmit power may be expressed (or defined) relative to the first transmit power, e.g., e.g., Z13 dB. For example, an absolute value of the second transmit power may be determined based on a difference between Z12 and Z13.

The first bandwidth may also be referred to as a first frequency region, a first set of frequency resources, or a first set of PRBs. The second bandwidth may also be referred to as a second frequency region, a second set of frequency resources, or a second set of PRBs. For example, the first bandwidth may be configured with (or indicated by or determined based on) a first starting PRB index (e.g., a first offset from (or relative to) a reference frequency (e.g., a point A)) and a first number of PRBs. The second bandwidth may be configured with (or indicated by or determined based on) a second starting PRB index (e.g., a second offset from from (or relative to) a reference frequency (e.g., the point A)) and a second number of PRBs.

In another example, the second bandwidth may be expressed (or defined) relative to (or based on) the first bandwidth, e.g., an offset of a second staring PRB index compared to a starting PRB index of the first bandwidth, a difference compared to the first bandwidth, etc.

In an example, the reference signal resource set may comprise (or include or associated with) one or more reference signal resources. Each one of the one or more reference signal resources may be associated with a reference signal for positioning (e.g., a PRS, an SRS, etc). One of the one or more reference signal resources may also be referred to as a reference signal resource for positioning (e.g., a PRS resource, an SRS resource, etc.). Each one of the one or more reference signal resources may be associated with the first bandwidth and/or the first transmit power, or with the second bandwidth and/or the second transmit power.

For example, the reference signal resource set may comprise two lists of reference signal resources, e.g., a first list of one or more first reference signal resources and a second list of one or more second reference signal resources. In an example, the first list of the one or more first reference signal resources may be associated with the first value of a configuration parameter (e.g., the first bandwidth and/or the first transmit power). In the example, the second list of the one or more second reference signal resource may be associated with the second value of a configuration parameter (e.g., the second bandwidth and/or the second transmit power).

In another example, an association between each one of the one or more reference signal resources and the first bandwidth and/or the first transmit power, or the second bandwidth and/or the second transmit power, may be determined based on an identifier. The identifier may also be referred to as an indicator, a flag, a reference signal resource flag, or a reference signal resource ID. The identifier of the association may also be referred to as an identifier of a symbol type, e.g., an identifier identifying the non-SBFD symbol and the SBFD symbol.

For example, the identifier of the association may comprise one bit (e.g., bit value 0 and bit value 1). For example, bit value 0 may indicate a first association and bit value 1 may indicate a second association. The first association may indicate that a reference signal resource of the one or more reference signal resources is associated with the first bandwidth and/or the first transmit power. The second association may indicate that a reference signal resource of the one or more reference signal resources is associated with the second bandwidth and/or the second transmit power.

In an example, the identifier of the association may be absent (e.g., not included with a reference signal resource). In an example, absence of the identifier may indicate that a reference signal resource of the one or more reference signal resources may be associated with default parameters. In an example, the default parameters may be the first bandwidth and/or the first transmit power. In another example, absence of the identifier may indicate that a reference signal resource of the one or more reference signal resources may be associated with the non-SBFD symbol.

Reference signal configuration 2508 (e.g., the PRS configuration) for positioning in SBFD resource 2510 may further comprise (or indicate or include) an SBFD configuration associated with TRP 2504. The SBFD configuration is according to the example embodiments in FIG. 17 (e.g., the SBFD configuration) and/or FIG. 18 (e.g., the SBFD configuration). For example, node 2240 (e.g., a gNB-CU, an LMF, etc.) based on the SBFD configuration and the identifier of the association, may determine whether a reference signal resource of the one or more reference signal resources is associated with the first bandwidth and/or the first transmit power, or second bandwidth and/or the second transmit power.

In an example, the reference signal for positioning may be a PRS, the reference signal resource set may be a PRS resource set, and the reference signal resource may be referred to as a PRS resource. In this example, the non-SBFD symbol may be a DL symbol (e.g., DL time resource 1710 in FIG. 17 and/or DL time resource 1810 in FIG. 18).

The first transmit power may be referred to as a PRS resource transmit power (or a PRS resource transmit power in a DL symbol). The first bandwidth may be referred to as a PRS bandwidth (or a PRS bandwidth in a DL symbol). The second transmit power may be referred to as PRS resource transmit power in an SBFD resource. The second bandwidth may be referred to as a PRS bandwidth in an SBFD resource. The SBFD resource may be referred to as (or indicate) an SBFD symbol and/or a DL subband (e.g. DL subband 1722 in FIG. 17, and/or DL subband 1822 and DL subband 1826 in FIG. 18). For example, the PRS bandwidth in an SBFD resource may be equal to or smaller than a bandwidth of the DL subband.

For example, the PRS resource set may comprise two PRS resources, e.g., a first PRS resource and a second PRS resource. In one example, the first PRS resource may be associated with the first transmit power (e.g., the PRS resource transmit power or the PRS resource transmit power in a DL symbol) and/or the first bandwidth (e.g., the PRS bandwidth or the PRS resource transmit power in a DL symbol). The second PRS resource may be associated with the second transmit power (e.g., the PRS resource transmit power in an SBFD resource or a PRS resource transmit power in an SBFD symbol) and/or the second bandwidth (e.g., the PRS bandwidth or the PRS bandwidth in an SBFD symbol).

In the above example, the first bandwidth and the second bandwidth may be 96 PRBs of the PRS and 48 PRBs of the PRS, respectively. For example, the first transmit power and the second transmit power may be 10 dBm and 20 dBm, respectively. In an example, the association between the first PRS resource, and the first transmit power and the first bandwidth may be indicated by bit value 0 of the identifier. For example, the association between the second PRS resource, and the second transmit power and the second bandwidth may be indicated by bit value 1 of the identifier.

In another example, the first PRS resource may be associated with the first transmit power (e.g., the PRS resource transmit power or the PRS resource transmit power in a DL symbol) and/or the first bandwidth (e.g., the PRS bandwidth or the PRS resource transmit power in a DL symbol). The second PRS resource may also be associated with the first transmit power (e.g., the PRS resource transmit power or the PRS resource transmit power in a DL symbol) and/or the first bandwidth (e.g., the PRS bandwidth or the PRS resource transmit power in a DL symbol).

In the above example, the association between the first PRS resource, and the first transmit power and/or the first bandwidth may be indicated by bit value 0 of the identifier. The association between the second PRS resource, and the second transmit power and the second bandwidth may also be indicated by bit value 0 of the identifier.

In another example, the association between the first PRS resource, and the first transmit power and/or the first bandwidth may not be indicated, e.g., the identifier may be absent. The association between the first PRS resource, and the first transmit power and the first bandwidth may not be indicated, e.g., the identifier may be absent. For example, the association that the first PRS resource may be associated with the first transmit power and/or the first bandwidth, may be determined based on a default rule (e.g., an absence of the identifier). For example, the association that the second PRS resource may be associated with the first transmit power and/or the first bandwidth, may be determined based on a default rule (e.g., an absence of the identifier).

In yet another example, the first PRS resource may be associated with the second transmit power (e.g., the PRS resource transmit power or the PRS resource transmit power in a DL symbol) and/or the second bandwidth (e.g., the PRS bandwidth or the PRS resource transmit power in a DL symbol). The second PRS resource may also be associated with the second transmit power (e.g., the PRS resource transmit power or the PRS resource transmit power in a DL symbol) and/or the second bandwidth (e.g., the PRS bandwidth or the PRS resource transmit power in a DL symbol).

In the above example, the association between the first PRS resource, and the first transmit power and/or the first bandwidth may be indicated by bit value 1 of the identifier. The association between the second PRS resource, and the second transmit power and the second bandwidth may also be indicated by bit value 1 of the identifier.

In another example, the reference signal for positioning may be an SRS, the reference signal resource set may be an SRS resource set, and the reference signal resource may be referred to as an SRS resource. In this example, the non-SBFD symbol may be an UL symbol (e.g., UL time resource 1730 in FIG. 17 and/or UL time resource 1830 in FIG. 18).

The first transmit power may be referred to as an SRS resource transmit power (or an SRS resource transmit power in an UL symbol) (e.g., (e.g., transmit power of a wireless device in an UL symbol). The first bandwidth may be referred to as an SRS bandwidth (or a PRS bandwidth in a DL symbol). The second transmit power may be referred to an SRS resource transmit power in an SBFD resource (e.g., transmit power of a wireless device in an UL subband of an SBFD symbol). The second bandwidth may be referred to as an SRS bandwidth in an SBFD resource. The SBFD resource may be referred to as (or indicate) an SBFD symbol and/or an UL subband (e.g. UL subband 1724 in FIG. 17 and/or UL subband 1824 in FIG. 18). For example, the SRS bandwidth in an SBFD resource may be equal to or smaller than a bandwidth of the UL subband.

For example, the SRS resource set may comprise two SRS resources, e.g., a first SRS resource and a second SRS resource. In one example, the first SRS resource may be associated with the first transmit power (e.g., the SRS resource transmit power or the SRS resource transmit power in an UL symbol) and/or the first bandwidth (e.g., the SRS bandwidth or the SRS resource transmit power in an UL symbol). The second SRS resource may be associated with the second transmit power (e.g., the SRS resource transmit power in an SBFD resource or a SRS resource transmit power in an SBFD symbol) and/or the second bandwidth (e.g., the SRS bandwidth or the SRS bandwidth in an SBFD symbol).

In the above example, the first bandwidth and the second bandwidth may be 96 PRBs of the SRS and 48 PRBs of the SRS, respectively. In an example, the first transmit power and the second transmit power may be 10 dBm and 20 dBm, respectively. In an example, the association between the first SRS resource, and the first transmit power and the first bandwidth may be indicated by bit value 0 of the identifier. For example, the association between the second SRS resource, and the second transmit power and the second bandwidth may be indicated by bit value 1 of the identifier.

In another example, the first SRS resource may be associated with the first transmit power (e.g., the SRS resource transmit power or the SRS resource transmit power in an UL symbol) and/or the first bandwidth (e.g., the SRS bandwidth or the SRS resource transmit power in an UL symbol). The second SRS resource may also be associated with the first transmit power (e.g., the SRS resource transmit power or the SRS resource transmit power in an UL symbol) and/or the first bandwidth (e.g., the SRS bandwidth or the SRS resource transmit power in an UL symbol).

In the above example, the association between the first SRS resource, and the first transmit power and/or the first bandwidth may be indicated by bit value 0 of the identifier. The association between the second SRS resource, and the second transmit power and the second bandwidth may also be indicated by bit value 0 of the identifier.

In another example, the association between the first SRS resource, and the first transmit power and/or the first bandwidth may not be indicated, e.g., the identifier may be absent. The association between the first SRS resource, and the first transmit power and the first bandwidth may not be indicated, e.g., the identifier may be absent. For example, the association that the first SRS resource may be associated with the first transmit power and/or the first bandwidth, may be determined based on a default rule (e.g., an absence of the identifier). For example, the association that the second SRS resource may be associated with the first transmit power and/or the first bandwidth, may be determined based on a default rule (e.g., an absence of the identifier).

In yet another example, the first SRS resource may be associated with the second transmit power (e.g., the SRS resource transmit power or the SRS resource transmit power in an UL symbol) and/or the second bandwidth (e.g., the SRS bandwidth or the SRS resource transmit power in an UL symbol). The second SRS resource may also be associated with the second transmit power (e.g., the SRS resource transmit power or the SRS resource transmit power in an UL symbol) and/or the second bandwidth (e.g., the SRS bandwidth or the SRS resource transmit power in an UL symbol).

In the above example, the association between the first SRS resource, and the first transmit power and/or the first bandwidth may be indicated by bit value 1 of the identifier. The association between the second SRS resource, and the second transmit power and the second bandwidth may also be indicated by bit value 1 of the identifier.

In an example, reference signal configuration 2508 (e.g., the PRS configuration) for positioning in SBFD resource 2510 may further comprise at least one of: a PRS resource including at least one SBFD symbol; a number of SBFD symbols in the PRS resource; a comb size of the PRS resource in the SBFD resource; a bandwidth of the PRS resource in the SBFD resource; a frequency location of the PRS resource in the SBFD resource; a transmit power of the PRS resource in the SBFD resource; a subcarrier spacing of the PRS resource in the SBFD resource; a cyclic prefix of the PRS resource in the SBFD resource; a list of PRS resources; a PRS resource set; a periodicity of a PRS resource set; a list of PRS resource sets; a number of carrier frequencies comprising PRS resources in the SBFD resource; an aggregated PRS resource set; a list of aggregated PRS resource sets; a bandwidth of an aggregated PRS resource set in the SBFD resource; or a number of carrier frequencies comprising an aggregated PRS resource set in the SBFD resource.

In an example, the PRS resource may comprise at least one SBFD symbol. For example, a PRS (e.g., one or more PRBs comprising the PRS) of the PRS resource may be comprised in a DL subband in the at least one SBFD symbol. The PRS resource may be indicated (or identified) by an identifier (e.g., a PRS resource ID). The identifier of the PRS resource may be an integer, e.g., between 0 and 63. The PRS resource is according to the example embodiments in FIG. 19 (e.g., PRS resource 1920).

In an example, the number of the SBFD symbols in the PRS resource may be indicated by an integer. A value of the integer may be 2, 4, 6, or 12 SBFD symbols.

In an example, the comb size of the PRS resource in the SBFD resource may indicate a number of subcarriers comprising a PRS in a resource block (RB) (or a PRB). For example, the comb size of the PRS resource may comprise one or more subcarriers. The one or more subcarriers comprising the PRS may be comprised in (or belong to) a DL subband. In an example, the comb size of the PRS resource may be 2, 4, 6, or 12 subcarriers. For example, a comb size of (or corresponding to) 2 subcarriers may indicate that the PRS may be in every second subcarrier of subcarriers of a resource block.

In an example, the bandwidth of the PRS resource in the SBFD resource may be expressed in terms of frequency units (e.g., X11 MHz) or a number of RBs (e.g., X12 RBs). In an example, the bandwidth of the PRS resource be associated with (or depend on) a bandwidth of a DL subband. For example, the bandwidth of the PRS resource may be equal to or smaller than the bandwidth of the DL subband. In another example, the bandwidth of the PRS resource may also be associated with (or depend on) a number of DL subbands and/or a number of UL subbands in an SBFD symbol.

In an example, the bandwidth of the PRS resource may be indicated by an indicator. The indicator may also be referred to as an identifier or an index of a bandwidth. For example, the indicator indicating the bandwidth of the PRS resource may be an integer between 0 and 63. For example, indicator 0, indicator 1, and indicator 63 may correspond to bandwidths of 24 PRBs, 28 PRBs, and 272 PRBs, respectively. The bandwidth of the PRS resource is according to the example embodiments in FIG. 19 (e.g., PRS bandwidth 1930).

In an example, the frequency location of the PRS resource in the SBFD resource may comprise a frequency. The frequency may also be referred to as a starting frequency. For example, the frequency may indicate the starting frequency (e.g., a first frequency) of the PRS resource in the SBFD resource.

In an example, the starting frequency of the PRS resource in the SBFD resource may comprise (or based on) a frequency channel number (e.g., an ARFCN, a NR-ARFCN, etc.). In an example, the frequency channel number (e.g., an ARFCN, a NR-ARFCN, etc.) may be an integer. The frequency channel number may have a value between 0 and 3279165.

In another example, the starting frequency of the PRS resource may comprise (or based on or determined based on) an offset from (or relative to or with respect to or compared to) a reference frequency. The offset may also be referred to as a PRS frequency offset, or a start PRB, a first PRS, or an index of the start (or first) PRB.

For example, the offset may be based on (or determined based on) a difference (or a separation) between the reference frequency and a reference subcarrier of the PRS resource. In an example, the reference frequency may also be referred to as a Point A, an absolute frequency Point A (e.g., a *PointA*), or a common frequency. In an example, the reference subcarrier of the PRS resource may belong to (or be comprised in) the bandwidth of the PRS. In another example, the reference subcarrier may be the lowest subcarrier (or the lowest usable subcarrier) of a reference RB (or PRB) of (or comprised in) the PRS resource. In yet another example, the reference subcarrier may be a subcarrier of index 0 of the reference PRB (e.g., PRB of index or number 0). In an example, the offset may be an integer. The offset may have a value between 0 and 2179 PRBs. For example, an offset 9 PRBs may indicate that the starting frequency of the PRS resource may be 9 PRBs relative to (or from) the Point A in frequency domain.

In an example, transmit power of the PRS resource in the SBFD resource may be a transmit power of the PRS resource in a resource element. The resource element may comprise a PRS. The resource element may be comprised in the SBFD resource (e.g., an SBFD symbol). In an example, the transmit power of the PRS resource may be an average power. For example, transmit power may be an average of power of resource elements comprising the PRS over a time duration. The resource elements may be comprised in the SBFD resource. In an example, the time duration may comprise one or more time resources, e.g., one or more symbols, slots, subframes, or frames. In another example, the time duration may comprise time units, e.g., X31 µs, X32 ms, X33 seconds, etc.

In an example, the transmit power of the PRS resource may have a value between -X41 dBm and +X42 dBm. In an example, a granularity (or resolution) of the transmit power of the PRS resource may be X43 dB. In an example, X41, X42, and X43, may be 60 dBm, 50 dBm, and 1 dB, respectively. In an example, X41, X42, and/or X43 may depend on (or associated) with a bandwidth of a DL subband. In another example, X41, X42, and/or X43 may depend on (or associated) with a number of DL subbands and/or a number of DL subbands in an SBFD symbol. In yet another example, X41, X42, and/or X43 may depend on (or associated) with the bandwidth of the PRS resource in the SBFD resource (e.g., within a DL subband).

In another example, the transmit power of the PRS resource may be based on (or relative to) a reference power. For example, transmit power of the PRS resource may be a difference between an average of power of resource elements comprising the PRS over a time duration (as described above), and the reference power. In an example, the reference power may be a pre-defined value. In an example, the pre-defined value may be a minimum power (e.g., -60 dBm) or a maximum power (e.g., 50 dBm). In another example, the reference power may be an average of power of resource elements comprising PRS in a DL symbol over the time duration. For example, the transmit power of the PRS resource based on (or relative to) the reference power may have a value between -X51 dB to X52 dB with a granularity (or resolution) of X53 dB. In an example, X51, X52, and X53, may be 30 dB, 20 dB, and 1 dB, respectively.

In an example, the subcarrier spacing of the PRS resource in the SBFD resource may be associated with the one or more PRBs (e.g., PRBs comprising the PRS) comprised in the PRS resource. In an example, the bandwidth of the PRS resource may be associated with (or depend on or based on) the SCS. The SCS may be expressed in terms of frequency units (e.g., Y16 KHz). Examples of the SCS may be 15 kHz, 30 kHz, 60 kHz, 120 kHz, 480 kHz, 960 kHz, or any other reasonable value.

In an example, the cyclic prefix (CP) of the PRS resource in the SBFD resource may also referred to as a numerology of a signal, or a CP type. The cyclic prefix may be a normal cyclic prefix (e.g., *Normal*) or an extended cyclic prefix (e.g., *Extended*). For example, a duration of the normal cyclic prefix may be shorter (in time) than a duration of the extended cyclic prefix.

In an example, the list of PRS resources in the SBFD resource may indicate a number of PRS resources (e.g., PRS resource 1920 in FIG. 19) within a PRS resource set (e.g., PRS resource set 1910 in FIG. 19). In an example, at least one PRS resource from among the list of the PRS resources may include (or comprise) at least one SBFD symbol. In an example, the number of the PRS resources may be between 1 and 64. In an example, the number of the PRS resources may also be associated with (or depend on) a number of DL subbands and/or a number of UL subbands in an SBFD symbol.

In an example, the PRS resource set may comprise one or more PRS resources. At least one of the one or more PRS resources may include (or comprise) at least one SBFD symbol. The PRS resource set may be associated with a PRS resource set period (or periodicity). The PRS resource set may be indicated (or identified) by an identifier, e.g., an PRS resource set ID. For example, the PRS set resource ID may be an integer between 0 and 7. The PRS resource set and the PRS resource set period (or periodicity) are according to the example embodiments in FIG. 19 (e.g., PRS resource set 1910 and PRS resource set period 1940).

In an example, the list of the PRS resource sets may indicate a number of PRS resource sets (e.g., PRS resource set 1910 in FIG. 19). The number of the PRS resource sets may be associated with TRP 2504, a carrier frequency (e.g., a positioning frequency layer), or a cell. In an example, at least one PRS resource in a PRS resource set from among the list of the PRS resource sets may include (or comprise) at least one SBFD symbol. In an example, the number of the PRS resource set may be between 1 and 8. In an example, the number of the PRS resource set may also be associated with (or depend on) a number of DL subbands and/or a number of UL subbands in an SBFD symbol.

In an example, the number of carrier frequencies comprising PRS resources in the SBFD resource may be an integer. For example, the number of carrier frequencies may be between 1 and Ncmax. For example, node 2520 may indicate that TRP 2504 may support N11 number of carrier frequencies, e.g., N11 may be a value between 1 and Ncmax.

In an example, the aggregated PRS resource set may also be referred to as a PRS bandwidth aggregation or an aggregated PRS bandwidth. The PRS aggregated PRS resource set may comprise two or more PRS resource sets. A PRS resource set, of the two or more PRS resource sets, is according to the example embodiments in FIG. 19 (e.g., PRS resource set 1910 in FIG. 19). The two or more PRS resource sets may be associated with two or more carrier frequencies (e.g., two or more PFLs). For example, a first PRS resource set may be associated with a first carrier frequency (e.g., a first PFL) and a second PRS resource set may be associated with a second carrier frequency (e.g., a second PFL). In an example, the first carrier frequency and the second carrier frequency may be adjacent to each other in a frequency domain.

In an example, at least one PRS resource in the two or more PRS resource sets may include (or comprise) at least one SBFD symbol. A wireless device may perform a positioning measurement based on a PRS comprised in the aggregated PRS resource set.

In an example, list of the aggregated PRS resource sets may indicate a number of aggregated PRS resource sets. The number of the aggregated PRS resource sets may be associated with TRP 2504, two or more carrier frequencies (e.g., two or more positioning frequency layers), or two or more cells. In an example, the number of the aggregated PRS resource sets may be between 1 and 48. In an example, the number of the aggregated PRS resource set may be associated with (or depend on) a number of DL subbands and/or a number of UL subbands in an SBFD symbol. In another example, the number of the aggregated PRS resource set may be associated with (or depend on) a frequency band.

In an example, a bandwidth of an aggregated PRS resource set in the SBFD resource may indicate a bandwidth of a PRS across two or more PRS resource sets. The two or more PRS resource sets may be comprised in the aggregated PRS resource set. In an example, the bandwidth of the aggregated PRS resource set may be associated with (or depend on) a number of PRS resource set in the aggregated PRS resource set. In another example, the bandwidth of the aggregated PRS resource set may be associated with (or depend on) a frequency band. In another example, the bandwidth of the aggregated PRS resource set may be associated with (or depend on) a bandwidth of a DL subband. In another example, the bandwidth of the aggregated PRS resource set may be associated with (or depend on) a number of DL subbands and/or a number of UL subbands in an SBFD symbol.

In an example, the bandwidth of the PRS resource may be indicated by an indicator. The indicator may also be referred to as an identifier or an index of a bandwidth of the aggregated PRS resource set. For example, the indicator indicating the bandwidth of the PRS resource may be an integer between 0 and 255. For example, the indicator may correspond to (or indicate) a bandwidth in Y11 number of PRBs, e.g., 48 PRBs, 104 PRBs, 344 PRBs, etc.

In another example, the bandwidth of the PRS resource may be indicated by a bandwidth parameter. For example, the bandwidth parameter may correspond to (or indicate) a bandwidth in Y12 MHz, e.g., 10 MHz, 20 MHz, 40 MHz, 50 MHz, 80 MHz, 100 MHz, 160 MHz, 200 MHz, etc.

In an example, the number of carrier frequencies (e.g., PFLs) comprising the aggregated PRS resource set in the SBFD resource may be between 1 and Nacmax. In an example, Nacmax may be 4. In an example, Nacmax may be associated with (or depend on) a frequency band. In another example, Nacmax may be associated with (or depend on) a number of DL subbands and/or a number of UL subbands in an SBFD symbol.

Referring to FIG. 25, in an example, the reference signal configuration 2508 (e.g., the SRS configuration) for positioning in SBFD resource 2510 may further comprise at least one of: an SRS resource including at least one SBFD symbol; a number of SBFD symbols in the SRS resource; a comb configuration for the SRS resource in the SBFD resource; a bandwidth of the SRS resource in the SBFD resource; a frequency location of the SRS resource in the SBFD resource; a transmit power of the SRS resource in the SBFD resource; a subcarrier spacing of the SRS resource in the SBFD resource; a cyclic prefix of the SRS resource in the SBFD resource; a frequency domain shift of the SRS resource in the SBFD resource; a list of SRS resources; an SRS resource set; a periodicity of an SRS resource set; a list of SRS resource sets; an aggregated SRS resource set; a list of aggregated SRS resource sets; a bandwidth of an aggregated SRS resource set in the SBFD resource; a number of aggregated SRS resources across carrier frequencies in the SBFD resource; a number of carrier frequencies comprising aggregated SRS resources in the SBFD resource; an indication of a frequency hopping of the SRS resource in the SBFD resource; a frequency hopping configuration of the SRS resource in the SBFD resource; or an SRS resource type in the SBFD resource.

In an example, the SRS resource may comprise at least one SBFD symbol. For example, an SRS (e.g., one or more PRBs comprising the SRS) of the SRS resource may be comprised in a DL subband in the at least one SBFD symbol. The SRS resource may be indicated by an identifier (e.g., an SRS resource ID). The identifier of the SRS resource may be an integer, e.g., between 0 and 63. The SRS resource is according to the example embodiments in FIG. 20 (e.g., SRS resource 2020).

In an example, the number of the SBFD symbols in the SRS resource may be indicated by an integer. A value of the integer may be 1, 2, 4, 6, or 12 SBFD symbols.

In an example, the comb configuration of the SRS resource in the SBFD resource may indicate a pattern of the SRS resource. For example, the pattern of the SRS resource may indicate a time location and frequency location of subcarriers comprising an SRS.

The comb configuration of the SRS resource in the SBFD resource may comprise (or indicate) a comb size of the SRS resource in the SBFD resource, a comb offset of the SRS resource in the SBFD resource, or a comb cyclic shift (or a cyclic shift of a comb) of the SRS resource in the SBFD resource.

In an example, the comb size of the SRS resource may indicate a number of subcarriers comprising an SRS in a resource block (RB) (or a PRB). For example, the comb size of the SRS resource may comprise one or more subcarriers. The one or more subcarriers comprising the SRS may be comprised in (or belong to) an UL subband. In an example, the comb size of the SRS resource may be 2, 4, or 8 subcarriers. For example, a comb size of (or corresponding to) 2 subcarriers may indicate that the SRS may be in every second subcarrier of subcarriers of a resource block.

In an example, the comb offset may indicate a location (e.g., in a frequency domain) of a starting subcarrier of two or more subcarriers comprising the SRS resource. The SRS resource may be comprised within a resource block. For example, the comb offset may be indicated by an integer, e.g., between 0 and 7.

In an example, the comb cyclic shift may indicate a number of consecutive SBFD symbols. For example, during consecutive SBFD symbols indicated by (or in terms of) the number of consecutive SBFD symbols, subcarriers comprising the SRS resource may not overlap with each other in frequency domain. For example, the comb cyclic shift may be indicated by an integer, e.g., between 0 and 5.

In an example, the bandwidth of the SRS resource in the SBFD resource may be expressed in terms of frequency units (e.g., X21 MHz) or a number of RBs (e.g., X22 RBs). In an example, the bandwidth of the SRS resource be associated with (or depend on) a bandwidth of an UL subband. For example, the bandwidth of the SRS resource may be equal to or smaller than the bandwidth of the UL subband. In another example, the bandwidth of the SRS resource may also be associated with (or depend on) a number of DL subbands and/or a number of UL subbands in an SBFD symbol.

In an example, the bandwidth of the SRS resource may be indicated by an indicator. The indicator may also be referred to as an identifier or an index of a bandwidth. For example, the indicator indicating the bandwidth of the SRS resource may be an integer between 0 and 63. For example, indicator 0, indicator 1, and indicator 63 may correspond to bandwidths of 24 PRBs, 28 PRBs, and 272 PRBs, respectively. The bandwidth of the SRS resource is according to the example embodiments in FIG. 20 (e.g., SRS bandwidth 2030).

In an example, the frequency location of the SRS resource in the SBFD resource may comprise a frequency. The frequency may also be referred to as a starting frequency of the SRS resource. For example, the frequency may indicate the starting frequency (e.g., a first frequency) of the SRS resource in the SBFD resource.

In an example, the starting frequency of the SRS resource in the SBFD resource may comprise (or based on) a frequency channel number (e.g., an ARFCN, a NR-ARFCN, etc.). In an example, the frequency channel number (e.g., an ARFCN, a NR-ARFCN, etc.) may be an integer. The frequency channel number may have a value between 0 and 3279165.

In another example, the starting frequency of the SRS resource may comprise (or based on or determined based on) an offset from (or relative to or with respect to or compared to) a reference frequency. The offset may also be referred to as an SRS frequency offset, or a start PRB, a first SRS, or an index of the start (or first) PRB.

For example, the offset may be based on (or determined based on) a difference (or a separation) between the reference frequency and a reference subcarrier of the SRS resource. In an example, the reference frequency may also be referred to as a Point A, an absolute frequency Point A (e.g., a *PointA*), or a common frequency. In an example, the reference subcarrier of the SRS resource may belong to (or be comprised in) the bandwidth of the SRS. In another example, the reference subcarrier may be the lowest subcarrier (or the lowest usable subcarrier) of a reference RB (or PRB) of (or comprised in) the SRS resource. In yet another example, the reference subcarrier may be a subcarrier of index 0 of the reference PRB (e.g., PRB of index or number 0). In an example, the offset may be an integer. The offset may have a value between 0 and 2179 PRBs. For example, an offset 9 PRBs may indicate that the starting frequency of the SRS resource may be 9 PRBs relative to (or from) the Point A in frequency domain.

In an example, the subcarrier spacing of the SRS resource in the SBFD resource may be associated with the one or more PRBs (e.g., PRBs comprising the SRS) comprised in the SRS resource. In an example, the bandwidth of the SRS resource may be associated with (or depend on or based on) the SCS. The SCS may be expressed in terms of frequency units (e.g., Y21 KHz). Examples of the SCS may be 15 kHz, 30 kHz, 60 kHz, 120 kHz, 480 kHz, 960 kHz, or any other reasonable value.

In an example, the cyclic prefix (CP) of the SRS resource in the SBFD resource may also referred to as a numerology of a signal, or a CP type. The cyclic prefix may be a normal cyclic prefix (e.g., *Normal*) or an extended cyclic prefix (e.g., *Extended*). For example, a duration of the normal cyclic prefix may be shorter (in time) than a duration of the extended cyclic prefix.

In an example, the list of SRS resources in the SBFD resource may indicate a number of SRS resources (e.g., SRS resource 2020 in FIG. 20) within an SRS resource set (e.g., SRS resource set 2010 in FIG. 20). In an example, at least one SRS resource from among the list of the SRS resources may include (or comprise) at least one SBFD symbol. In an example, the number of the SRS resources may be between 1 and 64. In an example, the number of the SRS resources may also be associated with (or depend on) a number of DL subbands and/or a number of UL subbands in an SBFD symbol.

In an example, the SRS resource set may comprise one or more SRS resources. At least one of the one or more SRS resources may include (or comprise) at least one SBFD symbol. The SRS resource set may be associated with an SRS resource set period (or periodicity). The SRS resource set may be indicated by an identifier, e.g., an SRS resource ID. For example, the SRS resource ID may be an integer between 0 and 15. The SRS resource set and the SRS resource set period (or periodicity) are according to the example embodiments in FIG. 20 (e.g., SRS resource set 2010 and SRS resource set period 2040).

In an example, the list of the SRS resource sets may indicate a number of SRS resource sets (e.g., SRS resource set 2010 in FIG. 20). The number of the SRS resource sets may be associated with TRP 2504, a carrier frequency (e.g., a positioning frequency layer, a serving carrier frequency, or a carrier frequency of a serving cell), or a cell. In an example, the cell may be a serving cell (e.g., a spCell, a PCell, a PSCell, or an SCell) of a wireless device. In an example, at least one SRS resource in an SRS resource set from among the list of the SRS resource sets may include (or comprise) at least one SBFD symbol. In an example, the number of the SRS resource set may be between 1 and 16. In an example, the number of the SRS resource set may also be associated with (or depend on) a number of DL subbands and/or a number of UL subbands in an SBFD symbol.

In an example, the number of carrier frequencies comprising SRS resources in the SBFD resource may be an integer. For example, the number of carrier frequencies may be between 1 and Nscmax. For example, node 2520 may indicate that TRP 2504 may support M11 number of carrier frequencies, e.g., M11 may be a value between 1 and Nscmax.

In an example, the aggregated SRS resource set may also be referred to as an SRS bandwidth aggregation or an aggregated SRS bandwidth. The SRS aggregated SRS resource set may comprise two or more SRS resource sets. An SRS resource set, of the two or more SRS resource sets, is according to the example embodiments in FIG. 20 (e.g., SRS resource set 2010 in FIG. 20). The two or more SRS resource sets may be associated with two or more carrier frequencies (e.g., two or more PFLs). For example, a first SRS resource set may be associated with a third carrier frequency (e.g., a first PFL) and a second SRS resource set may be associated with a fourth carrier frequency (e.g., a second PFL). In an example, the third carrier frequency and the fourth carrier frequency may be adjacent to each other in a frequency domain.

In an example, at least one SRS resource in the two or more SRS resource sets may include (or comprise) at least one SBFD symbol. A wireless device may perform a positioning measurement (e.g., a UE Rx-Tx time difference) based on an SRS comprised in the aggregated SRS resource set.

In an example, list of the aggregated SRS resource sets may indicate a number of aggregated SRS resource sets. The number of the aggregated SRS resource sets may be associated with TRP 2504, two or more carrier frequencies (e.g., two or more positioning frequency layers, two or more serving carrier frequencies, etc.), or two or more cells (e.g., two or more serving cells). In an example, the number of the aggregated SRS resource sets may be between 1 and 48. In an example, the number of the aggregated SRS resource set may be associated with (or depend on) a number of DL subbands and/or a number of UL subbands in an SBFD symbol. In another example, the number of the aggregated SRS resource set may be associated with (or depend on) a frequency band.

In an example, a bandwidth of an aggregated SRS resource set in the SBFD resource may indicate a bandwidth of an SRS across two or more SRS resource sets. The two or more SRS resource sets may be comprised in the aggregated SRS resource set. In an example, the bandwidth of the aggregated SRS resource set may be associated with (or depend on) a number of SRS resource sets in the aggregated SRS resource set. In another example, the bandwidth of the aggregated SRS resource set may be associated with (or depend on) a frequency band. In another example, the bandwidth of the aggregated SRS resource set may be associated with (or depend on) a bandwidth of an UL subband. In another example, the bandwidth of the aggregated SRS resource set may be associated with (or depend on) a number of DL subbands and/or a number of UL subbands in an SBFD symbol.

In an example, the bandwidth of the SRS resource may be indicated by an indicator. The indicator may also be referred to as an identifier or an index of a bandwidth of the aggregated SRS resource set. For example, the indicator indicating the bandwidth of the SRS resource may be an integer between 0 and 255. For example, the indicator may correspond to (or indicate) a bandwidth in Y21 number of PRBs, e.g., 48 PRBs, 104 PRBs, 344 PRBs, etc.

In another example, the bandwidth of the SRS resource may be indicated by a bandwidth parameter. For example, the bandwidth parameter may correspond to (or indicate) a bandwidth in Y22 MHz, e.g., 10 MHz, 20 MHz, 40 MHz, 50 MHz, 80 MHz, 100 MHz, 160 MHz, 200 MHz, etc.

In an example, the number of carrier frequencies (e.g., PFLs, serving carrier frequencies, etc.) comprising the aggregated SRS resource set in the SBFD resource may be between 1 and Macmax. In an example, Macmax may be 4. In an example, Macmax may be associated with (or depend on) a frequency band. In another example, Macmax may be associated with (or depend on) a number of DL subbands and/or a number of UL subbands in an SBFD symbol.

In an example, the indication of a frequency hopping of the SRS resource in the SBFD resource may comprise (or indicate) a group hopping, a sequency hopping, or no hopping. For example, the no hopping may indicate that the frequency hopping may be disabled (or not being used).

In an example, the frequency hopping configuration may indicate a number of hops, a number of overlapping resource blocks across the hops, or a type of hopping. In an example, the number of hops may be an integer between 1 and 6. In an example, the number of overlapping resource blocks (RBs) across hops may be an integer number of resource block, e.g., 0, 1, 2, or 4 RBs. In an example, the type of hopping may be referred to as aperiodic, semi-persistent, or a periodic hopping.

In another example, reference signal configuration 2508 for positioning may indicate (or comprise) a TRP type of a TRP (e.g., TRP 2504). The TRP type of a TRP may be associated with (or related to) a type of a reference signal (e.g., a PRS, an SRS, etc.) supported by the TRP (as described below).

In an example, TRP 2504 may support (or be capable of) of only PRS in SBFD resource 2510. TRP 2504 supporting (or capable of) only a PRS in SBFD resource 2510 may be referred to as a first type of TRP. For example, the first type of TRP may transmit a PRS in SBFD resource 2510. For example, the first type of TRP may not receive (or may not be capable of receiving) an SRS in SBFD resource 2510.

In another example, TRP 2504 may support (or be capable of) of only an SRS in SBFD resource 2510. TRP 2504 supporting (or capable of) only an SRS in SBFD resource 2510 may be referred to as a second type of TRP. For example, the second type of TRP may receive (or may be capable of receiving) an SRS in SBFD resource 2510. For example, the second type of TRP may not transmit (or may not be capable of transmitting) a PRS in SBFD resource 2510.

In yet another example, TRP 2504 may support (or be capable of) of a PRS in SBFD resource 2510 and an SRS in SBFD resource 2510. TRP 2504 supporting (or capable of) a PRS in SBFD resource 2510 and an SRS in SBFD resource 2510 may be referred to as a third type of TRP. For example, the third type of TRP may transmit (or may be capable of transmitting) a PRS in SBFD resource 2510 and receive (or may be capable of receiving) an SRS in SBFD resource 2510.

For example, reference signal configuration 2508 for positioning may indicate whether TRP 2504 supports (or is capable of) the first type of TRP, the second type of TRP, or the third type of TRP.

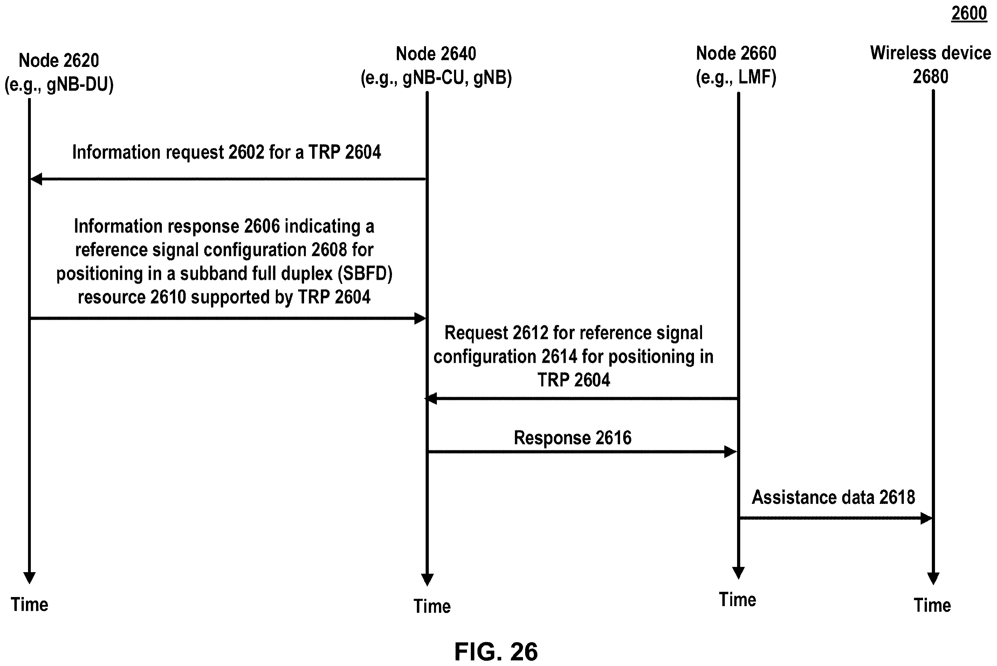

FIG. 26 illustrates an example of a configuration signaling procedure 2600 between a node 2640 and a node 2620, node 2640 and a node 2660, and node 2660 and a wireless device 2680 per an aspect of the present disclosure.

Configuration signaling procedure 2600 may be used by node 2620, to provide node 2640, a reference signal configuration 2608 for positioning in a subband full duplex (SBFD) resource 2610 supported by a TRP 2604. Configuration signaling procedure 2600 may be used by node 2640, receive from node 2660, a request 2612 for a reference signal configuration 2614 for positioning in TRP 2604. Configuration signaling procedure 2600 may be used by node 2660, to provide wireless device 2680, an assistance data 2618. The features illustrated in FIG. 26 may be combined with the features previously discussed with reference to FIGs. 17, 18, 19, 20, 21, 22, 23, 24, and/or 25.

As shown in FIG. 26, node 2620 may receive from a node 2620, an information request 2602 for TRP 2604. Node 2620 may transmit to node 2640, an information response 2606 indicating reference signal configuration 2608 for positioning in SBFD resource 2610 supported by TRP 2604. Node 2640 may receive from node 2660, a request 2612 for reference signal configuration 2614 for positioning in TRP 2604. Node 2640 may transmit to node 2660, a response 2616. Node 2660 may transmit to wireless device 2680, assistance data 2618.

In an example, node 2620 may be a distributed unit of a base station (e.g., a gNB-DU). Node 2620 is according to the example embodiments in FIG. 21 (e.g., node 2120), FIG. 22 (e.g., node 2220), FIG. 23 (e.g., node 2320), FIG. 24 (e.g., node 2420), and/or in FIG. 25 (e.g., node 2520).

In an example, TRP 2604 may be associated with a cell. The cell may be associated with (or identified by or indicated by) an identifier, e.g., a PCI, a CGI, etc. SBFD resource 2610 may belong to (or be comprised in or associated with) the cell. Node 2620 may host (or manage or serve or control) TRP 2604. TRP 2604 is according to the example embodiments in FIG. 21 (e.g., the TRP), FIG. 22 (e.g., the TRP), FIG. 23 (e.g., the TRP), FIG. 24 (e.g., the TRP), and/or FIG. 25 (e.g., TRP 2504).

In an example, node 2640 may be a central unit of a base station (e.g., a gNB-CU) or a base station (e.g., a gNB). For example, node 2640 as the central unit (e.g., a gNB-CU) is according to the example embodiments in FIG. 21 (e.g., node 2140), FIG. 22 (e.g., node 2240), FIG. 23 (e.g., node 2340), FIG. 24 (e.g., node 2440), and/or in FIG. 25 (e.g., node 2540). For example, node 2640 as the base station (e.g., gNB) is according to the example embodiments in FIG. 21 (e.g., node 2120), FIG. 22 (e.g., node 2220), FIG. 23 (e.g., node 2340), FIG. 24 (e.g., node 2420), and/or in FIG. 25 (e.g., node 2520).

In an example, node 2660 may be a location server (e.g., an LMF). Node 2660 is according to the example embodiments in FIG. 21 (e.g., node 2140), FIG. 22 (e.g., node 2240), FIG. 23 (e.g., node 2340), FIG. 24 (e.g., node 2440), and/or in FIG. 25 (e.g., node 2540).

In an example, information request 2602 is according to the example embodiments in FIG. 21 (e.g., TRP information request 2102), FIG. 23 (e.g., positioning information request 2302), and/or in FIG. 25 (e.g., information request 2502).

In an example, information response 2606 is according to the example embodiments in FIG. 21 (e.g., TRP information response 2104), FIG. 23 (e.g., positioning information response 2304), and/or in FIG. 25 (e.g., information response 2506).

In an example, reference signal configuration 2608 for positioning comprised in information response 2606 is according to the example embodiments in FIG. 25 (e.g. reference signal configuration 2508). For example, the reference signal configuration for positioning may be referred to as a configuration of a positioning reference signal (PRS) or a configuration of a sounding reference signal (SRS).

The configuration of the PRS may also be referred to as a PRS configuration. The configuration of the PRS (or the PRS configuration) and the PRS are according to the example embodiments in FIG. 19 (e.g., PRS configuration 1900 and the PRS). The configuration of the PRS (or the PRS configuration) and the PRS are according to the example embodiments in FIG. 19 (e.g., PRS configuration 1900 and the PRS) and/or FIG. 25 (e.g., the PRS configuration and the PRS).

The configuration of the SRS may also be referred to as an SRS configuration or an SRS configuration for positioning. The configuration of the SRS (or the SRS configuration) and the SRS are according to the example embodiments in FIG. 20 (e.g., SRS configuration 2000 and the SRS) and/or FIG. 25 (e.g., the SRS configuration and the PRS).

SBFD resource 2610 is according to the example embodiments in FIG. 25 (e.g., SBFD resource 2510).

Request 2612 is according to the example embodiments in FIG. 22 (e.g., PRS configuration request 2102) and/or in FIG. 24 (e.g., positioning activation request 2402). Reference signal configuration 2608 comprised in request 2612 may be based (or derived from) on reference signal configuration 2608. For example, node 2660 may determine reference signal configuration 2614 based on one or more parameters of (or comprised in) reference signal configuration 2608.

In an example, request 2612 may also be referred to as (or may comprise) a requested DL PRS transmission characteristics message (e.g., *Requested DL PRS Transmission Characteristics* IE). For example, one or more parameters related to a PRS (or a PRS resource) comprised in request 2612 are according to the example embodiments in FIG. 25 (e.g., the PRS configuration).

In another example, request 2612 may also be referred to as (or may comprise) a requested SRS transmission characteristics message (e.g., *Requested SRS Transmission Characteristics* IE). For example, one or more parameters related to an SRS (or an SRS resource) comprised in request 2612 are according to the example embodiments in FIG. 25 (e.g., the SRS configuration).

In an example, based on request 2612, node 2660 may indicate node 2640, to configure (or activate) a reference signal (e.g., a PRS, an SRS, etc.) for positioning in a DL symbol and/or in an UL symbol of TRP 2604. In another example, based on request 2612, node 2660 may indicate node 2640, to configure (or activate) a reference signal for positioning in a symbol other than an SBFD symbol of TRP 2604. In yet another example, based on request 2612, node 2660 may indicate node 2640, to configure (or activate) a reference signal for positioning in an SBFD symbol of TRP 2604. In yet another example, based on request 2612, node 2660 may indicate node 2640, to configure (or activate) a reference signal for positioning in a DL symbol, an UL symbol, or an SBFD symbol of TRP 2604.

In yet another example, based on request 2612, node 2660 may indicate node 2640, to configure a PRS in a no more than L11 number of SBFD symbols in a PRS resource. In yet another example, based on request 2612, node 2660 may indicate node 2640, to configure (or activate) a PRS in a no more than L12 number of SBFD symbols in an SRS resource.

In yet another example, based on request 2612, node 2660 may indicate node 2640, to configure a PRS in an SBFD symbol based on a bandwidth of a DL subband being larger than L13 number of PRBs. In yet another example, based on request 2612, node 2660 may indicate node 2640, to configure a PRS in an SBFD symbol based on a bandwidth of the PRS in a DL subband being larger than L14 number of PRBs.

In yet another example, based on request 2612, node 2660 may indicate node 2640, to configure an SRS in an SBFD symbol based on a bandwidth of an UL subband being larger than L15 number of PRBs. In yet another example, based on request 2612, node 2660 may indicate node 2640, to configure an SRS in an SBFD symbol based on a bandwidth of the SRS in a DL subband being larger than L16 number of PRBs.

Response 2616 is according to the example embodiments in FIG. 22 (e.g., PRS configuration response 2104) and/or in FIG. 24 (e.g., positioning activation response 2404).

In an example, node 2640 may configure (or adapt or modify or activate or deconfigure) a reference signal for positioning in TRP 2604 based on request 2612. For example, node 2640 may configure (or adapt or modify or activate or deconfigure) a reference signal for positioning of TRP 2604 based on one or more parameters of (or comprised in) reference signal configuration 2614. Response 2616 may indicate the reference signal for positioning in TRP 2604.

Assistance data 2618 may be an LTE positioning protocol (LPP) message. A Node 2660 (e.g., an LMF) may determine assistance data 2618. In an example, assistance data 2618 may be based on (determined based on) response 2616. Assistance data 2618 may also be referred to as a positioning measurement configuration, an assistance information, a positioning assistance data, etc. The configuration of the PRS (or the PRS configuration) is according to the example embodiments in FIG. 19 (e.g., PRS configuration 1900) and/or FIG. 22 (e.g., the PRS configuration).

Assistance data 2618 may indicate a configuration of a PRS (or a PRS configuration). Assistance data 2618 may further indicate one or more positioning measurements (e.g., an RSTD, a PRS-RSRP, a PRS-RSRPP, a UE Rx-Tx time difference, a carrier phase positioning measurement, etc.). The wireless device may perform the one or more measurements based on assistance data 2618. For example, the wireless device may receive the PRS. The wireless device may perform the one or more measurements based on the PRS. In another example, the wireless device may perform the one or more measurements (e.g., UE Rx-Tx time difference) based on the PRS and an SRS.

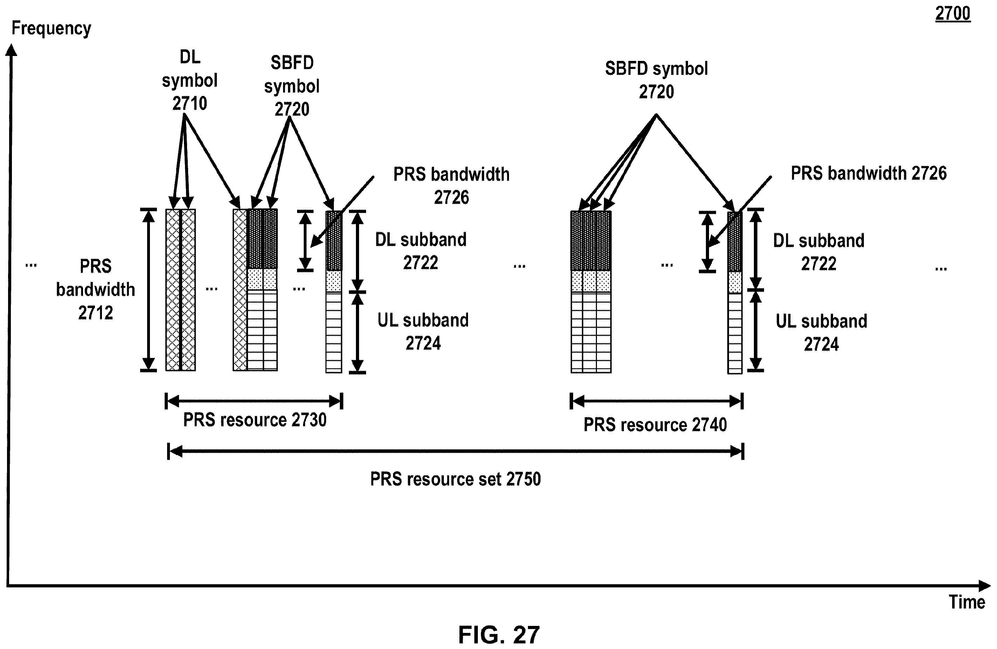

FIG. 27 illustrates an example of a positioning reference signal (PRS) configuration 2700. PRS configuration 2700 may comprise (or indicate) a configuration of a PRS in a subband full duplex (SBFD) resource. PRS configuration 2700 is according to the example embodiments in FIG. 19 (e.g., PRS configuration 1900), FIG. 25 (e.g., reference configuration 2508 and the PRS configuration), and/or FIG. 26 (e.g., reference configuration 2608, reference configuration 2614, and the PRS configuration). The features illustrated in FIG. 27 may be combined with the features previously discussed with reference to FIGs. 17, 18, 19, 20, 21, 22, 23, 24, 25, and/or 26.

PRS configuration 2700 may be associated with (or related to or for) a TRP. The TRP may further be associated with a cell. The cell may be a neighbor cell or a serving cell (e.g., an spCell, a PCell, a PSCell, or an SCell). The TRP and the cell are according to the example embodiments in FIG. 21 (e.g., the TRP and the cell), FIG. 22 (e.g., the TRP and the cell), FIG. 23 (e.g., the TRP and the cell), FIG. 24 (e.g., the TRP and the cell), FIG. 25 (e.g., TRP 2504 and the cell), and/or FIG. 26 (e.g., TRP 2604 and the cell).

As illustrated in FIG. 27, PRS configuration 2700 may comprise (or include or contain) a PRS resource 2730 and a PRS resource 2740. PRS resource 2730 and PRS resource 2740 may be comprised in (or belong to) a PRS resource set 2750. In an example (not shown in FIG. 27), PRS configuration 2700 may also comprise (or include or contain) two or more PRS resources 2730 and two or more PRS resources 2740, PRS resource 2730 and two or more PRS resources 2740, or two or more PRS resources 2730 and PRS resource 2740. PRS resource 2730, PRS resource 2740, and PRS resource set 2750 are according to the example embodiments in FIG. 19 (e.g., PRS resource 1920 and PRS resource set 1910) and/or in FIG. 25 (e.g., the PRS resource and the PRS resource set).

PRS resource 2730 may comprise (or include or contain) one or more DL symbols 2710 and one or more SBFD symbols 2720. In an example (not shown in FIG. 27), PRS resource 2730 may also comprise (or include or contain) only one or more SBFD symbols 2720. PRS resource 2730 may also be referred to as a first PRS resource within (or of) PRS resource set 2750. PRS resource 2730 may be indicated by (or identified by) an index or an identifier (e.g., PRS resource ID). One or more DL symbols 2710 and one or more SBFD symbols 2720 are according to the example embodiments in FIG. 17 (e.g., DL time resource 1710 and SBFD time resource 1720) and/or in FIG. 18 (e.g., DL time resource 1810 and SBFD time resource 1820). The PRS resource ID is according to the example embodiments in FIG. 19 (e.g., the PRS resource ID) and/or in FIG. 25 (e.g., the PRS resource ID).

PRS resource 2740 may comprise (or include or contain) one or more SBFD symbols 2720. In an example (not shown in FIG. 27), PRS resource 2740 may also comprise (or include or contain) one or more SBFD symbols 2720 and one or more DL symbols 2710. PRS resource 2740 may also be referred to as a last (or ending) PRS resource within (or of) PRS resource set 2750. PRS resource 2740 may also be indicated by (or identified by) an index or an identifier (e.g., PRS resource ID). The PRS resource ID is according to the example embodiments in FIG. 19 (e.g., the PRS resource ID) and/or in FIG. 25 (e.g., the PRS resource ID).

A PRS bandwidth 2712 may be a bandwidth (or a transmission bandwidth) of PRS resource 2730 or PRS resource set 2750 in DL symbol 2710. For example, DL symbol 2710 may comprise (or include) a positioning reference signal (PRS). For example, PRS bandwidth 2712 may also be referred to as a bandwidth (or a transmission bandwidth) of the PRS of PRS resource 2730 (or PRS resource set 2750) in DL symbol 2710. PRS bandwidth 2712 is according to the example embodiments in FIG. 19 (e.g., PRS bandwidth 1930).

SBFD symbol 2720 may comprise a DL subband 2722 and an UL subband 2724. In an example (not shown in FIG. 27), SBFD symbol 2720 may comprise two or more DL subbands 2722 and two or more UL subbands 2724, two or more DL subbands 2722 and one UL subband 2724, or one DL subband 2722 and two or more UL subbands 2724. DL subband 2722 and UL subband 2724 are according to the example embodiments in FIG. 17 (e.g., DL subband 1722 and UL subband 1724) and/or in FIG. 18 (e.g., DL subband 1822, DL subband 1826, and UL subband 1824).

A PRS bandwidth 2726 may be a bandwidth (or a transmission bandwidth) of PRS resource 2730 or PRS resource set 2750 in SBFD symbol 2720. PRS bandwidth 2726 may be within DL subband 2722. In an example, PRS bandwidth 2726 may be equal to or smaller than a bandwidth of DL subband 2722. For example, a positioning reference signal (PRS) may be comprised within DL subband 2722 of SBFD symbol 2720. PRS bandwidth 2726 may also be referred to as a bandwidth (or a transmission bandwidth) of the PRS of PRS resource 2730 (or PRS resource set 2750) in SBFD symbol 2720. PRS bandwidth 2712 is according to the example embodiments in FIG. 19 (e.g., PRS bandwidth 1930) and/or in FIG. 25 (e.g., the bandwidth of the PRS resource in the SBFD resource).

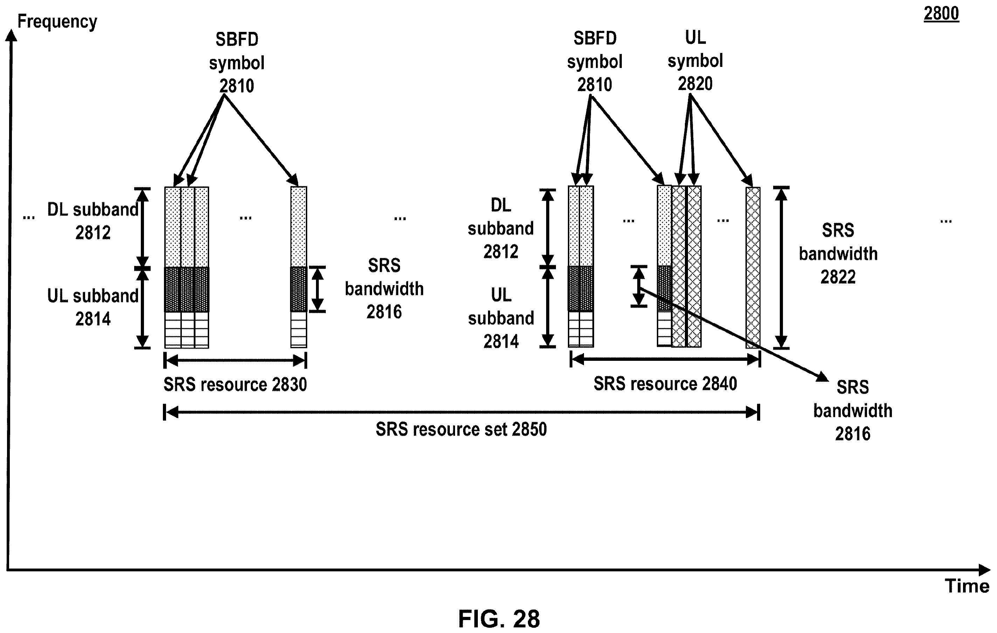

FIG. 28 illustrates an example of a sounding reference signal (SRS) configuration 2800. SRS configuration 2800 may comprise (or indicate) a configuration of an SRS in a subband full duplex (SBFD) resource. PRS configuration 2800 is according to the example embodiments in FIG. 20 (e.g., SRS configuration 2000), FIG. 25 (e.g., reference configuration 2508 and the SRS configuration), and/or FIG. 26 (e.g., reference configuration 2608, reference configuration 2614, and the SRS configuration). The features illustrated in FIG. 28 may be combined with the features previously discussed with reference to FIGs. 17, 18, 19, 20, 21, 22, 23, 24, 25, 26, and/or 27.

SRS configuration 2800 may be associated with (or related to or for) a cell. The cell may be a serving cell, e.g., an spCell, a PCell, a PSCell, or an SCell. The cell is according to the example embodiments in FIG. 20 (e.g., the cell), FIG. 21 (e.g., the cell), FIG. 22 (e.g., the cell), FIG. 23 (e.g., the cell), FIG. 24 (e.g., the cell), FIG. 25 (e.g., the cell), and/or FIG. 26 (e.g., the cell).

As illustrated in FIG. 28, SRS configuration 2800 may comprise (or include or contain) an SRS resource 2830 and an SRS resource 2840. SRS resource 2830 and SRS resource 2840 may be comprised in (or belong to) an SRS resource set 2850. In an example (not shown in FIG. 28), SRS configuration 2800 may also comprise (or include or contain) two or more SRS resources 2830 and two or more SRS resources 2840, SRS resource 2830 and two or more SRS resources 2840, two or more SRS resources 2830 and SRS resource 2840, or one or more SRS resources 2830. SRS resource 2830, SRS resource 2840, and SRS resource set 2850 are according to the example embodiments in FIG. 20 (e.g., SRS resource 2020 and SRS resource set 2010) and/or in FIG. 25 (e.g., the SRS resource and the SRS resource set).

SRS resource 2830 may comprise (or include or contain) one or more SBFD symbols 2810. In an example (not shown in FIG. 28), SRS resource 2830 may also comprise (or include or contain) one or more SBFD symbols 2810 and one or more UL symbols 2820. SRS resource 2830 may also be referred to as a first (or starting) SRS resource within (or of) SRS resource set 2850. SRS resource 2830 may also be indicated by (or identified by) an index or an identifier (e.g., SRS resource ID). The SRS resource ID is according to the example embodiments in FIG. 20 (e.g., the SRS resource ID) and/or in FIG. 25 (e.g., the SRS resource ID).

SRS resource 2840 may comprise (or include or contain) one or more SBFD symbols 2810 and one or more UL symbols 2820. In an example (not shown in FIG. 28), SRS resource 2840 may also comprise (or include or contain) only one or more SBFD symbols 2810. SRS resource 2840 may also be referred to as a last (or ending) SRS resource within (or of) SRS resource set 2850. SRS resource 2840 may be indicated by (or identified by) an index or an identifier (e.g., SRS resource ID). One or more SBFD symbols 2810 and one or more UL symbols 2820 are according to the example embodiments in FIG. 17 (e.g., SBFD time resource 1720 and UL time resource 1730) and/or in FIG. 18 (e.g., SBFD time resource 1820 and UL time resource 1830). The SRS resource ID is according to the example embodiments in FIG. 20 (e.g., the SRS resource ID) and/or in FIG. 25 (e.g., the SRS resource ID).

SBFD symbol 2810 may comprise a DL subband 2812 and an UL subband 2814. In an example (not shown in FIG. 28), SBFD symbol 2810 may comprise two or more DL subbands 2812 and two or more UL subbands 2814, two or more DL subbands 2812 and one UL subband 2814, or one DL subband 2812 and two or more UL subbands 2814. DL subband 2812 and UL subband 2814 are according to the example embodiments in FIG. 17 (e.g., DL subband 1722 and UL subband 1724) and/or in FIG. 18 (e.g., DL subband 1822, DL subband 1826, and UL subband 1824).

An SRS bandwidth 2816 may be a bandwidth (or a transmission bandwidth) of SRS resource 2830 or SRS resource set 2850 in SBFD symbol 2810. SRS bandwidth 2816 may be within UL subband 2814. In an example, SRS bandwidth 2816 may be equal to or smaller than a bandwidth of UL subband 2814. For example, a sounding reference signal (SRS) may be comprised within UL subband 2814 of SBFD symbol 2810. SRS bandwidth 2816 may also be referred to as a bandwidth (or a transmission bandwidth) of the SRS of SRS resource 2830 (or SRS resource set 2850) in SBFD symbol 2810. SRS bandwidth 2816 is according to the example embodiments in FIG. 20 (e.g., SRS bandwidth 2030) and/or in FIG. 25 (e.g., the bandwidth of the SRS resource in the SBFD resource).

An SRS bandwidth 2822 may be a bandwidth (or a transmission bandwidth) of SRS resource 2840 or SRS resource set 2850 in UL symbol 2820. For example, UL symbol 2820 may comprise (or include) a sounding reference signal (SRS). For example, SRS bandwidth 2822 may also be referred to as a bandwidth (or a transmission bandwidth) of the SRS of SRS resource 2840 (or SRS resource set 2850) in UL symbol 2820. SRS bandwidth 2822 is according to the example embodiments in FIG. 20 (e.g., SRS bandwidth 2030).

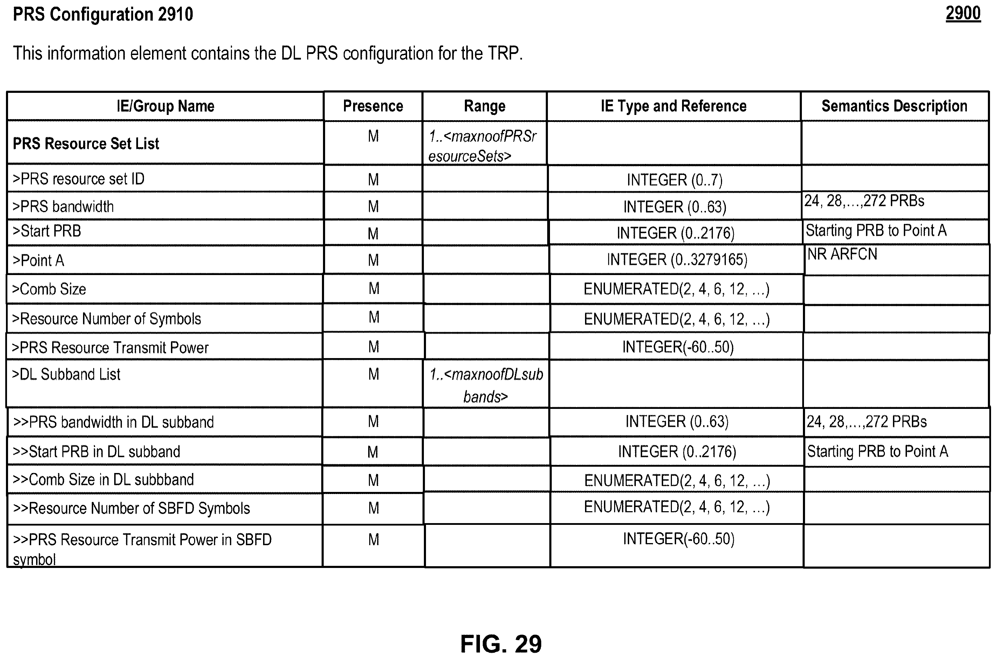

FIG. 29 illustrates an example of a PRS configuration 2910 (e.g., *PRS configuration IE*) as per an aspect of an embodiment of the present disclosure. PRS configuration 2910 may comprise one or more parameters associated with a positioning reference signal (PRS). The features illustrated in FIG. 29 may be combined with the features previously discussed with reference to FIGs. 17, 18, 19, 20, 21, 22, 23, 24, 25, 26, 27, and/or 28.

In the example of FIG. 29, a first node (e.g., a distributed unit of a base station, a gNB-DU, a gNB, etc.) may transmit to a second node (e.g., a central unit of a base station, a gNB-CU, an LMF, etc.), PRS configuration 2910 (e.g., *PRS configuration IE*). PRS configuration 2910 (e.g., *PRS configuration IE*) may be a X1AP, or an NRPPa message. PRS configuration 2910 (e.g., *PRS configuration IE*) may be transmitted during a TRP information exchange procedure. The TRP information exchange procedure is according to the example embodiments in FIG. 21 (e.g., TRP information exchange procedure 2100), FIG. 22 (e.g., PRS configuration exchange procedure 2200), FIG. 25 (e.g., information request procedure 2500), and/or in FIG. 26 (e.g., configuration signaling procedure 2600).

The first node and the second node are according to the example embodiments in FIG. 21 (e.g., node 2120 and node 2140 respectively), FIG. 22 (e.g., node 2120 and node 2240 respectively), FIG. 25 (e.g., node 2520 and node 2540 respectively), and/or FIG. 26 (e.g., node 2620, and node 2640 or node 2660, respectively).

PRS configuration 2910 (e.g., *PRS configuration IE*) may be comprised in an information request message or an information response message. The information request message and the information response message are according to the example embodiments in FIG. 21 (e.g., TRP information request 2102 and TRP information response 2104), FIG. 22 (e.g., PRS configuration request 2202 and PRS configuration response 2204), FIG. 25 (e.g., information request 2502 and information response 2506), and/or FIG. 26 (e.g., information request 2602, information response 2606, request 2612, or response 2616).

As shown in FIG. 29, PRS configuration 2910 may be associated with (or comprise information of) a TRP (e.g., TRP 2504 in FIG. 25 and TRP 2604 in FIG. 26). PRS configuration 2910 may comprise information associated with a PRS resource set (e.g., PRS resource set 1910 in FIG. 19). A PRS resource set list (e.g., *PRS resource set list*) may indicate a number of the PRS resource sets associated with the TRP. The PRS resource set list (e.g., *PRS resource set list*) may be an integer between 1 and a maximum number of the PRS resource sets (e.g., *maxnoofPRSresourceSets*). In an example, the maximum number of the PRS resource sets (e.g., *maxnoofPRSresourceSets*) may be 8. Each PRS resource set from among the PRS resource sets may be associated with a PRS resource set ID (e.g., *PRS resource set ID*). The PRS resource set ID (e.g., *PRS resource set ID*) may be an integer between 0 and 7.

A PRS bandwidth (e.g., *PRS bandwidth*) may be a bandwidth of a PRS resource in a DL symbol. The PRS bandwidth (e.g., *PRS bandwidth*) may be an index (or an identifier or an indicator). The index may indicate (or correspond to) a bandwidth of a PRS resource in PRBs. The index may be an integer between 0 and 63. For example, index 0, index 1, and index 63 may indicate 24 PRBs, 28 PRBs, and 272 PRBs, respectively.

A start PRB (e.g., *Start PRB*) may be associated with a PRS resource in a DL symbol. The start PRB (e.g., *Start PRB*) may comprise (or indicate) a starting (or first) PRB of a PRS resource in a frequency domain. The start PRB (e.g., *Start PRB*) may be an integer between 0 and 2176. The start PRB (e.g., *Start PRB*) may be relative to a point A (e.g., *Point A*). The point A (e.g., *Point A*) may be a reference frequency. The start PRB (e.g., *Start PRB*) 4 may indicate that the first PRB of a PRS resource may start 4 PRBs relative to the point A (e.g., after the point A in a frequency domain).

A comb size (e.g., *Comb Size*) may be associated with a PRS resource in a DL symbol. The comb size (e.g., *Comb Size*) may indicate number (or density) of subcarriers comprising a PRS in a PRB. The comb size (e.g., *Comb Size*) may be 2, 4, 6, or 12. For example, the comb size (e.g., *Comb Size*) of 2 may indicate that every second subcarrier in a PRB comprises the PRS.

Resource number of symbols (e.g., *Resource Number of Symbols*) may be associated with a PRS resource in a DL symbol. The resource number of symbols (e.g., *Resource Number of Symbols*) may indicate a number of DL symbols comprising (or containing) a PRS resource. The resource number of symbols (e.g., *Resource Number of Symbols*) may be 2, 4, 6, or 12, DL symbols.

PRS resource transmit power (e.g., *PRS Resource Transmit Power*) may be associated with a PRS resource in a DL symbol. The PRS resource transmit power (e.g., *PRS Resource Transmit Power*) may indicate transmit power of a PRS resource in a DL symbol. The PRS resource transmit power (e.g., *PRS Resource Transmit Power*) may be between -60 dBm to 50 dBm. In an example, the PRS resource transmit power (e.g., *PRS Resource Transmit Power*) may be referred to as an average power of the PRS resource. For example, the average power may be based on one or more DL symbols in a time domain.

A DL subband list (e.g., *DL Subband List*) may be associated with an SBFD symbol. The DL subband list (e.g., *DL Subband List*) may indicate a number of DL subbands in the SBFD symbol. The DL subband list (e.g., *DL Subband List*) may be an integer between 1 and a maximum number of DL subbands (e.g., *maxnoofDLsubbands*). In an example, the maximum number of DL subbands (e.g., *maxnoofDLsubbands*) may be 2.

A PRS bandwidth in DL subband (e.g., *PRS bandwidth in DL subband*) may be a bandwidth of a PRS resource in an SBFD symbol. The in DL subband (e.g., *PRS bandwidth in DL subband*) may be an index (or an identifier or an indicator). The index may indicate (or correspond to) a bandwidth of a PRS resource in PRBs. The index may be an integer between 0 and 63. For example, index 0, index 1, and index 63 may indicate 24 PRBs, 28 PRBs, and 272 PRBs, respectively.

A start PRB in DL subband (e.g., *Start PRB in DL subband*) may be associated with a PRS resource in an SBFD symbol. The start PRB in DL subband (e.g., *Start PRB in DL subband*) may comprise (or indicate) a starting (or first) PRB of a PRS resource (in an SBFD symbol) in a frequency domain. The start PRB (e.g., *Start PRB*) may be an integer between 0 and 2176. The in DL subband (e.g., *Start PRB in DL subband*) may be relative to a point A (e.g., *Point A).* The point A (e.g., *Point A*) may be a reference frequency. The start PRB (e.g., *Start PRB*) 4 may indicate that the first PRB of a PRS resource may start 4 PRBs relative to the point A (e.g., after the point A in a frequency domain).

A comb size in DL subband (e.g., *Comb Size in DL subband*) may be associated with a PRS resource in an SBFD symbol. The comb size in DL subband (e.g., *Comb Size in DL subband*) may indicate number (or density) of subcarriers comprising a PRS in a PRB. The comb size in DL subband (e.g., *Comb Size in DL subband*) may be 2, 4, 6, or 12. For example, the comb size in DL subband (e.g., *Comb Size in DL subband*) of 2 may indicate that every second subcarrier in a PRB (in an SBFD symbol) comprises the PRS.

Resource number of SBFD symbols (e.g., *Resource Number of SBFD Symbols*) may be associated with a PRS resource in an SBFD symbol. The resource number of SBFD symbols (e.g., *Resource Number of SBFD Symbols*) may indicate a number of SBFD symbols comprising (or containing) a PRS resource. The resource number of SBFD symbols (e.g., *Resource Number of SBFD Symbols*) may be 2, 4, 6, or 12, SBFD symbols.

PRS resource transmit power in SBFD symbol (e.g., *PRS Resource Transmit Power in SBFD symbol*) may be associated with a PRS resource in an SBFD symbol. The PRS resource transmit power in SBFD symbol (e.g., *PRS Resource Transmit Power in SBFD symbol*) may indicate transmit power of a PRS resource in an SBFD symbol. The PRS resource transmit power in SBFD symbol (e.g., *PRS Resource Transmit Power in SBFD symbol*) may be between -60 dBm to 50 dBm. In an example, the PRS resource transmit power in SBFD symbol (e.g., *PRS Resource Transmit Power in SBFD symbol*) may be referred to as an average power of the PRS resource. For example, the average power may be based on one or more SBFD symbols in a time domain.

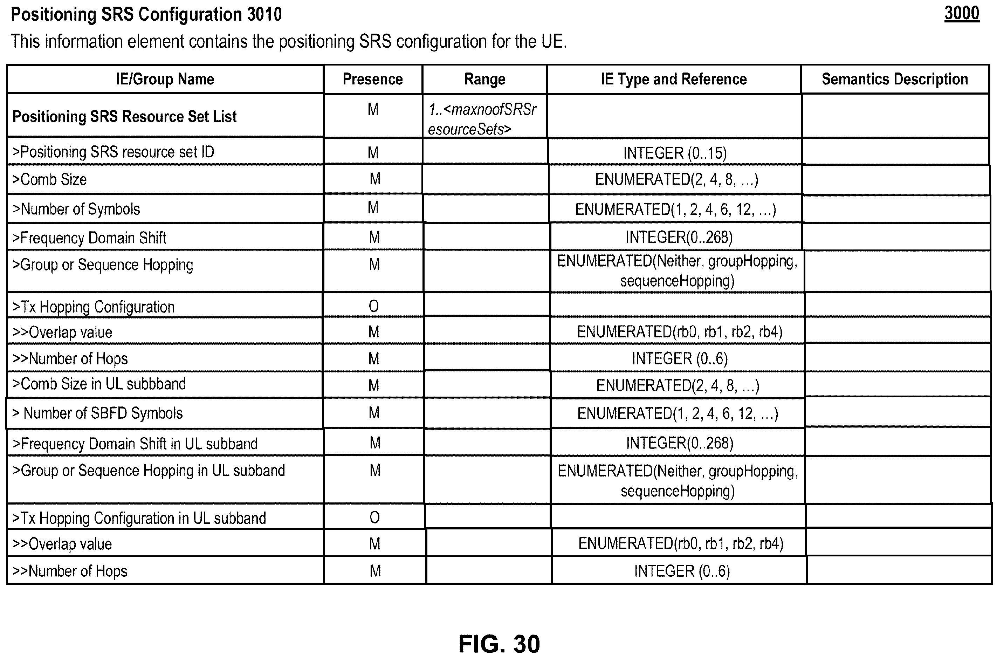

FIG. 30 illustrates an example of an SRS configuration 3010 (e.g., *SRS configuration IE*) as per an aspect of an embodiment of the present disclosure. SRS configuration 3010 may comprise one or more parameters associated with a sounding reference signal (SRS) (or an SRS for positioning or a positioning SRS). The features illustrated in FIG. 30 may be combined with the features previously discussed with reference to FIGs. 17, 18, 19, 20, 21, 22, 23, 24, 25, 26, 27, 28 and/or 29.

In the example of FIG. 30, a first node (e.g., a distributed unit of a base station, a gNB-DU, a gNB, etc.) may transmit to a second node (e.g., a central unit of a base station, a gNB-CU, an LMF, etc.), SRS configuration 3010 (e.g., *SRS configuration IE*). SRS configuration 3010 (e.g., *SRS configuration IE*) may be a X1AP, or an NRPPa message. SRS configuration 3010 (e.g., *SRS configuration IE*) may be transmitted during a positioning information exchange procedure. The positioning information exchange procedure is according to the example embodiments in FIG. 23 (e.g., positioning information exchange procedure 2300), FIG. 24 (e.g., positioning activation procedure 2400), FIG. 25 (e.g., information request procedure 2500), and/or in FIG. 26 (e.g., configuration signaling procedure 2600).

The first node and the second node are according to the example embodiments in FIG. 21 (e.g., node 2120 and node 2140 respectively), FIG. 22 (e.g., node 2120 and node 2240 respectively), FIG. 25 (e.g., node 2520 and node 2540 respectively), and/or FIG. 26 (e.g., node 2620, and node 2640 or node 2660, respectively).

SRS configuration 3010 (e.g., *SRS configuration IE*) may be comprised in an positioning information request message or a positioning information response message. The positioning information request message and the positioning information response message are according to the example embodiments in FIG. 23 (e.g., positioning information request 2302 and positioning information response 2304), FIG. 24 (e.g., positioning activation request 2402 and positioning activation response 2404), FIG. 25 (e.g., information request 2502 and information response 2506), and/or FIG. 26 (e.g., information request 2602, information response 2606, request 2612, or response 2616).

As shown in FIG. 30, SRS configuration 3010 may be associated with (or comprise information of) a TRP (e.g., TRP 2504 in FIG. 25 and TRP 2604 in FIG. 26). SRS configuration 3010 may comprise information associated with an SRS resource set (e.g., SRS resource set 2010 in FIG. 20). An SRS resource set list (e.g., *SRS resource set list*) may indicate a number of the SRS resource sets associated with the TRP. The SRS resource set list (e.g., *SRS resource set list*) may be an integer between 1 and a maximum number of the SRS resource sets (e.g., *maxnoofSRSresourceSets*). In an example, the maximum number of the SRS resource sets (e.g., *maxnoofSRSresourceSets*) may be 8. Each SRS resource set from among the SRS resource sets may be associated with an SRS resource set ID (e.g., *SRS resource set ID*). The SRS resource set ID (e.g., *SRS resource set ID*) may be an integer between 0 and 7.

A comb size (e.g., *Comb Size*) may be associated with an SRS resource in an UL symbol. The comb size (e.g., *Comb Size*) may indicate number (or density) of subcarriers comprising an SRS in a PRB. The comb size (e.g., *Comb Size*) may be 2, 4, 6, or 12. For example, the comb size (e.g., *Comb Size*) of 2 may indicate that every second subcarrier in a PRB comprises the SRS.

Resource number of symbols (e.g., *Resource Number of Symbols*) may be associated with an SRS resource in an UL symbol. The resource number of symbols (e.g., *Resource Number of Symbols*) may indicate a number of UL symbols comprising (or containing) an SRS resource. The resource number of symbols (e.g., *Resource Number of Symbols*) may be 1, 2, 4, 6, or 12, UL symbols.

A frequency domain shift (e.g., *Frequency Domain Shift*) may be associated with an UL symbol. The frequency domain shift (e.g., *Frequency Domain Shift*) may align (or adjust) PRBs of the SRS resource with a reference resource block (e.g., a common resource block grid). The frequency domain shift (e.g., *Frequency Domain Shift*) may be between 0 and 268 PRBs.

A group or sequence hopping (e.g., *Group or Sequence Hopping*) may be associated with a frequency hopping of an SRS resource in an UL symbol. The group or sequence hopping (e.g., *Group or Sequence Hopping*) may indicate neither group or sequence hopping (e.g., *neither*), a group hopping (e.g., *Group*), or a sequence hopping (e.g., *Sequence Hopping*).

A Tx hopping configuration (e.g., *Tx Hopping Configuration*) may be associated with a frequency hopping of an SRS resource in an UL symbol. The Tx hopping configuration (e.g., *Tx Hopping Configuration*) may comprise an overlap value (e.g., *Overlap value*) and a number of hops (e.g., *Number of hops*). The overlap value (e.g., *Overlap value*) may be 0, 1, 2 or 4 PRBs. The number of hops (e.g., *Number of hops*) may be an integer between 0 and 6.

A comb size in UL subband (e.g., *Comb Size in UL subband*) may be associated with a PRS resource in an SBFD symbol. The comb size in UL subband (e.g., *Comb Size in UL subband*) may indicate number (or density) of subcarriers comprising an SRS in a PRB. The comb size in UL subband (e.g., *Comb Size in UL subband*) may be 2, 4, 6, or 12. For example, the comb size in UL subband (e.g., *Comb Size in DL subband*) of 2 may indicate that every second subcarrier in a PRB (in an SBFD symbol) comprises the SRS.

Resource number of SBFD symbols (e.g., *Resource Number of SBFD Symbols*) may be associated with an SRS resource in an SBFD symbol. The resource number of SBFD symbols (e.g., *Resource Number of SBFD Symbols*) may indicate a number of SBFD symbols comprising (or containing) an SRS resource. The resource number of SBFD symbols (e.g., *Resource Number of SBFD Symbols*) may be 1, 2, 4, 6, or 12, SBFD symbols.

A frequency domain shift in UL subband (e.g., *Frequency Domain Shift in UL subband*) may be associated with an SBFD symbol. The frequency domain shift in UL subband (e.g., *Frequency Domain Shift in UL subband*) may align (or adjust) PRBs of the SRS resource with a reference resource block (e.g., a common resource block grid). The frequency domain shift in UL subband (e.g., *Frequency Domain Shift in UL subband*) may be between 0 and 268 PRBs.

A group or sequence hopping in UL subband (e.g., *Group or Sequence Hopping in UL subband*) may be associated with a frequency hopping of an SRS resource in an SBFD symbol. The group or sequence hopping in UL subband (e.g., *Group or Sequence Hopping in UL subband*) may indicate neither group or sequence hopping (e.g., *neither*), a group hopping (e.g., *Group*), or a sequence hopping (e.g., *Sequence Hopping*).

A Tx hopping configuration in UL subband (e.g., *Tx Hopping Configuration in UL subband*) may be associated with a frequency hopping of an SRS resource in an SBFD symbol. The Tx hopping configuration in UL subband (e.g., *Tx Hopping Configuration in UL subband*) may comprise an overlap value (e.g., *Overlap value*) and a number of hops (e.g., *Number of hops*). The overlap value (e.g., *Overlap value*) may be 0, 1, 2 or 4 PRBs. The number of hops (e.g., *Number of hops*) may be an integer between 0 and 6.

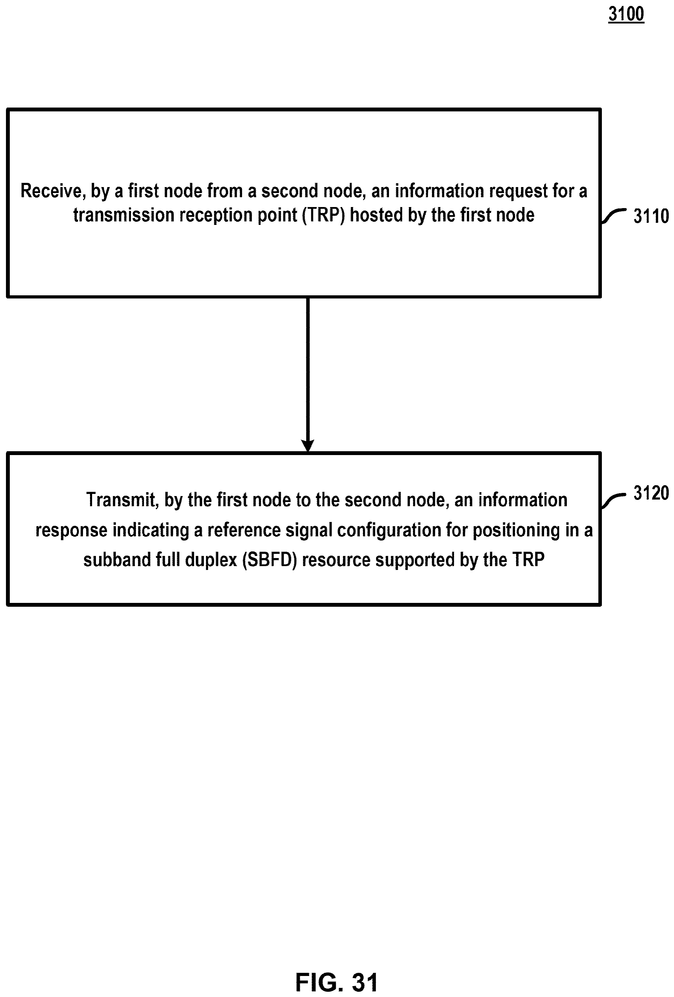

FIG. 31 illustrates an example as per an aspect of an embodiment of the present disclosure. The features illustrated in FIG. 31 may be combined with the features previously discussed with reference to FIGs. 17, 18, 19, 20, 21, 22, 23, 24, 25, 26, 27, 28, 29, and/or 30.

Referring to FIG. 31, process 3100 comprises a step 3110 of receiving, by a first node from a second node, an information request for a transmission reception point (TRP) hosted by the first node. Process 3100 further comprises a step 3120 of transmitting, by the first node to the second node, an information response indicating a reference signal configuration for positioning in a subband full duplex (SBFD) resource supported by the TRP.

Additional aspects, with examples, of step 3110, step 3120, and process 3100 are discussed below. Each of the additional aspects, and examples, below may be considered an embodiment. Each aspect of the embodiments may be combined with, or substituted for, the aspects of the embodiment of process 3100 illustrated in FIG. 31, such as step 3110 and/or step 3120. Furthermore, each of the additional aspects and examples below may be combined with each other.

In an example, the SBFD resource comprises at least one of: a SBFD symbol; an uplink subband of the SBFD symbol; or a downlink subband of the SBFD symbol.

In an example, the reference signal configuration is associated with a downlink reference signal or an uplink reference signal.

In an example, the downlink reference signal comprises a positioning reference signal (PRS) and the reference signal configuration comprises a PRS configuration.

In an example, the reference signal configuration for position in the SBFD resource comprises a reference signal resource set, wherein the reference signal resource set comprises a first value associated with a configuration parameter and a second value associated with the configuration parameter.

In the example, the first value, for the configuration parameter, is applied or used for one or more reference signal resources during one or more non-SBFD symbols.

In the example, the second value, for the configuration parameter, is applied or used for one or more reference signal resources during one or more SBFD symbols.

In an example, the reference signal resource set comprises a first list of reference signal resource and a second list of reference signal resource.

In an example, the first list of reference signal resource is associated with or comprises the first value of the configuration parameter.

In an example, the second list of reference signal resource is associated with or comprises the second value of the configuration parameter.

In an example, the configuration parameter comprises at least one of: a bandwidth; a transmit power; a comb size; a numerology; a subcarrier spacing; a time duration of cyclic prefix (CP); a type of CP, a type of frequency hopping; a configuration of frequency hopping; or a frequency domain shift.

In an example, the configuration parameter is a bandwidth, wherein the first value of the bandwidth is a first bandwidth, and the second value of the bandwidth is a second bandwidth.

In an example, the configuration parameter is a transmit power, wherein the first value of the transmit power is a first transmit power, and the second value of the transmit power is a transmit power.

In an example, the first bandwidth and/or the first transmit power are associated with a non-SBFD symbol.

In an example, second bandwidth and/or a second transmit power are associated with an SBFD symbol.

In an example, the reference signal resource set comprises a positioning reference signal (PRS) resource set, and wherein the non-SBFD symbol comprises a DL symbol and the one or more reference signal resources comprises one or more PRS resources.

In an example, the reference signal resource set comprises a sounding reference signal (SRS) resource set, and wherein the non-SBFD symbol comprises an UL symbol and the one or more reference signal resources comprises one or more SRS resources.

In an example, the PRS configuration in the SBFD resource comprises at least one of: a PRS resource including at least one SBFD symbol; a number of SBFD symbols in the PRS resource; a comb size of the PRS resource in the SBFD resource; a bandwidth of the PRS resource in the SBFD resource; a frequency location of the PRS resource in the SBFD resource; a transmit power of the PRS resource in the SBFD resource; a subcarrier spacing of the PRS resource in the SBFD resource; a cyclic prefix of the PRS resource in the SBFD resource; a list of PRS resources, wherein at least one PRS resource from among the list of the PRS resources includes at least one SBFD symbol; a PRS resource set, wherein at least one PRS resource in the PRS resource set includes at least one SBFD symbol; a periodicity of a PRS resource set, wherein at least one PRS resource in the PRS resource set is comprised in the SBFD resource; a list of PRS resource sets, wherein at least one PRS resource in at least one PRS resource set from among the list of the PRS resource sets includes at least one SBFD symbol; a number of carrier frequencies comprising PRS resources in the SBFD resource; an aggregated PRS resource set, wherein at least one PRS resource in the aggregated PRS resource set includes at least one SBFD symbol; a list of aggregated PRS resource sets, wherein at least one PRS resource in at least one aggregated PRS resource set from among the list of the aggregated PRS resource sets includes at least one SBFD symbol; a bandwidth of an aggregated PRS resource set in the SBFD resource; or a number of carrier frequencies comprising aggregated PRS resource set in the SBFD resource.

In an example, the frequency location of the PRS resource comprises a starting frequency of the PRS resource in the SBFD resource.

In an example, the starting frequency of the PRS resource comprises a frequency channel number or an offset from a reference frequency.

In an example, at least one subcarrier of the PRS resource comprises the PRS.

In an example, the uplink reference signal comprises a sounding reference signal (SRS) and the reference signal configuration comprises an SRS configuration.

In an example, the SRS configuration in the SBFD resource comprises at least one of: an SRS resource including at least one SBFD symbol; a number of SBFD symbols in the SRS resource; a comb configuration for the SRS resource in the SBFD resource; a bandwidth of the SRS resource in the SBFD resource; a frequency location of the SRS resource in the SBFD resource; a transmit power of the SRS resource in the SBFD resource; a subcarrier spacing of the SRS resource in the SBFD resource; a cyclic prefix of the SRS resource in the SBFD resource; a frequency domain shift of the SRS resource in the SBFD resource; a list of SRS resources, wherein at least one SRS resource from among the list of the SRS resources includes at least one SBFD symbol; an SRS resource set, wherein at least one SRS resource in the SRS resource set includes at least one SBFD symbol; a periodicity of an SRS resource set, wherein at least one SRS resource in the SRS resource set is comprised in the SBFD resource; a list of SRS resource sets, wherein at least one SRS resource in at least one SRS resource set from among the list of the SRS resource sets includes at least one SBFD symbol; an aggregated SRS resource set, wherein at least one SRS resource in the aggregated SRS resource set includes at least one SBFD symbol; a list of aggregated SRS resource sets, wherein at least one SRS resource in at least one aggregated SRS resource set from among the list of the aggregated SRS resource sets includes at least one SBFD symbol; a bandwidth of an aggregated SRS resource set in the SBFD resource; a number of aggregated SRS resources across carrier frequencies in the SBFD resource; a number of carrier frequencies comprising aggregated SRS resources in the SBFD resource; an indication of a frequency hopping of the SRS resource in the SBFD resource; a frequency hopping configuration of the SRS resource in the SBFD resource; or an SRS resource type in the SBFD resource.

In an example, the comb configuration comprises at least one of: a comb size of the SRS resource in the SBFD resource, wherein the comb size indicates a number of subcarriers comprising the SRS resource within a resource block; a comb offset of the SRS resource in the SBFD resource, wherein the comb offset indicates a starting subcarrier comprising the SRS resource within a resource block; or a comb cyclic shift of the SRS resource in the SBFD resource, wherein the comb cyclic shift indicates a number of consecutive SBFD symbols during which subcarriers comprising the SRS resource do not overlap with each other in frequency domain.

In an example, the indication of the frequency hopping comprises at least one of: a group hopping; a sequence hopping; neither the group hopping nor the sequence hopping; or no hopping.

In an example, the frequency hopping configuration comprises at least one of: a number of hops; a number of overlapping resource blocks across the hops; a number of resource blocks in a hop; or a starting resource block.

In an example, the SRS resource type comprises a periodic, a semi-persistent, or an aperiodic SRS resource.

In an example, the SRS resource set is an SRS resource set for positioning.

In an example, the frequency location of the SRS resource comprises a starting frequency of the SRS resource in the in the SBFD resource.

In an example, the starting frequency of the SRS resource comprises a frequency channel number or an offset from a reference frequency.

In an example, at least one subcarrier of the SRS resource comprises the SRS.

In an example, the SRS is an SRS resource for positioning and/or the SRS configuration is an SRS configuration for positioning.

In an example, the TRP operates in subband full duplex (SBFD).

In an example, the SBFD comprises an uplink subband and a downlink subband in a SBFD symbol.

In an example, the downlink subband and the uplink subband are comprised within a bandwidth of a carrier frequency of the TRP.

In an example, in the SBFD symbol, the TRP may simultaneously transmit a downlink signal in the downlink subband and receive an uplink signal in the uplink subband.

Process 3100 further comprises a step of transmitting an SBFD configuration supported by the TRP.

In an example, the SBFD configuration indicates at least one of: an SBFD symbol, an uplink subband, a downlink subband, a downlink symbol, or an uplink symbol.

In an example, the first node is a gNB-distributed unit (gNB-DU), a base station, or a gNB.

In an example, the second node is a gNB-central unit (gNB-CU), a location server, or a location management function (LMF).

In an example, the information request or the information response is transmitted via an F1 application protocol (F1AP).

In an example, the information request or the information response is transmitted via a next generation radio - positioning protocol A (NRPPa).

In an example, the information request is a TRP information request message or a positioning information request message.

In an example, the information response is a TRP information response message or a positioning information response message.

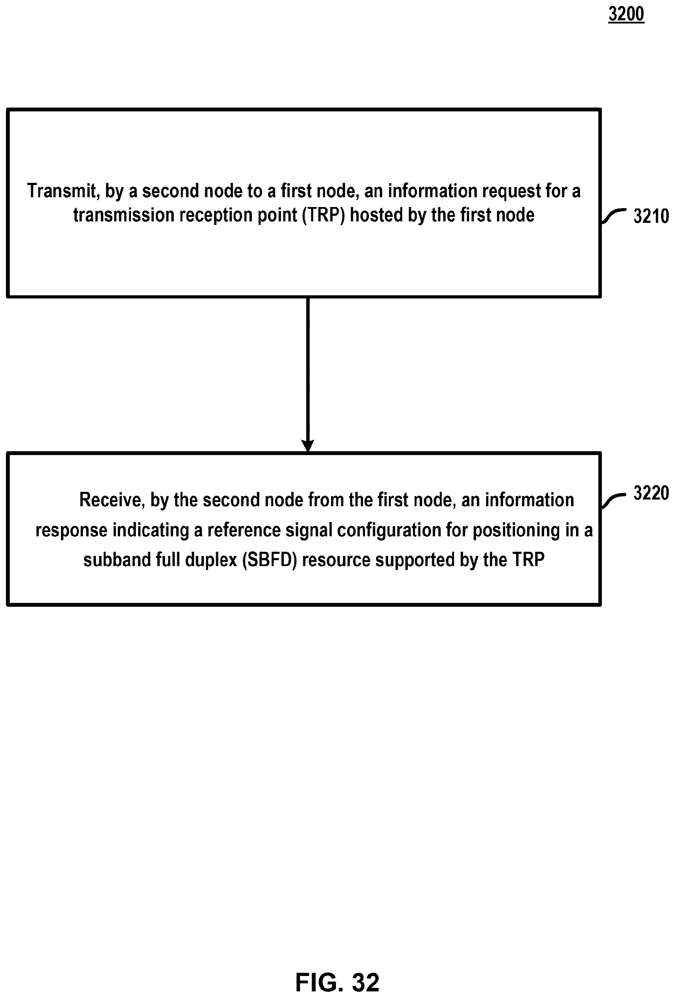

FIG. 32 illustrates an example as per an aspect of an embodiment of the present disclosure. The features illustrated in FIG. 32 may be combined with the features previously discussed with reference to FIG. 31.

Referring to FIG. 32, process 3200 comprises a step 3210 of transmitting, by a second node to a first node, an information request for a transmission reception point (TRP) hosted by the first node. Process 3200 further comprises a step 3220 of receiving, by the second node from the first node, an information response indicating a reference signal configuration for positioning in a subband full duplex (SBFD) resource supported by the TRP.

Additional aspects, with examples, of step 3210, step 3220, and process 3200 are discussed below. Each of the additional aspects, and examples, below may be considered an embodiment. Each aspect of the embodiments may be combined with, or substituted for, the aspects of the embodiment of process 3200 illustrated in FIG. 32, such as step 3210 and/or step 3220. Furthermore, each of the additional aspects and examples below may be combined with each other.

In an example, the SBFD resource comprises at least one of: a SBFD symbol; an uplink subband of the SBFD symbol; or a downlink subband of the SBFD symbol.

In an example, the reference signal configuration is associated with a downlink reference signal or an uplink reference signal.

In an example, the downlink reference signal comprises a positioning reference signal (PRS) and the reference signal configuration comprises a PRS configuration.

In an example, the reference signal configuration for position in the SBFD resource comprises a reference signal resource set, wherein the reference signal resource set comprises a first value associated with a configuration parameter and a second value associated with the configuration parameter.

In the example, the first value, for the configuration parameter, is applied or used for one or more reference signal resources during one or more non-SBFD symbols.

In the example, the second value, for the configuration parameter, is applied or used for one or more reference signal resources during one or more SBFD symbols.

In an example, the reference signal resource set comprises a first list of reference signal resource and a second list of reference signal resource.

In an example, the first list of reference signal resource is associated with or comprises the first value of the configuration parameter.

In an example, the second list of reference signal resource is associated with or comprises the second value of the configuration parameter.

In an example, the configuration parameter comprises at least one of: a bandwidth; a transmit power; a comb size; a numerology; a subcarrier spacing; a time duration of cyclic prefix (CP); a type of CP, a type of frequency hopping; a configuration of frequency hopping; or a frequency domain shift.

In an example, the configuration parameter is a bandwidth, wherein the first value of the bandwidth is a first bandwidth, and the second value of the bandwidth is a second bandwidth.

In an example, the configuration parameter is a transmit power, wherein the first value of the transmit power is a first transmit power, and the second value of the transmit power is a transmit power.

In an example, the first bandwidth and/or the first transmit power are associated with a non-SBFD symbol.

In an example, second bandwidth and/or a second transmit power are associated with an SBFD symbol.

In an example, the reference signal resource set comprises a positioning reference signal (PRS) resource set, and wherein the non-SBFD symbol comprises a DL symbol and the one or more reference signal resources comprises one or more PRS resources.

In an example, the reference signal resource set comprises a sounding reference signal (SRS) resource set, and wherein the non-SBFD symbol comprises an UL symbol and the one or more reference signal resources comprises one or more SRS resources.

In an example, the PRS configuration in the SBFD resource comprises at least one of: a PRS resource including at least one SBFD symbol; a number of SBFD symbols in the PRS resource; a comb size of the PRS resource in the SBFD resource; a bandwidth of the PRS resource in the SBFD resource; a frequency location of the PRS resource in the SBFD resource; a transmit power of the PRS resource in the SBFD resource; a subcarrier spacing of the PRS resource in the SBFD resource; a cyclic prefix of the PRS resource in the SBFD resource; a list of PRS resources, wherein at least one PRS resource from among the list of the PRS resources includes at least one SBFD symbol; a PRS resource set, wherein at least one PRS resource in the PRS resource set includes at least one SBFD symbol; a periodicity of a PRS resource set, wherein at least one PRS resource in the PRS resource set is comprised in the SBFD resource; a list of PRS resource sets, wherein at least one PRS resource in at least one PRS resource set from among the list of the PRS resource sets includes at least one SBFD symbol; a number of carrier frequencies comprising PRS resources in the SBFD resource; an aggregated PRS resource set, wherein at least one PRS resource in the aggregated PRS resource set includes at least one SBFD symbol; a list of aggregated PRS resource sets, wherein at least one PRS resource in at least one aggregated PRS resource set from among the list of the aggregated PRS resource sets includes at least one SBFD symbol; a bandwidth of an aggregated PRS resource set in the SBFD resource; or a number of carrier frequencies comprising aggregated PRS resource set in the SBFD resource.

In an example, the frequency location of the PRS resource comprises a starting frequency of the PRS resource in the SBFD resource.

In an example, the starting frequency of the PRS resource comprises a frequency channel number or an offset from a reference frequency.

In an example, at least one subcarrier of the PRS resource comprises the PRS.

In an example, the uplink reference signal comprises a sounding reference signal (SRS) and the reference signal configuration comprises an SRS configuration.

In an example, the SRS configuration in the SBFD resource comprises at least one of: an SRS resource including at least one SBFD symbol; a number of SBFD symbols in the SRS resource; a comb configuration for the SRS resource in the SBFD resource; a bandwidth of the SRS resource in the SBFD resource; a frequency location of the SRS resource in the SBFD resource; a transmit power of the SRS resource in the SBFD resource; a subcarrier spacing of the SRS resource in the SBFD resource; a cyclic prefix of the SRS resource in the SBFD resource; a frequency domain shift of the SRS resource in the SBFD resource; a list of SRS resources, wherein at least one SRS resource from among the list of the SRS resources includes at least one SBFD symbol; an SRS resource set, wherein at least one SRS resource in the SRS resource set includes at least one SBFD symbol; a periodicity of an SRS resource set, wherein at least one SRS resource in the SRS resource set is comprised in the SBFD resource; a list of SRS resource sets, wherein at least one SRS resource in at least one SRS resource set from among the list of the SRS resource sets includes at least one SBFD symbol; an aggregated SRS resource set, wherein at least one SRS resource in the aggregated SRS resource set includes at least one SBFD symbol; a list of aggregated SRS resource sets, wherein at least one SRS resource in at least one aggregated SRS resource set from among the list of the aggregated SRS resource sets includes at least one SBFD symbol; a bandwidth of an aggregated SRS resource set in the SBFD resource; a number of aggregated SRS resources across carrier frequencies in the SBFD resource; a number of carrier frequencies comprising aggregated SRS resources in the SBFD resource; an indication of a frequency hopping of the SRS resource in the SBFD resource; a frequency hopping configuration of the SRS resource in the SBFD resource; or an SRS resource type in the SBFD resource.

In an example, the comb configuration comprises at least one of: a comb size of the SRS resource in the SBFD resource, wherein the comb size indicates a number of subcarriers comprising the SRS resource within a resource block; a comb offset of the SRS resource in the SBFD resource, wherein the comb offset indicates a starting subcarrier comprising the SRS resource within a resource block; or a comb cyclic shift of the SRS resource in the SBFD resource, wherein the comb cyclic shift indicates a number of consecutive SBFD symbols during which subcarriers comprising the SRS resource do not overlap with each other in frequency domain.

In an example, the indication of the frequency hopping comprises at least one of: a group hopping; a sequence hopping; neither the group hopping nor the sequence hopping; or no hopping.

In an example, the frequency hopping configuration comprises at least one of: a number of hops; a number of overlapping resource blocks across the hops; a number of resource blocks in a hop; or a starting resource block.

In an example, the SRS resource type comprises a periodic, a semi-persistent, or an aperiodic SRS resource.

In an example, the SRS resource set is an SRS resource set for positioning.

In an example, the frequency location of the SRS resource comprises a starting frequency of the SRS resource in the in the SBFD resource.

In an example, the starting frequency of the SRS resource comprises a frequency channel number or an offset from a reference frequency.

In an example, at least one subcarrier of the SRS resource comprises the SRS.

In an example, the SRS is an SRS resource for positioning and/or the SRS configuration is an SRS configuration for positioning.

In an example, the TRP operates in subband full duplex (SBFD).

In an example, the SBFD comprises an uplink subband and a downlink subband in a SBFD symbol.

In an example, the downlink subband and the uplink subband are comprised within a bandwidth of a carrier frequency of the TRP.

In an example, in the SBFD symbol, the TRP may simultaneously transmit a downlink signal in the downlink subband and receive an uplink signal in the uplink subband.

Process 3200 further comprises a step of determining a PRS assistance data for a positioning measurement for the TRP based on the PRS configuration in the SBFD resource.

Process 3200 further comprises a step of transmitting the PRS assistance data to a wireless device.

Process 3200 further comprises a step of transmitting, to the first node, a PRS configuration request for configuring or updating one or more PRS resources in the TRP based on the PRS configuration in the SBFD resource.

Process 3200 further comprises a step of receiving, from the first node, a PRS configuration response based on the PRS configuration request.

Process 3200 further comprises a step of determining the one or more PRS resources based on the PRS configuration in the SBFD resource.

Process 3200 further comprises a step of transmitting, to the first node, an SRS configuration request for configuring or updating one or more SRS resources in the TRP based on the SRS configuration in the SBFD resource.

Process 3200 further comprises a step of receiving, from the first node, an SRS configuration response based on the SRS configuration request.

Process 3200 further comprises a step of determining the one or more SRS resources based on the SRS configuration in the SBFD resource.

Process 3200 further comprises a step of receiving an SBFD configuration supported by the TRP.

In an example, the SBFD configuration indicates at least one of: an SBFD symbol, an uplink subband, a downlink subband, a downlink symbol, or an uplink symbol.

In an example, the first node is a gNB-distributed unit (gNB-DU), a base station, or a gNB.

In an example, the second node is a gNB-central unit (gNB-CU), a location server, or a location management function (LMF).

In an example, the information request or the information response is transmitted via an F1 application protocol (F1AP).

In an example, the information request or the information response is transmitted via a next generation radio - positioning protocol A (NRPPa).

In an example, the information request is a TRP information request message or a positioning information request message.

In an example, the information response is a TRP information response message or a positioning information response message.

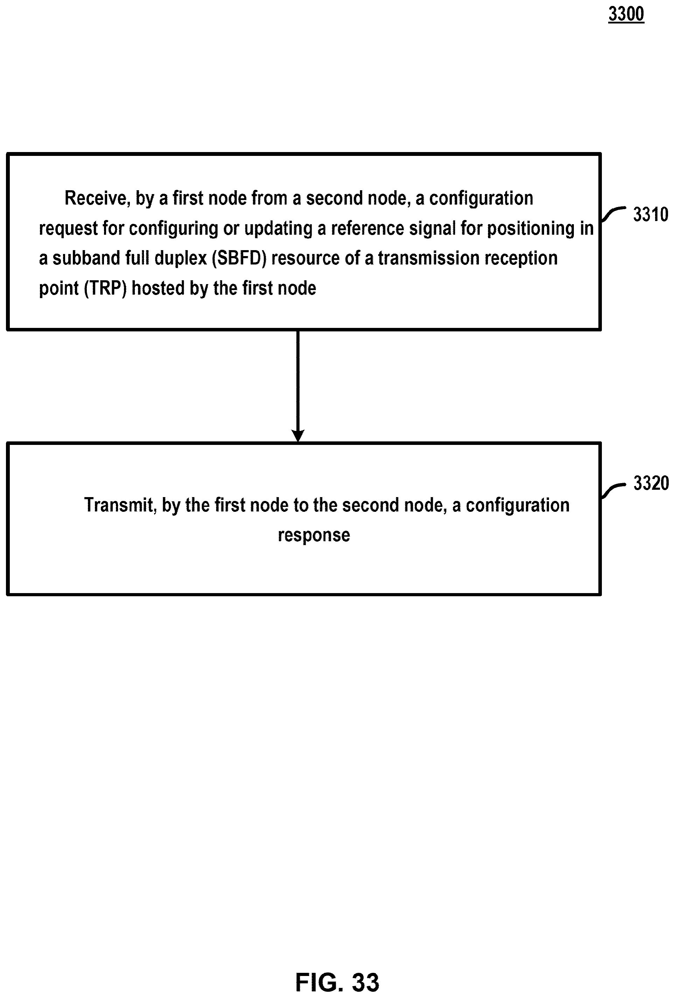

FIG. 33 illustrates an example as per an aspect of an embodiment of the present disclosure. The features illustrated in FIG. 33 may be combined with the features previously discussed with reference to FIG. 32.

Referring to FIG. 33, process 3300 comprises a step 3310 of receiving, by a first node from a second node, a configuration request for configuring or updating a reference signal for positioning in a subband full duplex (SBFD) resource of a transmission reception point (TRP) hosted by the first node. Process 3300 further comprises a step 3320 of transmitting, by the first node to the second node, a configuration response.

Additional aspects, with examples, of step 3310, step 3320, and process 3300 are discussed below. Each of the additional aspects, and examples, below may be considered an embodiment. Each aspect of the embodiments may be combined with, or substituted for, the aspects of the embodiment of process 3300 illustrated in FIG. 33, such as step 3310 and/or step 3320. Furthermore, each of the additional aspects and examples below may be combined with each other.

In an example, the SBFD resource comprises at least one of: a SBFD symbol; an uplink subband of the SBFD symbol; or a downlink subband of the SBFD symbol.

In an example, the reference signal configuration is associated with a downlink reference signal or an uplink reference signal.

In an example, the downlink reference signal comprises a positioning reference signal (PRS) and the reference signal configuration comprises a PRS configuration.

In an example, the reference signal configuration for position in the SBFD resource comprises a reference signal resource set, wherein the reference signal resource set comprises a first value associated with a configuration parameter and a second value associated with the configuration parameter.

In the example, the first value, for the configuration parameter, is applied or used for one or more reference signal resources during one or more non-SBFD symbols.

In the example, the second value, for the configuration parameter, is applied or used for one or more reference signal resources during one or more SBFD symbols.

In an example, the reference signal resource set comprises a first list of reference signal resource and a second list of reference signal resource.

In an example, the first list of reference signal resource is associated with or comprises the first value of the configuration parameter.

In an example, the second list of reference signal resource is associated with or comprises the second value of the configuration parameter.

In an example, the configuration parameter comprises at least one of: a bandwidth; a transmit power; a comb size; a numerology; a subcarrier spacing; a time duration of cyclic prefix (CP); a type of CP, a type of frequency hopping; a configuration of frequency hopping; or a frequency domain shift.

In an example, the configuration parameter is a bandwidth, wherein the first value of the bandwidth is a first bandwidth, and the second value of the bandwidth is a second bandwidth.

In an example, the configuration parameter is a transmit power, wherein the first value of the transmit power is a first transmit power, and the second value of the transmit power is a transmit power.

In an example, the first bandwidth and/or the first transmit power are associated with a non-SBFD symbol.

In an example, second bandwidth and/or a second transmit power are associated with an SBFD symbol.

In an example, the reference signal resource set comprises a positioning reference signal (PRS) resource set, and wherein the non-SBFD symbol comprises a DL symbol and the one or more reference signal resources comprises one or more PRS resources.

In an example, the reference signal resource set comprises a sounding reference signal (SRS) resource set, and wherein the non-SBFD symbol comprises an UL symbol and the one or more reference signal resources comprises one or more SRS resources.

In an example, the PRS configuration in the SBFD resource comprises at least one of: a PRS resource including at least one SBFD symbol; a number of SBFD symbols in the PRS resource; a comb size of the PRS resource in the SBFD resource; a bandwidth of the PRS resource in the SBFD resource; a frequency location of the PRS resource in the SBFD resource; a transmit power of the PRS resource in the SBFD resource; a subcarrier spacing of the PRS resource in the SBFD resource; a cyclic prefix of the PRS resource in the SBFD resource; a list of PRS resources, wherein at least one PRS resource from among the list of the PRS resources includes at least one SBFD symbol; a PRS resource set, wherein at least one PRS resource in the PRS resource set includes at least one SBFD symbol; a periodicity of a PRS resource set, wherein at least one PRS resource in the PRS resource set is comprised in the SBFD resource; a list of PRS resource sets, wherein at least one PRS resource in at least one PRS resource set from among the list of the PRS resource sets includes at least one SBFD symbol; a number of carrier frequencies comprising PRS resources in the SBFD resource; an aggregated PRS resource set, wherein at least one PRS resource in the aggregated PRS resource set includes at least one SBFD symbol; a list of aggregated PRS resource sets, wherein at least one PRS resource in at least one aggregated PRS resource set from among the list of the aggregated PRS resource sets includes at least one SBFD symbol; a bandwidth of an aggregated PRS resource set in the SBFD resource; or a number of carrier frequencies comprising aggregated PRS resource set in the SBFD resource.

In an example, the frequency location of the PRS resource comprises a starting frequency of the PRS resource in the SBFD resource.

In an example, the starting frequency of the PRS resource comprises a frequency channel number or an offset from a reference frequency.

In an example, at least one subcarrier of the PRS resource comprises the PRS.

In an example, the uplink reference signal comprises a sounding reference signal (SRS) and the reference signal configuration comprises an SRS configuration.

In an example, the SRS configuration in the SBFD resource comprises at least one of: an SRS resource including at least one SBFD symbol; a number of SBFD symbols in the SRS resource; a comb configuration for the SRS resource in the SBFD resource; a bandwidth of the SRS resource in the SBFD resource; a frequency location of the SRS resource in the SBFD resource; a transmit power of the SRS resource in the SBFD resource; a subcarrier spacing of the SRS resource in the SBFD resource; a cyclic prefix of the SRS resource in the SBFD resource; a frequency domain shift of the SRS resource in the SBFD resource; a list of SRS resources, wherein at least one SRS resource from among the list of the SRS resources includes at least one SBFD symbol; an SRS resource set, wherein at least one SRS resource in the SRS resource set includes at least one SBFD symbol; a periodicity of an SRS resource set, wherein at least one SRS resource in the SRS resource set is comprised in the SBFD resource; a list of SRS resource sets, wherein at least one SRS resource in at least one SRS resource set from among the list of the SRS resource sets includes at least one SBFD symbol; an aggregated SRS resource set, wherein at least one SRS resource in the aggregated SRS resource set includes at least one SBFD symbol; a list of aggregated SRS resource sets, wherein at least one SRS resource in at least one aggregated SRS resource set from among the list of the aggregated SRS resource sets includes at least one SBFD symbol; a bandwidth of an aggregated SRS resource set in the SBFD resource; a number of aggregated SRS resources across carrier frequencies in the SBFD resource; a number of carrier frequencies comprising aggregated SRS resources in the SBFD resource; an indication of a frequency hopping of the SRS resource in the SBFD resource; a frequency hopping configuration of the SRS resource in the SBFD resource; or an SRS resource type in the SBFD resource.

In an example, the comb configuration comprises at least one of: a comb size of the SRS resource in the SBFD resource, wherein the comb size indicates a number of subcarriers comprising the SRS resource within a resource block; a comb offset of the SRS resource in the SBFD resource, wherein the comb offset indicates a starting subcarrier comprising the SRS resource within a resource block; or a comb cyclic shift of the SRS resource in the SBFD resource, wherein the comb cyclic shift indicates a number of consecutive SBFD symbols during which subcarriers comprising the SRS resource do not overlap with each other in frequency domain.

In an example, the indication of the frequency hopping comprises at least one of: a group hopping; a sequence hopping; neither the group hopping nor the sequence hopping; or no hopping.

In an example, the frequency hopping configuration comprises at least one of: a number of hops; a number of overlapping resource blocks across the hops; a number of resource blocks in a hop; or a starting resource block.

In an example, the SRS resource type comprises a periodic, a semi-persistent, or an aperiodic SRS resource.

In an example, the SRS resource set is an SRS resource set for positioning.

In an example, the frequency location of the SRS resource comprises a starting frequency of the SRS resource in the in the SBFD resource.

In an example, the starting frequency of the SRS resource comprises a frequency channel number or an offset from a reference frequency.

In an example, at least one subcarrier of the SRS resource comprises the SRS.

In an example, the SRS is an SRS resource for positioning and/or the SRS configuration is an SRS configuration for positioning.

In an example, the TRP operates in subband full duplex (SBFD).

In an example, the SBFD comprises an uplink subband and a downlink subband in a SBFD symbol.

In an example, the downlink subband and the uplink subband are comprised within a bandwidth of a carrier frequency of the TRP.

In an example, in the SBFD symbol, the TRP may simultaneously transmit a downlink signal in the downlink subband and receive an uplink signal in the uplink subband.

In an example, the first node is a gNB-distributed unit (gNB-DU), a base station, or a gNB.

In an example, the second node is a gNB-central unit (gNB-CU), a location server, or a location management function (LMF).

In an example, the configuration request or the configuration response is transmitted via an F1 application protocol (F1AP).

In an example, the information request or the information response is transmitted via a next generation radio - positioning protocol A (NRPPa).

In an example, the configuration request is a PRS configuration request message or a positioning activation message.

In an example, the configuration response is a PRS configuration response message or a positioning activation response message.

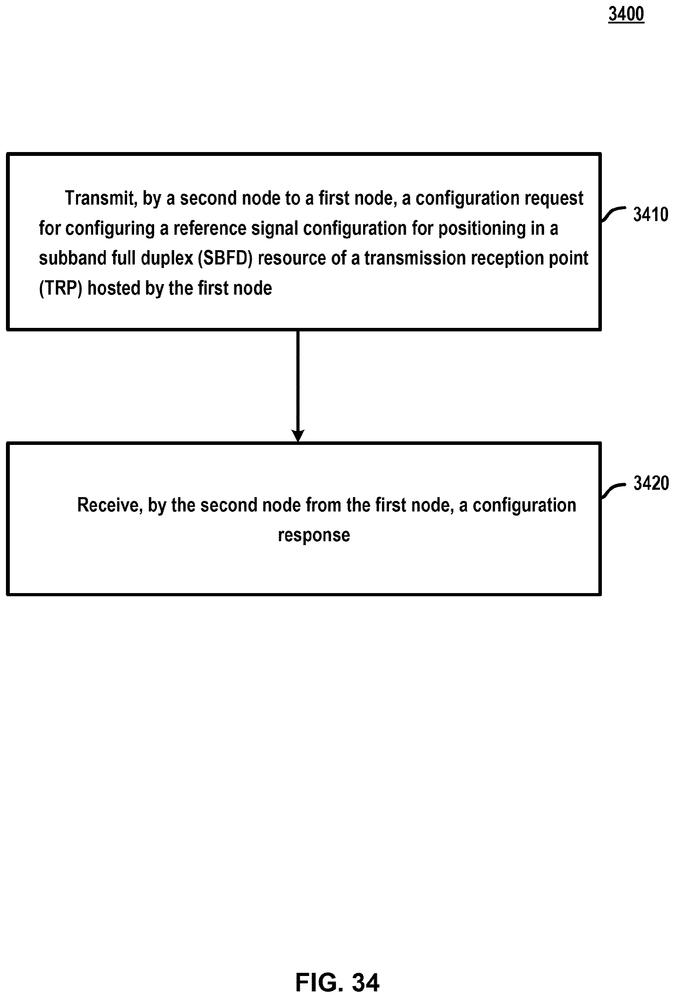

FIG. 34 illustrates an example as per an aspect of an embodiment of the present disclosure. The features illustrated in FIG. 34 may be combined with the features previously discussed with reference to FIG. 33.

Referring to FIG. 34, process 3400 comprises a step 3410 of transmitting, by a second node from a first node, a configuration request for configuring or updating a reference signal for positioning in a subband full duplex (SBFD) resource of a transmission reception point (TRP) hosted by the first node. Process 3400 further comprises a step 3420 of receiving, by the second node from the first node, a configuration response.

Additional aspects, with examples, of step 3410, step 3420, and process 3400 are discussed below. Each of the additional aspects, and examples, below may be considered an embodiment. Each aspect of the embodiments may be combined with, or substituted for, the aspects of the embodiment of process 3400 illustrated in FIG. 34, such as step 3410 and/or step 3420. Furthermore, each of the additional aspects and examples below may be combined with each other.

In an example, the SBFD resource comprises at least one of: a SBFD symbol; an uplink subband of the SBFD symbol; or a downlink subband of the SBFD symbol.

In an example, the reference signal configuration is associated with a downlink reference signal or an uplink reference signal.

In an example, the downlink reference signal comprises a positioning reference signal (PRS) and the reference signal configuration comprises a PRS configuration.

In an example, the reference signal configuration for position in the SBFD resource comprises a reference signal resource set, wherein the reference signal resource set comprises a first value associated with a configuration parameter and a second value associated with the configuration parameter.

In the example, the first value, for the configuration parameter, is applied or used for one or more reference signal resources during one or more non-SBFD symbols.

In the example, the second value, for the configuration parameter, is applied or used for one or more reference signal resources during one or more SBFD symbols.

In an example, the reference signal resource set comprises a first list of reference signal resource and a second list of reference signal resource.

In an example, the first list of reference signal resource is associated with or comprises the first value of the configuration parameter.

In an example, the second list of reference signal resource is associated with or comprises the second value of the configuration parameter.

In an example, the configuration parameter comprises at least one of: a bandwidth; a transmit power; a comb size; a numerology; a subcarrier spacing; a time duration of cyclic prefix (CP); a type of CP, a type of frequency hopping; a configuration of frequency hopping; or a frequency domain shift.

In an example, the configuration parameter is a bandwidth, wherein the first value of the bandwidth is a first bandwidth, and the second value of the bandwidth is a second bandwidth.

In an example, the configuration parameter is a transmit power, wherein the first value of the transmit power is a first transmit power, and the second value of the transmit power is a transmit power.

In an example, second bandwidth and/or a second transmit power are associated with an SBFD symbol.

In an example, the reference signal resource set comprises a positioning reference signal (PRS) resource set, and wherein the non-SBFD symbol comprises a DL symbol and the one or more reference signal resources comprises one or more PRS resources.

In an example, the reference signal resource set comprises a sounding reference signal (SRS) resource set, and wherein the non-SBFD symbol comprises an UL symbol and the one or more reference signal resources comprises one or more SRS resources.

In an example, the PRS configuration in the SBFD resource comprises at least one of: a PRS resource including at least one SBFD symbol; a number of SBFD symbols in the PRS resource; a comb size of the PRS resource in the SBFD resource; a bandwidth of the PRS resource in the SBFD resource; a frequency location of the PRS resource in the SBFD resource; a transmit power of the PRS resource in the SBFD resource; a subcarrier spacing of the PRS resource in the SBFD resource; a cyclic prefix of the PRS resource in the SBFD resource; a list of PRS resources, wherein at least one PRS resource from among the list of the PRS resources includes at least one SBFD symbol; a PRS resource set, wherein at least one PRS resource in the PRS resource set includes at least one SBFD symbol; a periodicity of a PRS resource set, wherein at least one PRS resource in the PRS resource set is comprised in the SBFD resource; a list of PRS resource sets, wherein at least one PRS resource in at least one PRS resource set from among the list of the PRS resource sets includes at least one SBFD symbol; a number of carrier frequencies comprising PRS resources in the SBFD resource; an aggregated PRS resource set, wherein at least one PRS resource in the aggregated PRS resource set includes at least one SBFD symbol; a list of aggregated PRS resource sets, wherein at least one PRS resource in at least one aggregated PRS resource set from among the list of the aggregated PRS resource sets includes at least one SBFD symbol; a bandwidth of an aggregated PRS resource set in the SBFD resource; or a number of carrier frequencies comprising aggregated PRS resource set in the SBFD resource.

In an example, the frequency location of the PRS resource comprises a starting frequency of the PRS resource in the SBFD resource.

In an example, the starting frequency of the PRS resource comprises a frequency channel number or an offset from a reference frequency.

In an example, at least one subcarrier of the PRS resource comprises the PRS.

In an example, the uplink reference signal comprises a sounding reference signal (SRS) and the reference signal configuration comprises an SRS configuration.

In an example, the SRS configuration in the SBFD resource comprises at least one of: an SRS resource including at least one SBFD symbol; a number of SBFD symbols in the SRS resource; a comb configuration for the SRS resource in the SBFD resource; a bandwidth of the SRS resource in the SBFD resource; a frequency location of the SRS resource in the SBFD resource; a transmit power of the SRS resource in the SBFD resource; a subcarrier spacing of the SRS resource in the SBFD resource; a cyclic prefix of the SRS resource in the SBFD resource; a frequency domain shift of the SRS resource in the SBFD resource; a list of SRS resources, wherein at least one SRS resource from among the list of the SRS resources includes at least one SBFD symbol; an SRS resource set, wherein at least one SRS resource in the SRS resource set includes at least one SBFD symbol; a periodicity of an SRS resource set, wherein at least one SRS resource in the SRS resource set is comprised in the SBFD resource; a list of SRS resource sets, wherein at least one SRS resource in at least one SRS resource set from among the list of the SRS resource sets includes at least one SBFD symbol; an aggregated SRS resource set, wherein at least one SRS resource in the aggregated SRS resource set includes at least one SBFD symbol; a list of aggregated SRS resource sets, wherein at least one SRS resource in at least one aggregated SRS resource set from among the list of the aggregated SRS resource sets includes at least one SBFD symbol; a bandwidth of an aggregated SRS resource set in the SBFD resource; a number of aggregated SRS resources across carrier frequencies in the SBFD resource; a number of carrier frequencies comprising aggregated SRS resources in the SBFD resource; an indication of a frequency hopping of the SRS resource in the SBFD resource; a frequency hopping configuration of the SRS resource in the SBFD resource; or an SRS resource type in the SBFD resource.

In an example, the comb configuration comprises at least one of: a comb size of the SRS resource in the SBFD resource, wherein the comb size indicates a number of subcarriers comprising the SRS resource within a resource block; a comb offset of the SRS resource in the SBFD resource, wherein the comb offset indicates a starting subcarrier comprising the SRS resource within a resource block; or a comb cyclic shift of the SRS resource in the SBFD resource, wherein the comb cyclic shift indicates a number of consecutive SBFD symbols during which subcarriers comprising the SRS resource do not overlap with each other in frequency domain.

In an example, the indication of the frequency hopping comprises at least one of: a group hopping; a sequence hopping; neither the group hopping nor the sequence hopping; or no hopping.

In an example, the frequency hopping configuration comprises at least one of: a number of hops; a number of overlapping resource blocks across the hops; a number of resource blocks in a hop; or a starting resource block.

In an example, the SRS resource type comprises a periodic, a semi-persistent, or an aperiodic SRS resource.

In an example, the SRS resource set is an SRS resource set for positioning.

In an example, the frequency location of the SRS resource comprises a starting frequency of the SRS resource in the in the SBFD resource.

In an example, the starting frequency of the SRS resource comprises a frequency channel number or an offset from a reference frequency.

In an example, at least one subcarrier of the SRS resource comprises the SRS.

In an example, the SRS is an SRS resource for positioning and/or the SRS configuration is an SRS configuration for positioning.

In an example, the TRP operates in subband full duplex (SBFD).

In an example, the SBFD comprises an uplink subband and a downlink subband in a SBFD symbol.

In an example, the downlink subband and the uplink subband are comprised within a bandwidth of a carrier frequency of the TRP.

In an example, in the SBFD symbol, the TRP may simultaneously transmit a downlink signal in the downlink subband and receive an uplink signal in the uplink subband.

Process 3400 further comprises a step of configuring or updating one or more PRS resources in one or more SBFD resources supported by the TRP

In an example, the configuration response indicates the one or more PRS resources configured or updated in the one or more SBFD resources supported by the TRP.

Process 3400 further comprises a step of determining a PRS assistance data for a positioning measurement for the TRP based on the configuration response.

Process 3400 further comprises a step of transmitting the PRS assistance data to a wireless device.

In an example, the configuration response indicates one or more SRS resources configured, updated, or activated in one or more SBFD resources supported by the TRP.

In an example, the first node is a gNB-distributed unit (gNB-DU), a base station, or a gNB.

In an example, the second node is a gNB-central unit (gNB-CU), a location server, or a location management function (LMF).

In an example, the configuration request or the configuration response is transmitted via an F1 application protocol (F1AP).

In an example, the information request or the information response is transmitted via a next generation radio - positioning protocol A (NRPPa).

In an example, the configuration request is a PRS configuration request message or a positioning activation message.

In an example, the configuration response is a PRS configuration response message or a positioning activation response message.

## Claims

1. A method comprising:
receiving, by a first node from a second node, an information request for a transmission reception point (TRP) hosted by the first node; and
transmitting, by the first node to the second node, an information response indicating a configuration of a reference signal for positioning, wherein:
the reference signal is in a subband full duplex (SBFD) resource supported by the TRP;
the SBFD resource comprises at least one of:
an SBFD symbol;
an uplink subband of the SBFD symbol; or
a downlink subband of the SBFD symbol; and
the reference signal configuration is associated with a downlink reference signal or an uplink reference signal.

2. The method of claim 1, wherein:
the downlink reference signal comprises a positioning reference signal (PRS); and
the reference signal configuration comprises a PRS configuration.

3. The method of claim 2, wherein the PRS configuration comprises at least one of:
a PRS resource including at least one SBFD symbol;
a number of SBFD symbols in the PRS resource;
a comb size of the PRS resource in the SBFD resource;
a bandwidth of the PRS resource in the SBFD resource;
a frequency location of the PRS resource in the SBFD resource;
a transmit power of the PRS resource in the SBFD resource;
a subcarrier spacing of the PRS resource in the SBFD resource;
a cyclic prefix of the PRS resource in the SBFD resource;
a list of PRS resources, wherein at least one PRS resource in the list of the PRS resources includes at least one SBFD symbol;
a PRS resource set, wherein at least one PRS resource in the PRS resource set includes at least one SBFD symbol;
a periodicity of a PRS resource set, wherein at least one PRS resource in the PRS resource set is comprised in the SBFD resource;
a list of PRS resource sets, wherein at least one PRS resource in at least one PRS resource set in the list of the PRS resource sets includes at least one SBFD symbol;
a number of carrier frequencies comprising PRS resources in the SBFD resource;
an aggregated PRS resource set, wherein at least one PRS resource in the aggregated PRS resource set includes at least one SBFD symbol;
a list of aggregated PRS resource sets, wherein at least one PRS resource in at least one aggregated PRS resource set in the list of the aggregated PRS resource sets includes at least one SBFD symbol;
a bandwidth of an aggregated PRS resource set in the SBFD resource; or
a number of carrier frequencies comprising an aggregated PRS resource set in the SBFD resource.

4. The method of claim 1, wherein:
the uplink reference signal comprises a sounding reference signal (SRS); and
the reference signal configuration comprises an SRS configuration.

5. The method of claim 4, wherein the SRS configuration comprises at least one of:
an SRS resource including at least one SBFD symbol;
a number of SBFD symbols in the SRS resource;
a comb configuration for the SRS resource in the SBFD resource;
a bandwidth of the SRS resource in the SBFD resource;
a frequency location of the SRS resource in the SBFD resource;
a transmit power of the SRS resource in the SBFD resource;
a subcarrier spacing of the SRS resource in the SBFD resource;
a cyclic prefix of the SRS resource in the SBFD resource;
a frequency domain shift of the SRS resource in the SBFD resource;
a list of SRS resources, wherein at least one SRS resource in the list of the SRS resources includes at least one SBFD symbol;
an SRS resource set, wherein at least one SRS resource in the SRS resource set includes at least one SBFD symbol;
a periodicity of an SRS resource set, wherein at least one SRS resource in the SRS resource set is comprised in the SBFD resource;
a list of SRS resource sets, wherein at least one SRS resource in at least one SRS resource set in the list of the SRS resource sets includes at least one SBFD symbol;
an aggregated SRS resource set, wherein at least one SRS resource in the aggregated SRS resource set includes at least one SBFD symbol;
a list of aggregated SRS resource sets, wherein at least one SRS resource in at least one aggregated SRS resource set in the list of the aggregated SRS resource sets includes at least one SBFD symbol;
a bandwidth of an aggregated SRS resource set in the SBFD resource;
a number of aggregated SRS resources across carrier frequencies in the SBFD resource;
a number of carrier frequencies comprising aggregated SRS resources in the SBFD resource;
an indication of a frequency hopping of the SRS resource;
a frequency hopping configuration of the SRS resource; or
an SRS resource type of the SBFD resource.

6. The method of claim 5, wherein the comb configuration comprises at least one of:
a comb size of the SRS resource in the SBFD resource, wherein the comb size indicates a number of subcarriers comprising the SRS resource within a resource block;
a comb offset of the SRS resource in the SBFD resource, wherein the comb offset indicates a starting subcarrier comprising the SRS resource within a resource block; or
a comb cyclic shift of the SRS resource in the SBFD resource, wherein the comb cyclic shift indicates a number of consecutive SBFD symbols during which subcarriers comprising the SRS resource do not overlap with each other in a frequency domain.

7. The method of claim 4 or 5, wherein the indication of the frequency hopping comprises at least one of:
a group hopping;
a sequence hopping;
neither the group hopping nor the sequence hopping; or
no hopping.

8. The method of any one of claims 4-6, wherein the frequency hopping configuration comprises at least one of:
a number of hops;
a number of overlapping resource blocks across the hops;
a number of resource blocks in a hop; or
a starting resource block.

9. The method of any one of claims 1-8, wherein, in the SBFD symbol, the TRP is configured to simultaneously transmit a downlink signal in the downlink subband and receive an uplink signal in the uplink subband.

10. The method of any of claims 1-9, wherein:
the first node is a gNB-distributed unit (gNB-DU), a base station, or a gNB; and
the second node is a gNB-central unit (gNB-CU), a location server, or a location management function (LMF).

11. The method of any of claims 1-10, wherein:
the information request or the information response is transmitted via an F1 application protocol (F1AP); and/or
the information request is a TRP information request message or a positioning information request message.

12. The method of any of claims 1-11, wherein:
the information request or the information response is transmitted via a next generation radio - positioning protocol A (NRPPa); and/or
the information response is a TRP information response message or a positioning information response message.

13. The method of any one of claims 1-12, comprising:
receiving, by the first node from the second node, a configuration request for configuring or updating the reference signal; and
transmitting, by the first node to the second node, a configuration response indicating a receipt of the configuration request.

14. An apparatus comprising:
one or more processors; and
memory storing instructions that, when executed by the one or more processors, cause the apparatus to perform the method of any one of claims 1-13.

15. A non-transitory computer-readable medium comprising instructions that, when executed by one or more processors of an apparatus, cause the apparatus to perform the method of any one of claims 1-13.
